(19)

Europäisches
Patentamt
European
Patent Office
Office européen
des brevets

(11)  **EP 3 940 036 B1**

(12)  **EUROPEAN PATENT SPECIFICATION**

(45) Date of publication and mention
of the grant of the patent:
**24.06.2026 Bulletin 2026/26**

(21) Application number: **21184411.3**

(22) Date of filing: **08.07.2021**

(51) International Patent Classification (IPC):
***C09J 11/08*** (2006.01)      ***C09J 7/38*** (2018.01)
***C08F 8/04*** (2006.01)        ***C08F 297/02*** (2006.01)
***C08F 297/04*** (2006.01)

(52) Cooperative Patent Classification (CPC):
(C-Sets available)
**C09J 11/08; C08F 8/04; C08F 297/023;**
**C08F 297/044; C09J 7/387; C09J 153/025;**
C09J 2301/312                              (Cont.)

(54) **MATERIAL FOR PRESSURE-SENSITIVE ADHESIVE,  PRESSURE-SENSITIVE ADHESIVE, MULTILAYER FILM, AND PACKAGE**

MATERIAL FÜR EINEN DRUCKEMPFINDLICHEN KLEBSTOFF, DRUCKEMPFINDLICHER KLEBSTOFF, MEHRSCHICHTIGER FILM UND VERPACKUNG

MATÉRIAU POUR ADHÉSIF SENSIBLE À LA PRESSION, ADHÉSIF SENSIBLE À LA PRESSION, FILM MULTICOUCHE, ET EMBALLAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **13.07.2020 JP 2020119841**
**05.08.2020 JP 2020132968**
**18.06.2021 JP 2021101826**

(43) Date of publication of application:
**19.01.2022 Bulletin 2022/03**

(60) Divisional application:
**23215376.7 / 4 332 189**

(73) Proprietor: **Asahi Kasei Kabushiki Kaisha**
**Tokyo 1000006 (JP)**

(72) Inventors:
• **TANIGUCHI, Naoki**
**Tokyo, 1000006 (JP)**

• **TSUJI, Mikako**
**Tokyo, 1000006 (JP)**

(74) Representative: **Strehl & Partner mbB**
**Maximilianstrasse 54**
**80538 München (DE)**

(56) References cited:
**EP-A1- 3 666 841     JP-A- 2007 284 464**
**JP-A- H0 711 219**

• **ANONYMUS: "KRATON D1161 P Polymer", 10 June 2023 (2023-06-10), pages 1 - 3, XP093227633, Retrieved from the Internet <URL:chrome-extension:// efaidnbmnnnibpcajpcglclefindmkaj/https:// kraton.com/wp-content/uploads/2024/06/ KratonD1161P.pdf>**

(52) Cooperative Patent Classification (CPC): (Cont.)

C-Sets
**C08F 8/04, C08F 297/044**

## Description

Technical Field

The present invention relates to a material for a pressure-sensitive adhesive, a pressure-sensitive adhesive, a multilayered film, and a package.

Description of the Related Art

Background Art

In recent years, packaging materials allowed to exhibit a resealing function by using a multilayered film including a pressure-sensitive adhesive layer have been proposed. There has thereby been a growing demand for extrusion moldable pressure-sensitive adhesives.

In general, a method using a hot melt for a pressure-sensitive adhesive is known as a method for forming a pressure-sensitive adhesive layer (see e.g., Patent Document 1). However, the pressure-sensitive adhesive layer disclosed in Patent Document 1 is susceptible to improvement from the viewpoint of handleability or adhesive strength.

Also disclosed are a composition for a pressure-sensitive adhesive being difficult to block, easy to handle, and capable of exhibiting high adhesive strength, a material for a pressure-sensitive adhesive, a method for forming a pressure-sensitive adhesive, a pressure-sensitive adhesive, a multilayered film and a package (see e.g., Patent Document 2).

Citation List

Patent Document

Patent Document 1: National Publication of International Patent Application No. 2015-529715

Patent Document 2: International Publication No. WO 2019/031354

JP H07-11219 A discloses a pressure-sensitive adhesive, the material comprising pellets made from a styrene-diene based block copolymer and comprising a tackifying resin.

JP 2007-284464 A discloses a self-adhesive material comprising particles comprising a block copolymer of styrene blocks and diene blocks and a tackifier resin, and particles comprising a block copolymer of styrene blocks and diene blocks and a plastocizer.

Summary of Invention

Technical Problem

Patent Document 2 discloses a method for forming a pressure-sensitive layer having relatively large adhesive strength by together extruding two types of particulate compositions having relatively small adhesive strength by using an extruder.

However, problems of the method described in Patent Document 2 are that sufficient adhesive strength is not exhibited depending on extrusion conditions for two types of particulate compositions, because two types of particles are not well mixed; and unmelted products of particles remain in a pressure-sensitive layer and deteriorates the appearance of a film including the pressure-sensitive layer.

Accordingly, an object of the present invention is to provide a material for a pressure-sensitive adhesive which can exert sufficient adhesive strength under wide extrusion conditions and is capable of forming a pressure-sensitive adhesive layer with favorable film appearance, a pressure-sensitive adhesive, a multilayered film, and a package.

Solution to Problem

The present inventors diligently studied to solve the above problems, and have found that the problems of the conventional techniques can be solved by a material for a pressure-sensitive adhesive as defined in claim 1.

Specifically, the present invention is set out in the appended claims.

Advantageous Effects of Invention

The present invention can provide a material for a pressure-sensitive adhesive which can exert sufficient adhesive strength under wide extrusion conditions and is capable of forming a pressure-sensitive adhesive layer with favorable film appearance.

Description of Embodiments

Hereinafter, embodiments of the present invention (hereinafter, referred to as "the present embodiments") will be described in detail.

It is to be noted that the following present embodiments are given for illustrating the present invention and never limit the present invention to the following contents and the present invention can be implemented with various modifications within the scope of the claims.

A material for a pressure-sensitive adhesive according to the present invention includes materials for a pressure-sensitive adhesive as follows.

The material for a pressure-sensitive adhesive according to the present invention is a material for a pressure-sensitive adhesive, the material being to be used in a pressure-sensitive adhesive included in a multilayered film for resealing packaging, and containing

composition C in a particulate form including at least one type of thermoplastic elastomer A, wherein the thermoplastic elastomer A is a block copolymer comprising a polymer block (A) primarily comprising a vinyl aromatic monomer unit which is at least one selected from the group consisting of styrene, $\alpha$-methylstyrene, p-methylstyrene, p-tert-butyl-styrene, p-methoxystyrene and vinylnaphthalene, and a polymer block (B) primarily comprising a conjugated diene monomer unit which is at least one selected from the group consisting of 1,3-butadiene, 2-methyl-1,3-butadiene, 2,3-dimethyl-1,3-butadiene, 1,3-pentadiene and 1,3-hexadiene, and

composition F in a particulate form including at least one type of thermoplastic elastomer D and at least one type of tackifier E which are integrated, wherein the thermoplastic elastomer D is a block copolymer comprising a polymer block (A) primarily comprising a vinyl aromatic monomer unit which is at least one selected from the group consisting of styrene, $\alpha$-methylstyrene, p-methylstyrene, p-tert-butyl-styrene, p-methoxystyrene and vinylnaphthalene, and a polymer block (B) primarily comprising a conjugated diene monomer unit which is at least one selected from the group consisting of 1,3-butadiene, 2-methyl-1,3-butadiene, 2,3-dimethyl-1,3-butadiene, 1,3-pentadiene and 1,3-hexadiene,, wherein

the composition F satisfies the following condition (2),

an adhesive strength of the material for a pressure-sensitive adhesive having ratio x is

larger than that of the composition C having ratio $\alpha$ and

larger than that of the composition F having ratio $\beta$, wherein

x represents a mass ratio of the total amount of the thermoplastic elastomer(s) to the total amount of the thermoplastic elastomer(s) and the tackifier(s) (thermoplastic elastomer(s) / thermoplastic elastomer(s) + tackifier(s)) in the material for a pressure-sensitive adhesive;

$\alpha$ represents a mass ratio of the total amount of the thermoplastic elastomer(s) to the total amount of the thermoplastic elastomer(s) and the tackifier(s) (thermoplastic elastomer(s) / thermoplastic elastomer(s) + tackifier(s)) in the composition C; and

$\beta$ represents a mass ratio of the total amount of the thermoplastic elastomer(s) to the total amount of the thermoplastic elastomer(s) and the tackifier(s) (thermoplastic elastomer(s) / thermoplastic elastomer(s) + tackifier(s)) in the composition F, and

the material for a pressure-sensitive adhesive satisfies the following expression (1) and condition (13):

$$\beta < x < \alpha \quad (1)$$

<condition (2)>
a ratio of the total mass of the tackifier(s) to the total mass of the thermoplastic elastomer(s) in the composition F is more than 1.5 and 3.0 or less <condition (13)>
a ratio of the MFR value of the composition F to the MFR value of the composition C is 10 or more and 100 or less, wherein the composition C further comprises a tackifier B, and
wherein the composition C satisfies the following condition (1):
<condition (1)>
a ratio of the total mass of the thermoplastic elastomer(s) to the total mass of the tackifier(s) in the composition C is more than 1.5 and 3.0 or less,
wherein the tackifier B is a hydrogenation product of an aromatic petroleum hydrocarbon resin and/or a derivative thereof.

The composition C contains a tackifier B.

The composition C containing tackifier B satisfies the following condition (1):

<condition (1)>

a ratio of the total mass of the thermoplastic elastomer(s) to the total mass of the tackifier(s) in the composition C is more than 1.5 and 3.0 or less.

The material for a pressure-sensitive adhesive according to the present invention configured such that the composition F satisfies <condition (2)> and the composition C satisfies <condition (1)> can be difficult to block and easy to handle because of a weakened adhesive strength.

By using the composition C and the composition F in combination, a mixture can have moderate compositional ratios of thermoplastic elastomer(s) and tackifier(s) as a viscous adhesive, and can exert excellent viscous adhesion strength, and both the compositions can be melt-mixed under a wide range of extruder operation conditions.

Specifically, the material for a pressure-sensitive adhesive according to the present invention can form a relatively homogeneous pressure-sensitive adhesive layer capable of exerting intended adhesive strength, without strictly controlling extrusion conditions of an extruder, because the composition C and the composition F differing in the ratios of tackifier(s) and thermoplastic elastomer(s), when used in combination, can be melt-mixed even under conditions unsuitable for preparing a homogeneous molded body having a distinctive makeup, such as low temperature or short time.

In the present specification, the "integrated form" refers to a form of one solid as a whole.

A form of a homogeneous molded body (pellets, beads, etc.) obtained by melt-kneading a composition containing at least a thermoplastic elastomer and a tackifier is one of the preferred integrated forms, though the homogeneous state in the molded body is not essential and these components in a state fused with each other as single substances are also possible.

In <condition (2)> according to the present invention, the ratio of the total mass of the tackifier(s) to the total mass of the thermoplastic elastomer(s) in the composition F is more than 1.5 and 3.0 or less.

The lower limit value of (the total mass of the tackifier(s) / the total mass of the thermoplastic elastomer(s)) in the composition F is preferably larger than 1.6, more preferably larger than 1.7, and further preferably larger than 1.9.

The lower limit of the ratio of the total mass of the tackifier(s) to the total mass of the thermoplastic elastomer(s) in the range tends to weaken the adhesive strength of the composition F and renders the composition difficult to block and easy to handle.

The upper limit of the ratio of the total mass of the tackifier(s) to the total mass of the thermoplastic elastomer(s) (the total mass of the tackifier(s) / the total mass of the thermoplastic elastomer(s)) in the composition F is preferably 2.9 or less, more preferably 2.8 or less, and further preferably 2.7 or less.

The upper limit of the ratio of the total mass of the tackifier(s) to the total mass of the thermoplastic elastomer(s) in the range elevates the flowability of the particulate composition which in turn becomes close to the flowability of the composition C. Therefore, these two types of particulate compositions, when together extruded by using an extruder, are easily given force evenly. As a result, the composition F and the composition C tend to be uniformly mixed. This tends to improve the adhesive strength of a pressure-sensitive adhesive to be formed upon extrusion, tends to improve the in-plane uniformity of the adhesive strength, and tends to improve the appearance of a film by decreasing the amount of unmelted products.

In <condition (1)> for the material for a pressure-sensitive adhesive according to the present invention, the ratio of the total mass of the thermoplastic elastomer(s) to the total mass of the tackifier(s) (the total mass of the thermoplastic elastomer(s) / the total mass of the tackifier(s)) in the composition C is more than 1.5 and 3.0 or less.

The lower limit value of (the total mass of the thermoplastic elastomer(s) / the total mass of the tackifier(s)) is preferably larger than 1.8, more preferably larger than 2.0, and further preferably larger than 2.2.

The lower limit of the ratio of the total mass of the thermoplastic elastomer(s) to the total mass of the tackifier(s) in the range tends to weaken the adhesive strength of the composition C and renders the composition difficult to block and easy to handle.

The upper limit of the ratio of the total mass of the thermoplastic elastomer(s) to the total mass of the tackifier(s) (the total mass of the thermoplastic elastomer(s) / the total mass of the tackifier(s)) in the composition C is preferably 2.8 or less, more preferably 2.6 or less, and further preferably 2.4 or less.

The upper limit of the ratio of the total mass of the thermoplastic elastomer(s) to the total mass of the tackifier (s in the range elevates the flowability of the particulate composition C which in turn becomes close to the flowability of the composition F. Therefore, these two types of particulate compositions, when together extruded by using an extruder, are easily given force evenly. As a result, the composition C and the composition F tend to be uniformly mixed. This tends to improve the adhesive strength of a pressure-sensitive adhesive to be formed upon extrusion, tends to improve the in-plane uniformity of the adhesive strength, and tends to improve the appearance of a film by decreasing the amount of unmelted products.

In the material for a pressure-sensitive adhesive according to the present invention, the ratio of the MFR value of the composition F to the MFR value of the composition C in <condition (13)> for the composition F is 10 or more and 80 or less.

The composition for a pressure-sensitive adhesive according to the present invention containing the composition F that satisfies <condition (13)> tends to facilitate more uniformly mixing the composition C and the composition F while insuring handleability.

The lower limit of the ratio of the MFR value of the composition F to the MFR value of the composition C is 10 or more, preferably 15 or more, more preferably 20 or more, and further preferably 30 or more.

The lower limit value of the ratio of the MFR value of the composition F to the MFR value of the composition C in the range tends to improve the adhesive strength of a pressure-sensitive adhesive to be formed upon extrusion.

The upper limit of the ratio of the MFR value of the composition F to the MFR value of the composition C is 80 or less, more preferably 70 or less, further preferably 65 or less, and furthermore preferably 60 or less.

The upper limit value of the ratio of the MFR value of the composition F to the MFR value of the composition C in the range can render the flowability of the compositions C and F close to each other, and tends to facilitate more uniformly mixing the compositions because of their closer times to be melted in an extruder or viscosity during melting. As a result, the appropriate ratio is easier to attain and tends to improve adhesive strength. This also tends to improve the appearance of a film because unmelted products are more unlikely to remain.

Examples of the method for achieving <condition (13)> described above include the following methods. Any one of these methods may be selected, or two or more thereof may be combined.

(1) Adjusting the ratios between the thermoplastic elastomers and the tackifiers in the composition F and the composition C.
(2) Designing the respective structures of the thermoplastic elastomers in the composition F and the composition C.
(3) Adjusting the respective molecular weights of the thermoplastic elastomers in the composition F and the composition C.
(4) Selecting the respective tackifiers of the composition F and the composition C.

In the method (1), when the composition F and the composition C contain the same thermoplastic elastomers, the containment of a tackifier only in the composition F tends to facilitate the composition C and composition F differing largely in the MFR value.

The composition C can be controlled to contain a tackifier in a range that satisfies the relationship of $\beta < x < \alpha$ expression (1) so as to satisfy <condition (13)>.

In the method (1), the MFR values may be adjusted by the composition F and the composition C containing different thermoplastic elastomers.

In a possible aspect in which the composition F and the composition C contain different thermoplastic elastomers, the MFR values of their respective thermoplastic elastomers can be adjusted by the different structures of the thermoplastic elastomers, as in the method (2), or the thermoplastic elastomers can be set to have different molecular weights while having common structures, as in the method (3).

When the thermoplastic elastomers of the composition C and the composition F have equivalent molecular weights, a thermoplastic elastomer having a smaller content of a vinyl aromatic monomer unit, having a larger content of a vinyl structure monomer unit in a conjugated diene monomer, having a smaller number of branched structures, or having a lower percentage of hydrogenation based on the total amount of the unsaturated double bonds derived from the conjugated diene compound tends to have a larger MFR value.

When the composition F and the composition C contain thermoplastic elastomers having equivalent molecular weights and different structures, the composition C containing a thermoplastic elastomer structurally having a smaller content of a vinyl aromatic monomer unit, having a larger content of a vinyl structure monomer unit in a conjugated diene monomer, having a smaller number of branched structures, or having a lower percentage of hydrogenation based on the total amount of the unsaturated double bonds derived from the conjugated diene compound than that in the composition F tends to more easily achieve <condition (13)> described above.

The structures of the thermoplastic elastomers contained in the composition C and the composition F can be set such that the ratio between their MFR values satisfies <condition (13)> described above, in light of the requirements mentioned above. However, since <condition (13)> defines not the MFR values of the thermoplastic elastomers but the MFR values of the composition C and the composition F which contain tackifiers, etc., it is necessary to pay attention to the adjustment of the MFR values of the composition C and the composition F, not the MFR value of the thermoplastic elastomer itself.

For example, in the case of the composition F containing a tackifier having high flowability and the composition C supplemented with no tackifier, it is preferred to adopt a thermoplastic elastomer having a higher MFR value for the composition C.

When the thermoplastic elastomers contained in the composition C and the composition F have equivalent molecular structures, a thermoplastic elastomer having a lower molecular weight tends to have a larger MFR value.

When the composition F and the composition C contain thermoplastic elastomers having equivalent structures and different molecular weights, the composition C containing a thermoplastic elastomer having a lower molecular weight than that in the composition F tends to more easily achieve <condition (13)> described above.

As mentioned above, the flowability (MFR values) of the composition C and the composition F may be controlled by adjusting the structures of the thermoplastic elastomers contained in the compositions C and F. From the viewpoint of improving miscibility in together extruding two types of particulate compositions (compositions C and F) by using an extruder, and improving the adhesive strength of a pressure-sensitive adhesive to be formed upon extrusion, each of the composition C and the composition F contains at least one type of thermoplastic elastomer and at least one type of tackifier.

The ratio between the MFR values of the composition C and the composition F may be controlled by appropriately selecting the tackifiers contained in the composition C and the composition F.

In general, tackifiers have much higher flowability than that of thermoplastic elastomers.

Use of tackifiers having a lower softening point tends to increase the MFR values of the composition C and the composition F in combination with thermoplastic elastomers.

Since most of tackifiers, such as natural ones, are not structurally identified or vary structurally, the softening points of tackifiers are presumably influenced, albeit not always, by their molecular weights. When tackifiers having the same structures are compared, use of a tackifier having a lower molecular weight and a lower softening point tends to increase the MFR value. Thus, the flowability of the composition C or F can be predicted from the molecular weight and the softening point.

However, not only the molecular weight and softening point of a tackifier but the structure of the tackifier changes its compatibility with a thermoplastic elastomer to be combined therewith. Such compatibility of the tackifier with a thermoplastic elastomer presumably influences the flowability of the composition C or F. Hence, it may be difficult to generalize flowability only by the molecular weight and softening point of a tackifier. Accordingly, the selection of a tackifier tends to facilitate achieving <condition (13)> described above by taking into consideration the molecular weight and softening point of the tackifier as well as the compatibility of the tackifier with a thermoplastic elastomer.

The flowability (MFR values) may be controlled by the structures of the tackifiers contained in the compositions. From the viewpoint of improving miscibility in together extruding two types of particulate compositions (compositions C and F) by using an extruder, and improving the adhesive strength of a pressure-sensitive adhesive to be formed upon extrusion, and from the viewpoint of improving appearance or odor characteristics, each of the composition C and composition F contains at least one type of thermoplastic elastomer and at least one type of tackifier.

From similar viewpoints, each of the tackifier B contained in the composition C and the tackifier E contained in the composition F is preferably a hydrogenation product of a hydrocarbon resin having a softening point of 130°C or lower, and/or a derivative thereof.

The adjustment of the flowability (MFR value) of the composition C and/or the composition F is effective for satisfying <condition (13)> described above.

Specifically, the MFR value of the composition C measured according to a method for measuring a melt flow rate (MFR) mentioned later is preferably 0.6 g/min or more, more preferably 1.2 g/min or more, further preferably 1.8 g/min or more, furthermore preferably 2.4 g/min or more, and further preferably 3.0 g/min or more.

The MFR value of the composition C in the range renders its flowability close to the flowability of the composition F. Therefore, these two types of particulate compositions (compositions C and F), when together extruded by using an extruder, are easily given force evenly so that the composition C and the composition F tend to be uniformly mixed. This tends to improve the adhesive strength of a pressure-sensitive adhesive to be formed upon extrusion, tends to improve the in-plane uniformity of the adhesive strength, and tends to improve the appearance of a film by decreasing the amount of unmelted products.

The MFR value of the composition F measured according to a method for measuring a melt flow rate (MFR) mentioned later is preferably 400 g/min or less, more preferably 390 g/min or less, further preferably 380 g/min or less, furthermore preferably 370 g/min or less, further preferably 350 g/min or less.

The MFR value of the composition F in the range renders its flowability close to the flowability of the composition C. Therefore, these two types of particulate compositions (compositions C and F), when together extruded by using an extruder, are easily given force evenly. As a result, the composition C and the composition F tend to be uniformly mixed. This tends to improve the adhesive strength of a pressure-sensitive adhesive to be formed upon extrusion, tends to improve the in-plane uniformity of the adhesive strength, and tends to improve the appearance of a film by decreasing the amount of unmelted products.

The composition C contained in the material for a pressure-sensitive adhesive according to the present invention includes at least one type of thermoplastic elastomer A and a tackifier B, and has a particulate form.

The composition F contained in the material for a pressure-sensitive adhesive according to the present invention includes at least one type of thermoplastic elastomer D and at least one type of tackifier E which are integrated, and has a particulate form.

One of the thermoplastic elastomers may be used singly, or two or more thereof may be used in combination.

One of the tackifiers may be used singly, or two or more thereof may be used in combination.

Specifically, each of the composition C and the composition F may include two or more thermoplastic elastomers and/or two or more tackifiers, and is not limited by a form including only particular thermoplastic elastomer A or D or tackifier B or E.

The composition C may appropriately include components other than the thermoplastic elastomer A and the tackifier B (hereinafter, also referred to as "other components").

The composition F may appropriately include components other than the thermoplastic elastomer D and the tackifier E (hereinafter, also referred to as "other components").

Examples of other components described above include softeners.

The softener refers to a substance having a function to lower the hardness of the composition C or the composition F and lower the viscosity.

Examples of the softener include, but are not limited to, oils; plasticizers; synthetic liquid oligomers; and mixtures thereof.

From the viewpoint of lowering of viscosity, enhancement of tackiness and lowering of hardness for the composition C or the composition F, oils may be suitably used. Examples of the oil include, but are not limited to, known paraffin process oils, naphthene process oils and aromatic process oils; and mixed oils thereof.

One of the softeners may be used singly, or two or more thereof may be used in combination.

In the case of using the material for a pressure-sensitive adhesive according to the present invention in food packaging materials, from the viewpoint of preventing the softener from being transferred to food due to the bleedout of the softener, the content of the softener is preferably 8% by mass or less, more preferably 5% by mass or less, and further preferably 3% by mass or less based on the total amount of the composition C or the composition F for a pressure-sensitive adhesive, and furthermore preferably, the composition C and the composition F substantially include no softener. This phrase "substantially include no" means that even an inevitable amount of the softener to be mixed into production plants, materials, or the like is not excluded, though not actively added.

Each of the composition C and the composition F constituting the material for a pressure-sensitive adhesive according to the present invention is in a particulate form.

Here, the term "particulate" also includes a shape called pellet shape, bead shape, crumb shape, dense pellet shape, or the like and refers to particles having a substantially homogeneous size. The particles having a substantially homogeneous size tend to prevent sorting at the time of extrusion molding and facilitate forming a highly homogeneous pressure-sensitive adhesive.

From the viewpoint of being much more difficult to block and excellent in handleability, it is preferable that each of the composition C and the composition F constituting the material for a pressure-sensitive adhesive according to the present invention have low tack performance.

The phrase "have low tack performance" refers to adhesive strength of 15.0 N/10 mm or smaller in the case that a layer consisting of the composition C or the composition F is formed on a base material and the adhesive strength is measured in accordance with "Method for measuring adhesive strength (Thermoplastic elastomer, each composition and each dry-blend composition)" described later. From a similar viewpoint, the adhesive strength is preferably 14.0 N/10 mm or less, more preferably 13.0 N/10 mm or less, further preferably 12.0 N/10 mm or less, furthermore preferably 10.0 N/10 mm or less, still further preferably 5.0 N/10 mm or less, and particularly preferably 1.0 N/10 mm or less.

From a similar viewpoint, the tackiness is preferably 10.0 N/5 mmΦ or less, more preferably 8.0 N/5 mmΦ or less, further preferably 6.0 N/5 mmΦ or less, furthermore preferably 5.0 N/5 mmΦ or less, still further preferably 3.0 N/5 mmΦ or less, and particularly preferably 1.0 N/5 mmΦ or less in the case that the adhesive strength is measured in accordance with "Method for measuring tackiness (Thermoplastic elastomer, each composition and each dry-blend composition)" described later.

(Thermoplastic elastomers A and D)

The composition C and the composition F contain at least one type of thermoplastic elastomer A and thermoplastic elastomer D, respectively.

The thermoplastic elastomers A and D are certain thermoplastic elastomers contained in the composition C and the composition F, respectively. Each of the composition C and the composition F may include other thermoplastic elastomers.

First, the thermoplastic elastomer A constituting the composition C will be described below. The thermoplastic elastomer D constituting the composition F will be described later.

(Thermoplastic elastomer A)

From the viewpoint of easily exhibiting large adhesive strength when the composition C is mixed with the composition F, the thermoplastic elastomer A is a block copolymer including a polymer block (A) primarily including a vinyl aromatic monomer unit and a polymer block (B) primarily including a conjugated diene monomer unit.

The "vinyl aromatic monomer unit" refers to a structure resulting from polymerization of one vinyl aromatic hydrocarbon compound, and the "conjugated diene monomer unit" refers to a structure resulting from polymerization of one conjugated diene compound.

The vinyl aromatic hydrocarbon compound is at least one selected from the group consisting of as styrene, $\alpha$-methylstyrene, p-methylstyrene, p-tert-butylstyrene, p-methoxystyrene and vinylnaphthalene. Among them, styrene is preferred for the vinyl aromatic hydrocarbon compound.

One of the vinyl aromatic hydrocarbon compounds may be used singly, or two or more thereof may be used in combination.

The conjugated diene compound is a diolefin having a conjugated double bond and is at least one selected from the group consisting of 1,3-butadiene, 2-methyl-1,3-butadiene (isoprene), 2,3-dimethyl-1,3-butadiene, 1,3-pentadiene, and 1,3-hexadiene.

Among them, 1,3-butadiene and isoprene are preferred for the conjugated diene compound. Use of 1,3-butadiene tends to provide a pressure-sensitive adhesive excellent in heat aging resistance and light resistance and is therefore particularly preferred. Use of 1,3-butadiene also enhances heat aging resistance and thereby tends to suppress deterioration ascribable to heating in an extruder, be less likely to cause reduction in performance, and not worsen odor, and is therefore preferred. Use of isoprene tends to improve the flexibility of a pressure-sensitive adhesive, and is therefore preferred.

One of the conjugated diene compounds may be used singly, or two or more thereof may be used in combination.

The "polymer block (A) primarily including a vinyl aromatic monomer unit" refers to a polymer block including a vinyl aromatic monomer unit at a percentage of 50% by mass or more, preferably 70% by mass or more, more preferably 85% by mass or more, and further preferably 95% by mass or more based on the total amount of the polymer block (A).

The "polymer block (B) primarily including a conjugated diene monomer unit" refers to a polymer block including a conjugated diene monomer unit at a percentage of more than 50% by mass, preferably 70% by mass or more, more preferably 85% by mass or more, and further preferably 95% by mass or more based on the total amount of the polymer block (B).

The content of the vinyl aromatic monomer unit in the thermoplastic elastomer A is preferably 10% by mass or more and 40% by mass or less. The content of the vinyl aromatic monomer unit in the range tends to provide a material for a pressure-sensitive adhesive much more easily exhibiting excellent adhesive strength when the composition C is mixed with the composition F.

From the viewpoint of obtaining a material for a pressure-sensitive adhesive exhibiting much higher retention strength, the lower limit of the content is preferably 12% by mass or more, more preferably 15% by mass or more, and further preferably 20% by mass or more. From the viewpoint of obtaining a material for a pressure-sensitive adhesive exhibiting much higher adhesive strength, the upper limit of the content of the vinyl aromatic monomer unit is preferably 35% by mass or less, more preferably 32% by mass or less, further preferably 25% by mass or less, and furthermore preferably 20% by mass or less.

The content can be measured by using a method described later in Examples.

From the viewpoint of exhibiting much larger adhesive strength when the composition C is mixed with the composition F, it is preferable that the thermoplastic elastomer A at least contained in the composition C include a block copolymer (C) having a polymer block (A) primarily including a vinyl aromatic monomer unit and a polymer block (B) primarily including a conjugated diene monomer unit, wherein the number of the polymer block (A) is 1. The content of the block copolymer (C) in the thermoplastic elastomer A is preferably 10% by mass or more and 90% by mass or less. The content of the block copolymer (C) in the range tends to provide a material for a pressure-sensitive adhesive much more easily exhibiting excellent adhesive strength when the composition C is mixed with the composition F.

From the viewpoint of obtaining a material for a pressure-sensitive adhesive exhibiting much higher tackiness when the composition C is mixed with the composition F, the content of the block copolymer (C) in the thermoplastic elastomer A is more preferably 30% by mass or more, further preferably 40% by mass or more, still furthermore preferably 50% by mass or more, and still further preferably 60% by mass or more.

From the viewpoint of obtaining a material for a pressure-sensitive adhesive exhibiting much higher retention strength, the content of the block copolymer (C) in the thermoplastic elastomer A is more preferably 80% by mass or less, further preferably 75% by mass or less, still further preferably 70% by mass or less, still further preferably 65% by mass or less, and particularly preferably 60% by mass or less.

The weight average molecular weight of the block copolymer (C) constituting the thermoplastic elastomer A and having one polymer block (A) is preferably 30,000 or higher and 200,000 or lower. The weight average molecular weight of

9

the block copolymer (C) in the range tends to provide a material for a pressure-sensitive adhesive more easily exhibiting excellent adhesive strength and tackiness when the composition C is mixed with the composition F.

From the viewpoint of obtaining a material for a pressure-sensitive adhesive easily exhibiting much higher softening point characteristics, the weight average molecular weight of the block copolymer (C) is more preferably 40,000 or higher, further preferably 50,000 or higher, furthermore preferably 60,000 or higher, still further preferably 70,000 or higher, and particularly preferably 80,000 or higher.

From the viewpoint of obtaining a material for a pressure-sensitive adhesive much more easily exhibiting excellent adhesive strength and tackiness and low melt viscosity characteristics when the composition C is mixed with the composition F, the weight average molecular weight of the block copolymer (C) is more preferably 180,000 or lower, further preferably 150,000 or lower, furthermore preferably 130,000 or lower, and still further preferably 120,000 or lower.

The structure of the block copolymer (C) having one polymer block (A) is not limited, and examples thereof include (A-B), (A-B)X, (B-A)X, (B-A-B), and (B-A-B)X (in which A denotes a polymer block (A); B denotes a polymer block (B); X denotes a residue of a coupling agent or a residue of a polymerization initiator).

Among them, diblock copolymers represented by the formula (A-B) or the formula (A-B)X are preferred.

The block copolymer (C) having such a structure tends to much more easily exhibit excellent adhesive strength, low melt viscosity characteristics, and high softening point characteristics when the composition C is mixed with the composition F.

It is preferable that the thermoplastic elastomer A further include a component having a ratio of weight average molecular weight to the weight average molecular weight of the block copolymer (C) of 1.5 or more and less than 2.5 (block copolymer (D-1), i.e., (Mw of the block copolymer (D-1) / Mw of the block copolymer (C)) = 1.5 or more and less than 2.5).

The ratio of weight average molecular weight in terms of block copolymer (D-1)/block copolymer (C) is preferably 1.6 or more and less than 2.4, and more preferably 1.7 or more and less than 2.3.

The ratio of weight average molecular weight in terms of block copolymer (D-1)/block copolymer (C) in the range tends to provide a material for a pressure-sensitive adhesive much more easily exhibiting excellent adhesive strength, low melt viscosity characteristics, and high softening point characteristics when the composition C is mixed with the composition F.

It is preferable that the thermoplastic elastomer A further include a component having a ratio of weight average molecular weight to the weight average molecular weight of the block copolymer (C) of 2.5 or more and less than 3.4 (block copolymer (D-2), i.e., (Mw of the block copolymer (D-2) / Mw of the block copolymer (C)) = 2.5 or more and less than 3.4).

The ratio of weight average molecular weight in terms of block copolymer (D-2)/block copolymer (C) is preferably 2.6 or more and less than 3.3, and more preferably 2.7 or more and less than 3.2. The ratio of weight average molecular weight in terms of block copolymer (D-2)/block copolymer (C) in the range tends to provide a material for a pressure-sensitive adhesive much more easily exhibiting excellent adhesive strength, low melt viscosity characteristics, and high softening point characteristics when the composition C is mixed with the composition F.

It is preferable that the thermoplastic elastomer A further include a component having a ratio of weight average molecular weight to the weight average molecular weight of the block copolymer (C) of 3.4 or more and less than 4.5 (block copolymer (D-3), i.e., (Mw of the block copolymer (D-3) / Mw of the block copolymer (C)) = 3.4 or more and less than 4.5).

The ratio of weight average molecular weight in terms of block copolymer (D-3)/block copolymer (C) is preferably 3.5 or more and less than 4.4, and more preferably 3.6 or more and less than 4.3. The ratio of weight average molecular weight in terms of block copolymer (D-3)/block copolymer (C) in the range tends to much more easily exhibit excellent adhesive strength, low melt viscosity characteristics, and high softening point characteristics when the composition C is mixed with the composition F.

The ratio of an area for the block copolymer (D-1) in a GPC elution curve is preferably 0.00 or more and 0.20 or less, more preferably 0.01 or more and 0.10 or less, and further preferably 0.02 or more and 0.08 or less to the total area = 1 for the thermoplastic elastomer A in a GPC elution curve.

The ratio of an area for the block copolymer (D-1) in a GPC elution curve in the range tends to provide a material for a pressure-sensitive adhesive further having excellent adhesive strength, low melt viscosity characteristics, and high softening point characteristics when the composition C is mixed with the composition F.

The ratio of an area for the block copolymer (D-2) in a GPC elution curve is preferably 0.10 or more and 0.50 or less, more preferably 0.12 or more and 0.45 or less, and further preferably 0.13 or more and 0.4 or less to the total area = 1 for the thermoplastic elastomer A in a GPC elution curve.

The ratio of an area for the block copolymer (D-2) in a GPC elution curve in the range tends to provide a material for a pressure-sensitive adhesive further having excellent adhesive strength, low melt viscosity characteristics, and high softening point characteristics when the composition C is mixed with the composition F.

The ratio of an area for the block copolymer (D-3) in a GPC elution curve is preferably 0.10 or more and 0.50 or less, more preferably 0.12 or more and 0.45 or less, and further preferably 0.13 or more and 0.4 or less to the total area = 1 for the thermoplastic elastomer A in a GPC elution curve.

The ratio of an area for the block copolymer (D-3) in a GPC elution curve in the range tends to provide a material for a pressure-sensitive adhesive further having excellent adhesive strength, low melt viscosity characteristics, and high softening point characteristics when the composition C is mixed with the composition F.

The ratio of an area for the block copolymer (D-2) in a GPC elution curve to an area for the block copolymer (D-1) in a GPC elution curve (block copolymer (D-2)/block copolymer (D-1)) is preferably 1.2 or more, more preferably 1.5 or more, and further preferably 1.8 or more.

The ratio of an area in a GPC elution curve in the range tends to provide a material for a pressure-sensitive adhesive further having excellent adhesive strength, low melt viscosity characteristics, and high softening point characteristics when the composition C is mixed with the composition F.

The ratio of an area for the block copolymer (D-3) in a GPC elution curve to an area for the block copolymer (D-1) in a GPC elution curve (block copolymer (D-3)/block copolymer (D-1)) is preferably 1.2 or more, more preferably 1.5 or more, and further preferably 1.8 or more.

The ratio of an area in a GPC elution curve in the range tends to provide a material for a pressure-sensitive adhesive further having excellent adhesive strength, low melt viscosity characteristics, and high softening point characteristics when the composition C is mixed with the composition F.

The ratio of weight average molecular weight of each of the block copolymer (D-1), the block copolymer (D-2) and the block copolymer (D-3) to the weight average molecular weight of the block copolymer (C), and the ratio of an area for each of the block copolymer (D-1), the block copolymer (D-2), and the block copolymer (D-3) in a GPC elution curve can be controlled to be within the above range on the basis of conditions for a coupling reaction, specifically, by adjusting the type of a coupling agent, the amount of the coupling agent to be added, the reaction temperature, and the duration of reaction. For example, the ratio of weight average molecular weight and the ratio of an area in a GPC elution curve can be controlled by selecting a compound containing four functional groups as a coupling agent.

The structure of each of the block copolymer (D-1), the block copolymer (D-2), and the block copolymer (D-3) is not limited, and each of the block copolymer (D-1), the block copolymer (D-2), and the block copolymer (D-3) may consist of a single type of a structural unit or be a mixture of one or more types of structural units.

Examples thereof include $[(A-B)_N]_m$, $[(A-B)_N]_mX$, $[(B-A)_N]_mX$, $[(A-B)_NA]_mX$, and $[(B-A)_NB]_mX$ (in which A denotes a polymer block (A) primarily including a vinyl aromatic monomer unit; B denotes a polymer block (B) primarily including a conjugated diene monomer unit; X denotes a residue of a coupling agent or a residue of a polymerization initiator; N is 1 to 5; and m is 2 to 8 (2 to 6, and more preferably 2 to 4).

Among them, a dibranched block copolymer represented by the formula $(A-B)_2X$ (hereinafter, occasionally referred to as "bifunctional block copolymer") is preferred for the block copolymer (D-1).

For the block copolymer (D-2), a tribranched block copolymer represented by the formula $(A-B)_3X$ (hereinafter, occasionally referred to as "trifunctional block copolymer") is preferred.

For the block copolymer (D-3), a tetrabranched block copolymer represented by the formula $(A-B)_4X$ (hereinafter, occasionally referred to as "tetrafunctional block copolymer") is preferred.

The tribranched block copolymer and tetrabranched block copolymer contained tends to provide a material for a pressure-sensitive adhesive much more easily exhibiting excellent adhesive strength, low melt viscosity characteristics, and high softening point characteristics.

The percentage H of hydrogenation based on the total amount of the unsaturated double bonds derived from the conjugated diene compound in the polymer block (B) primarily including a conjugated diene monomer unit is preferably 20% by mole or more, more preferably 25% by mole or more, further preferably 30% by mole or more, still further preferably 35% by mole or more, furthermore preferably 40% by mole or more, particularly preferably 50% by mole or more, and still further preferably 80% by mole or more.

The percentage H of hydrogenation in the range tends to much more easily exhibit excellent thermal stability.

The percentage H of hydrogenation based on the total amount of the unsaturated double bonds derived from the conjugated diene compound in the polymer block (B) primarily including a conjugated diene monomer unit is preferably 80% by mole or less, more preferably 75% by mole or less, further preferably 70% by mole or less, still further preferably 65% by mole or less, furthermore preferably 60% by mole or less, particularly preferably 55% by mole or less, and still further preferably 50% by mole or less.

The percentage H of hydrogenation in the range tends to provide composition C having low Tg and easily exhibiting excellent adhesive strength up to lower temperatures.

The percentage H of hydrogenation in the range also tends to enhance compatibility with a tackifier and much more easily exhibit excellent adhesive strength.

Further, the percentage H of hydrogenation in the range tends to allow the resulting composition to be much more homogeneously mixed with the composition F and further enhance the in-plane uniformity of the adhesive strength of the material for a pressure-sensitive adhesive to be formed in extrusion, and tends to further suppress the formation of fish eyes.

(Tackifiers B and E)

The composition C contains at least one type of tackifier B. The tackifier B is a certain tackifier contained in the composition C. The composition C may include other tackifiers.

The composition F contains at least one type of tackifier E. The tackifier E is a certain tackifier contained in the composition F. The composition F may include other tackifiers.

The tackifier B or E can be in the form of a resin (tackifier resin) and may be widely selected depending on the application of and required performance for the material for a pressure-sensitive adhesive to be obtained.

The tackifier B contained in the composition C is a hydrogenation product of an aromatic petroleum hydrocarbon resin and/or a derivative thereof and examples of the tackifier E at least contained in the composition F, include, but are not limited to, rosin compounds such as natural rosins, modified rosins, glycerol esters of a natural rosin, glycerol esters of a modified rosin, pentaerythritol esters of a natural rosin, pentaerythritol esters of a modified rosin, hydrogenated rosins and pentaerythritol esters of a hydrogenated rosin; terpene compounds such as copolymers of a natural terpene, three-dimensional polymers of a natural terpene, aromatic modified terpene resins, hydrogenated derivatives of an aromatic modified terpene resin, terpene-phenol resins, hydrogenated derivatives of a terpene-phenol resin, terpene resins (e.g., monoterpenes, diterpenes, triterpenes and polyterpenes), hydrogenated terpene resins and hydrogenated derivatives of a hydrogenated terpene resin; petroleum hydrocarbon compounds such as aliphatic petroleum hydrocarbon resins (C5 resins), hydrogenated derivatives of an aliphatic petroleum hydrocarbon resin, aromatic petroleum hydrocarbon resins (C9 resins), hydrogenation products of an aromatic petroleum hydrocarbon resin, derivatives of hydrogenation products of an aromatic petroleum hydrocarbon resin, hydrogenation products of an aromatic modified alicyclic hydrocarbon resin (DCPD-C9 resin) and derivatives thereof, dicyclopentadiene resins, hydrogenated derivatives of a dicyclopentadiene resin, C5/C9 copolymer resins, hydrogenated products of a C5/C9 copolymer resin and derivatives thereof, cyclic aliphatic petroleum hydrocarbon resins, hydrogenation products of a cyclic aliphatic petroleum hydrocarbon resin and derivatives thereof; and aromatic group-containing resins.

One of these tackifiers may be used singly, or two or more thereof may be used in combination. Here, a C5/C9 copolymer resin refers to a copolymer petroleum resin obtained by polymerizing a mixture of a C5 fraction and C9 fraction as the starting material.

Now, preferred tackifiers B and E for various applications and performances will be described more specifically.

From the viewpoint of suppression of coloration and less odor, a hydrogenation product of an aromatic petroleum hydrocarbon resin and/or a derivative thereof is used for the tackifier B at least contained in the composition C and a hydrogenation product and derivatives thereof are preferred for the tackifier E at least contained in the composition F.

Examples of the hydrogenation product and the derivative thereof include, but are not limited to, hydrogenation products of an aromatic modified terpene resin and derivatives thereof, hydrogenation products of a terpene-phenol resin and derivatives thereof, hydrogenation products of a hydrogenated terpene resin and derivatives thereof, hydrogenation products of an aliphatic petroleum hydrocarbon resin (C5 resin) and derivatives thereof, hydrogenation products of an aromatic petroleum hydrocarbon resin (C9 resin) and derivatives thereof, hydrogenation products of a dicyclopentadiene resin and derivatives thereof, hydrogenation products of a C5/C9 copolymer resin and derivatives thereof and hydrogenation products of a cyclic aliphatic petroleum hydrocarbon resin and derivatives thereof.

Among them, hydrogenated products of an aromatic petroleum hydrocarbon resin (C9 resin) and derivatives thereof, hydrogenated products of a dicyclopentadiene resin and derivatives thereof and hydrogenated products of a hydrogenated terpene resin and derivatives thereof are particularly preferred, for example.

The commercial products of such a hydrogenation product and a derivative thereof are not limited, and examples thereof include ARKON P and M Series (trade name) manufactured by Arakawa Chemical Industries, Ltd., Regalite R series manufactured by Eastman Chemical Company, I-MARV S and P series manufactured by Idemitsu Kosan Co., Ltd., ESCOREZ 5000 series (trade name) manufactured by ExxonMobil Chemical, CLEARON P series manufactured by YASUHARA CHEMICAL CO., LTD and SUKOREZ SU400 series manufactured by Kolon Industries, Inc.

From the viewpoint of being well compatible with the thermoplastic elastomer A or D, and obtaining a material for a pressure-sensitive adhesive exhibiting excellent adhesive strength, each of the tackifiers B and E is preferably a hydrogenation product of a hydrocarbon resin having a softening point of 130°C or lower, and/or a derivative thereof.

The lower limit value of the softening point of the tackifier B or E is preferably 90°C or higher, more preferably 93°C or higher, and further preferably 95°C or higher. The softening point of the tackifier B or E in the range exhibits much better adhesive strength.

The upper limit value of the softening point is preferably lower than 128°C, more preferably lower than 126°C, and further preferably lower than 125°C. The softening point of the tackifier B or E in the range exhibits much better adhesive strength.

The softening points of the tackifiers B and E can be controlled by adjusting various factors such as the structures, degrees of polymerization and molecular weights of the tackifiers B and E, and may be associated with compatibility with the thermoplastic elastomer A or D as well as the adhesive strength of the material for a pressure-sensitive adhesive. In a preferred aspect, the softening point is controlled by a molecular weight, and the type of a resin is selected from the viewpoint of color or odor.

Examples of the tackifier other than various hydrogenation products and derivatives thereof mentioned above include, but are not limited to, natural rosins, modified rosins, glycerol esters of a natural rosin, glycerol esters of a modified rosin, pentaerythritol esters of a natural rosin, pentaerythritol esters of a modified rosin, hydrogenated rosins and pentaerythritol esters of a hydrogenated rosin; copolymers of a natural terpene, three-dimensional polymers of a natural terpene, aromatic modified terpene resins, terpene-phenol resins, terpene resins and hydrogenated terpene resins; and aliphatic petroleum hydrocarbon resins (C5 resins), aromatic petroleum hydrocarbon resins (C9 resins), dicyclopentadiene resins, C5/C9 copolymer resins and cyclic aliphatic petroleum hydrocarbon resins.

Among them, preferred are aliphatic petroleum hydrocarbon resins (C5 resins), aromatic petroleum hydrocarbon resins (C9 resins), C5/C9 copolymer resins, cyclic aliphatic petroleum hydrocarbon resins, terpene resins, natural and modified rosin esters, and mixtures thereof.

Examples of commercially available product include for the aliphatic petroleum hydrocarbon resin (C5 resin), Quintone 100 series (trade name) manufactured by Zeon Corporation, ESCOREZ 1000 series manufactured by ExxonMobil Chemical and WINGTACK series (trade name) manufactured by Cray Valley. Examples thereof for the aromatic petroleum hydrocarbon resin (C9 resin) and C5/C9 copolymer resin include PICCOTAC series (trade name) manufactured by Eastman Chemical Company, ESCOREZ 2000 series (trade name) manufactured by ExxonMobil Chemical and FTR series (trade name) manufactured by Mitsui Chemicals, Inc. Examples thereof for the terpene resin and natural and modified rosin ester include SYLVALITE series and SYLVARES series (trade name) manufactured by Arizona Chemical Company, LLC., PICCOLYTE series (trade name) manufactured by Pinova, Inc., and YS RESIN PX series (trade name) manufactured by YASUHARA CHEMICAL CO., LTD.

From the viewpoint of compatibility with the thermoplastic elastomer A mentioned above, the tackifier B at least contained in the composition C is a hydrogenated product of an aromatic petroleum hydrocarbon resin.

From the viewpoint of compatibility with the thermoplastic elastomer D mentioned later, the tackifier E at least contained in the composition F is preferably at least one selected from the group consisting of an aromatic modified terpene resin, a terpene-phenol resin, a terpene resin, an aliphatic petroleum hydrocarbon resin, an aromatic petroleum hydrocarbon resin, a dicyclopentadiene resin, a C5/C9 copolymer resin, and hydrogenated derivatives thereof.

In the material for a pressure-sensitive adhesive according to the present invention, from the viewpoint of the exhibition of excellent adhesive strength and productivity, the tackifier B is a hydrogenation product of an aromatic petroleum hydrocarbon resin (C9 resin), and/or a derivative thereof.

The tackifier B which is a hydrogenation product of an aromatic petroleum hydrocarbon resin (C9 resin), and/or a derivative thereof can prevent particles of the composition C from adhering to each other (e.g., forming two or three pellets connected together) and permits production in a particulate form.

From the viewpoint of the exhibition of excellent adhesive strength, low-temperature characteristics and productivity, the tackifier E is preferably a hydrogenation product of an aromatic modified alicyclic hydrocarbon resin (DCPD-C9 resin), and/or a derivative thereof.

The tackifier E which is a hydrogenation product of an aromatic modified alicyclic hydrocarbon resin (DCPD-C9 resin), and/or a derivative thereof permits production of the composition F in a particulate form and in a homogeneous shape, i.e., without adhesion of its particles to each other.

The combination of the tackifier B and the tackifier E as described above tends to improve the resealing peel strength of a pressure-sensitive adhesive to be formed upon extrusion, tends to improve the in-plane uniformity of the resealing peel strength, and tends to improve the appearance of a film by decreasing the amount of unmelted products.

(Thermoplastic elastomer D)

The composition F contains at least one type of thermoplastic elastomer D.

The thermoplastic elastomer D is a certain thermoplastic elastomer contained in the composition F. The composition F may include other thermoplastic elastomers.

The thermoplastic elastomer D may be the same as or different from the thermoplastic elastomer A. Here, the term "same" means that the thermoplastic elastomer D has the same structure as that of the thermoplastic elastomer A. From the viewpoint of further enhancing compatibility and miscibility with the thermoplastic elastomer A, it is preferable that the thermoplastic elastomer D be the same as the thermoplastic elastomer A. From the viewpoint of easily designing a wider range of tack performance, it is preferable that the thermoplastic elastomer D have a different structure from that of the thermoplastic elastomer A.

The thermoplastic elastomer D may be different from the thermoplastic elastomer A. It is preferable that the structure of the thermoplastic elastomer D be any of the structures listed as the above-described preferred structure of the thermoplastic elastomer A.

In the material for a pressure-sensitive adhesive according to the present invention, from the viewpoint of easily exhibiting much larger adhesive strength, it is preferable that the thermoplastic elastomer D include a block copolymer (F) having a polymer block (D) primarily including a vinyl aromatic monomer unit and a polymer block (E) primarily including a conjugated diene monomer unit, wherein the number of the polymer block (D) primarily including a vinyl aromatic monomer unit is 1, as in the thermoplastic elastomer A.

Examples of the vinyl aromatic hydrocarbon compound that is used for forming the vinyl aromatic monomer include the vinyl aromatic hydrocarbon compounds listed for the thermoplastic elastomer A. Examples of a preferred vinyl aromatic hydrocarbon compound also include the preferred vinyl aromatic hydrocarbon compounds listed for the thermoplastic elastomer A.

Examples of the conjugated diene compound include the conjugated diene compounds listed for the thermoplastic elastomer A. Examples of a preferred conjugated diene compound include the preferred conjugated diene compounds listed for the thermoplastic elastomer A.

The "polymer block (D) primarily including a vinyl aromatic monomer unit" is defined as in the "polymer block (A) primarily including a vinyl aromatic monomer unit" constituting the thermoplastic elastomer mentioned above.

The content of the vinyl aromatic monomer unit in the thermoplastic elastomer D constituting the composition F is preferably in the range listed as the preferred content of the vinyl aromatic monomer unit in the thermoplastic elastomer A.

In the material for a pressure-sensitive adhesive according to the present invention, from the viewpoint of exhibiting much larger adhesive strength, it is preferable that the thermoplastic elastomer D include a block copolymer (F) having a polymer block (D) primarily including a vinyl aromatic monomer unit and a polymer block (E) primarily including a conjugated diene monomer unit, wherein the number of the polymer block (D) is 1, as mentioned above.

From a similar viewpoint, the content of the block copolymer (F) in the thermoplastic elastomer D is preferably in the range listed as the preferred content of the block copolymer (C) in the thermoplastic elastomer A.

From a similar viewpoint, the weight average molecular weight of the block copolymer (F) having one polymer block (D) is preferably in the range listed as the preferred range of the weight average molecular weight of the block copolymer (C) having one polymer block (A) contained in the thermoplastic elastomer A mentioned above.

The structure of the block copolymer (F) having one polymer block (D) is not limited, and examples thereof include (A-B), (A-B)X, (B-A)X, (B-A-B), and (B-A-B)X (in which A denotes a polymer block (D); B denotes a polymer block (E); X denotes a residue of a coupling agent or a residue of a polymerization initiator). Among them, diblock copolymers represented by the formula (A-B) or the formula (A-B)X are preferred. The block copolymer (F) having such a structure tends to provide a material for a pressure-sensitive adhesive much more easily exhibiting excellent adhesive strength, low melt viscosity characteristics, and high softening point characteristics.

It is preferable that the "thermoplastic elastomer D" which is one thermoplastic elastomer constituting the composition F further include a block copolymer (H-1) corresponding to the block copolymer (D-1) in the thermoplastic elastomer A constituting the composition C. It is preferable that the thermoplastic elastomer D further include a block copolymer (H-2) corresponding to the block copolymer (D-2) in the thermoplastic elastomer A. It is preferable that the thermoplastic elastomer D further include a block copolymer (H-3) corresponding to the block copolymer (D-3) in the thermoplastic elastomer A.

From a similar viewpoint, examples of a preferred ratio of an area for the block copolymer (H-1), a preferred ratio of an area for the block copolymer (H-2), and a preferred ratio of an area for the block copolymer (H-3) in a GPC elution curve to the total area of the thermoplastic elastomer D include the ranges listed as the preferred ratio of an area for the block copolymer (D-1), the preferred ratio of an area for the block copolymer (D-2), and the preferred ratio of an area for the block copolymer (D-3), respectively, to the total area of the thermoplastic elastomer A.

From a similar viewpoint, examples of a preferred ratio of an area for the block copolymer (H-2) to the area of the block copolymer (H-1), and a preferred ratio of an area for the block copolymer (H-3) to the area of the block copolymer (H-1) in a GPC elution curve include the ranges listed as the preferred ratio of an area for the block copolymer (D-2) to the area of the block copolymer (D-1), and the preferred ratio of an area for the block copolymer (D-3) to the area of the block copolymer (D-1), respectively, in elastomer A.

In a GPC elution curve, (i) the ratio of weight average molecular weight of each of the block copolymer (H-1), the block copolymer (H-2) and the block copolymer (H-3) to the weight average molecular weight of the block copolymer (F), and (ii) the ratio of an area for each of the block copolymer (H-1), the block copolymer (H-2), and the block copolymer (H-3) in a GPC elution curve can be controlled to be within the above range on the basis of conditions for a coupling reaction, which will be described later, specifically, by adjusting the type of coupling, the amount of a coupling agent to be added, the temperature, and the duration. For example, the ratio of weight average molecular weight and the ratio of an area in a GPC elution curve can be controlled by selecting a compound containing four functional groups as a coupling agent.

The structure of each of the block copolymer (H-1), the block copolymer (H-2), and the block copolymer (H-3) in the thermoplastic elastomer D is not limited, and each of the block copolymer (H-1), the block copolymer (H-2), and the block copolymer (H-3) may consist of a single type of a structural unit or be a mixture of one or more types of structural units. Examples of a specific structure include the structures listed as the structure of each of the block copolymer (D-1), the block copolymer (D-2), and the block copolymer (D-3) in the thermoplastic elastomer A in which A denotes a polymer block (D) instead of the polymer block (A), and B denotes a polymer block (E) instead of the polymer block (B). Examples of a preferred structure also include the structures listed as the preferred structure of each of the block copolymer (D-1), the block copolymer (D-2), and the block copolymer (D-3).

From a similar viewpoint to that for the thermoplastic elastomer A mentioned above, examples of preferred percentage H of hydrogenation based on the total amount of the unsaturated double bonds derived from the conjugated diene compound in the polymer block (E) primarily including a conjugated diene monomer unit in the thermoplastic elastomer D include the range listed as the preferred range of the percentage H of hydrogenation based on the total amount of the unsaturated double bonds derived from the conjugated diene compound in the polymer block (B) primarily including a conjugated diene monomer unit.

From a similar viewpoint, examples of preferred percentage H of hydrogenation based on the total amount of the unsaturated double bonds derived from the conjugated diene compound in the polymer block (E) primarily including a conjugated diene monomer unit include the range listed as the preferred range of the percentage H of hydrogenation based on the total amount of the unsaturated double bonds derived from the conjugated diene compound in the polymer block (E) primarily including a conjugated diene monomer unit.

(Composition C)

The material for a pressure-sensitive adhesive according to the present embodiments contains composition C and composition F, as mentioned above.

The composition C includes at least one type of thermoplastic elastomer A, and has a particulate form. The composition C includes at least one type of tackifier B. The composition C is in a particulate form having the thermoplastic elastomer A and the tackifier B integrated.

(Composition F)

The composition F is in a particulate form containing at least one type of thermoplastic elastomer D and at least one type of tackifier E which are integrated.

In the material for a pressure-sensitive adhesive according to the present invention,

an adhesive strength of the material for a pressure-sensitive adhesive having ratio x is
larger than that of the composition C having ratio $\alpha$ and
larger than that of the composition F having ratio $\beta$, wherein
x represents a ratio of the total amount of the thermoplastic elastomer(s) to the total amount of the thermoplastic elastomer(s) and the tackifier(s) (thermoplastic elastomer(s) / thermoplastic elastomer(s) + tackifier(s)) in the material for a pressure-sensitive adhesive;
$\alpha$ represents a ratio of the total amount of the thermoplastic elastomer(s) to the total amount of the thermoplastic elastomer(s) and the tackifier(s) (thermoplastic elastomer(s) / thermoplastic elastomer(s) + tackifier(s)) in the composition C; and
$\beta$ represents a ratio of the total amount of the thermoplastic elastomer(s) to the total amount of the thermoplastic elastomer(s) and the tackifier(s) (thermoplastic elastomer(s) / thermoplastic elastomer(s) + tackifier(s)) in the composition F, and
the material for a pressure-sensitive adhesive satisfies the following expression (1):

$$\beta < x < \alpha \quad (1)$$

Here, the "thermoplastic elastomer(s)" is not limited to the thermoplastic elastomer A or D mentioned above and refers to all thermoplastic elastomers contained in each of the material for a pressure-sensitive adhesive, the composition C and the composition F.

The "tackifier(s)" is not limited to the tackifier B or E mentioned above and refers to all tackifiers contained in each of the material for a pressure-sensitive adhesive, the composition C and the composition F.

Each of the ratios x, $\alpha$ and $\beta$ is a ratio of mass.

The adhesive strength is a value measured in accordance with "Method for measuring adhesive strength (Thermoplastic elastomer, each composition and each dry-blend composition)" described later.

The material for a pressure-sensitive adhesive according to the present invention in which the adhesive strength of the material for a pressure-sensitive adhesive having ratio x is larger than that of the composition C having ratio $\alpha$ and larger than that of the composition F having ratio $\beta$, and satisfies the expression (1) can exhibit much higher adhesive strength.

(Preferable form of material for pressure-sensitive adhesive)

From the viewpoint of being difficult to block and easy to handle and being able to exhibit high adhesive strength, the composition C satisfies the following condition (1) and preferably satisfies the condition (3) and the composition F satisfies the following condition (2) and preferably satisfies the condition (5):

<condition (1)>
a ratio of the total mass of the thermoplastic elastomer(s) to the total mass of the tackifier(s) in the composition C is more than 1.5 and 3.0 or less.
<condition (3)>

a percentage of the total mass of the thermoplastic elastomer(s) based on the total mass of the composition C is more than 60% by mass and less than 80% by mass, and
a percentage of the total mass of the tackifier(s) based on the total mass of the composition C is more than 20% by mass and less than 40% by mass.

<condition (2)>
a ratio of the total mass of the tackifier(s) to the total mass of the thermoplastic elastomer(s) in the composition F is more than 1.5 and 3.0 or less.
<condition (4)>
a percentage of the total mass of the thermoplastic elastomer(s) based on the total mass of the composition F is more than 20% by mass and less than 40% by mass, and a percentage of the total mass of the tackifier(s) based on the total mass of the composition F is more than 60% by mass and less than 80% by mass.

A thermoplastic elastomer and a tackifier produce the highest adhesive strength when mixed at an appropriate ratio, and the adhesive strength is decreased as the ratio deviates from the appropriate one.

Hence, composition C having a proportion of a thermoplastic elastomer higher than the appropriate ratio and composition F having a proportion of a thermoplastic elastomer lower than the appropriate ratio both have lower adhesive strength as compared with a mixture having the appropriate ratio.

The composition C and the composition F adjusted so as to attain the appropriate ratio when mixed are difficult to block and easy to handle before extrusion and can exhibit high adhesive strength by mixing after extrusion.

The compositions C and F can have close flowability by adjusting the proportions of the thermoplastic elastomers in the composition C and the composition F as close as possible so as to weaken their adhesive strength. Closer flowability of the compositions tends to facilitate more uniformly mixing the compositions because of their closer times to be melted in an extruder or viscosity during melting. As a result, the appropriate ratio is easier to attain and tends to improve adhesive strength. This also tends to improve the appearance of a film because unmelted products are more unlikely to remain.

More specifically, a compositional ratio that sufficiently weakens adhesive strength in a particulate form (to an extent that blocking does not matter) differs depending on the combinations of thermoplastic elastomers and tackifiers contained in the composition C and the composition F, or how to select a production facility for the compositions. Therefore, the compositional ratio between a thermoplastic elastomer and a tackifier is adjusted according to the thermoplastic elastomer, the tackifier, the production facility, etc. so as to weaken adhesive strength.

Within the compositional ratio, as mentioned above, the proportions of the thermoplastic elastomers in the composition C and the composition F are set to be close to each other for the production of the composition C and the composition F, and the ratios of mass for the composition C and the composition F are determined such that the ratio x of the total amount of the thermoplastic elastomer(s) to the total amount of the thermoplastic elastomer(s) and the tackifier(s) in the material for a pressure-sensitive adhesive satisfies the expression (1).

<Condition (1)>

The ratio of the total mass of the thermoplastic elastomer(s) to the total mass of the tackifier(s) (the total mass of the thermoplastic elastomer(s) / the total mass of the tackifier(s)) in the composition C is more than 1.5 and 3.0 or less.

The lower limit value of (the total mass of the thermoplastic elastomer(s) / the total mass of the tackifier(s)) is preferably larger than 1.8, more preferably larger than 2.0, and further preferably larger than 2.2.

The lower limit of the ratio of the total mass of the thermoplastic elastomer(s) to the total mass of the tackifier(s) in the range tends to weaken the adhesive strength of the composition C and renders the composition C difficult to block and easy to handle.

The upper limit of the ratio of the total mass of the thermoplastic elastomer(s) to the total mass of the tackifier(s) (the total mass of the thermoplastic elastomer(s) / the total mass of the tackifier(s)) is more preferably 2.8 or less, further preferably 2.6 or less, further preferably 2.4 or less.

The upper limit of the ratio of the total mass of the thermoplastic elastomer(s) to the total mass of the tackifier(s) in the range elevates the flowability of the particulate composition C which in turn becomes close to the flowability of the composition **F.** Therefore, these two types of particulate compositions, when together extruded by using an extruder, are easily given force evenly. As a result, the composition C tends to be uniformly mixed with the composition F. This tends to improve the adhesive strength of a pressure-sensitive adhesive to be formed upon extrusion, tends to improve the in-plane uniformity of the adhesive strength, and tends to improve the appearance of a film by decreasing the amount of unmelted products.

<Condition (3)>

The percentage of the total mass of the tackifier(s) based on the total mass of the composition C is preferably more than 20% by mass and less than 40% by mass.

The lower limit of the percentage is more preferably 23% by mass or more, further preferably 26% by mass or more, and furthermore preferably 28 % by mass or more.

The lower limit of the percentage in the range elevates the flowability of the particulate composition C which in turn becomes close to the flowability of the composition F. Therefore, these two types of particulate compositions, when together extruded by using an extruder, are easily given force evenly. As a result, the composition C tends to be uniformly mixed with the composition F. This tends to improve the adhesive strength of a pressure-sensitive adhesive to be formed upon extrusion, tends to improve the in-plane uniformity of the adhesive strength, and tends to improve the appearance of a film by decreasing the amount of unmelted products.

The upper limit of the percentage is more preferably 38% by mass or less, further preferably 36% by mass or less, and furthermore preferably 34% by mass or less. The upper limit of the percentage in the range tends to weaken the adhesive strength of the composition C and renders the composition C difficult to block and easy to handle.

The percentage of the total mass of the thermoplastic elastomer(s) based on the total mass of the composition C is preferably more than 60% by mass and less than 80% by mass.

The lower limit value of the percentage is more preferably 62% by mass or more, further preferably 64% by mass or more, and furthermore preferably 66% by mass or more.

The lower limit of the percentage in the range tends to weaken the adhesive strength of the composition C and renders the composition C difficult to block and easy to handle.

The upper limit of the percentage is more preferably 78% by mass or less, further preferably 76% by mass or less, and furthermore preferably 74% by mass or less. The upper limit of the percentage in the range elevates the flowability of the particulate composition C which in turn becomes close to the flowability of the composition F. Therefore, these two types of particulate compositions, when together extruded by using an extruder, are easily given force evenly. As a result, the composition C tends to be uniformly mixed with the composition F. This tends to improve the adhesive strength of a pressure-sensitive adhesive to be formed upon extrusion, tends to improve the in-plane uniformity of the adhesive strength, and tends to improve the appearance of a film by decreasing the amount of unmelted products.

<Ratio $\alpha$>

The ratio $\alpha$ of the total amount of the thermoplastic elastomer(s) to the total amount of the thermoplastic elastomer(s) and the tackifier(s) in the composition C is preferably 0.6 or more and 0.8 or less, more preferably 0.62 or more and 0.78 or less, further preferably 0.64 or more and 0.76 or less, and further preferably 0.66 or more and 0.74 or less.

$\alpha$ in the range decreases the adhesive strength of the composition C, renders the composition C difficult to block, and elevates flowability as compared with a single substance of a thermoplastic elastomer. Therefore, the composition C tends to be easy to mix uniformly with the composition F.

<Ratio $\beta$>

The ratio $\beta$ of the total amount of the thermoplastic elastomer(s) to the total amount of the thermoplastic elastomer(s) and the tackifier(s) in the composition F is preferably 0.2 or more and 0.4 or less, more preferably 0.22 or more and 0.38 or less, further preferably 0.24 or more and 0.36 or less, and furthermore preferably 0.26 or more and 0.34 or less.

$\beta$ in the range decreases the adhesive strength of the composition F, renders the composition F difficult to block, and elevates flowability as compared with a single substance of a tackifier. Therefore, the composition F tends to be easy to mix uniformly with the composition C.

<Condition (2)>

For the composition F, the ratio of the total mass of the tackifier(s) to the total mass of the thermoplastic elastomer(s) (the total mass of the tackifier(s) / the total mass of the thermoplastic elastomer(s)) in the composition F is more than 1.5 and 3.0 or less.

The composition F thus configured becomes difficult to block and easy to handle because of weakened adhesive strength.

The lower limit of the ratio of the total mass of the tackifier(s) to the total mass of the thermoplastic elastomer(s) (the total mass of the tackifier(s) / the total mass of the thermoplastic elastomer(s)) in the composition F is more preferably larger than 1.8, further preferably larger than 2.0, and furthermore preferably larger than 2.2.

The lower limit of the ratio of the total mass of the tackifier(s) to the total mass of the thermoplastic elastomer(s) in the range tends to weaken the adhesive strength of the composition F and renders the composition F difficult to block and easy to handle.

The upper limit of the ratio of the total mass of the tackifier(s) to the total mass of the thermoplastic elastomer(s) (the total mass of the tackifier(s) / the total mass of the thermoplastic elastomer(s)) in the composition F is 3.0 or less, preferably 2.8 or less, furthermore preferably 2.6 or less, and further preferably 2.4 or less.

The upper limit of the ratio of the total mass of the tackifier(s) to the total mass of the thermoplastic elastomer(s) in the range renders flowability close to the flowability of the composition C mentioned above. Therefore, these two types of particulate compositions, when together extruded by using an extruder, are easily given force evenly. As a result, the composition F tends to be uniformly mixed with the composition C. This tends to improve the adhesive strength of a pressure-sensitive adhesive to be formed upon extrusion, tends to improve the in-plane uniformity of the adhesive strength, and tends to improve the appearance of a film by decreasing the amount of unmelted products.

<Condition (4)>

The percentage of the total mass of the thermoplastic elastomer(s) based on the total mass of the composition F is preferably 20% by mass or more and less than 40% by mass.

The lower limit of the percentage is more preferably 23% by mass or more, further preferably 26% by mass or more, and furthermore preferably 28% by mass or more. The lower limit of the percentage in the range renders flowability close to the flowability of the composition C mentioned above. Therefore, these two types of particulate compositions, when together extruded by using an extruder, are easily given force evenly. As a result, the composition F tends to be uniformly mixed with the composition C. This tends to improve the adhesive strength of a pressure-sensitive adhesive to be formed upon extrusion, tends to improve the in-plane uniformity of the adhesive strength, and tends to improve the appearance of a film by decreasing the amount of unmelted products.

The upper limit of the percentage is more preferably 38% by mass or less, further preferably 36% by mass or less, and furthermore preferably 34% by mass or less. The upper limit of the percentage in the range tends to weaken the adhesive strength of the composition F and renders the composition F difficult to block and easy to handle.

The percentage of the total mass of the tackifier(s) based on the total mass of the composition F is preferably more than 60% by mass and 80% by mass or less.

The lower limit value of the percentage is more preferably 62% by mass or more, further preferably 64% by mass or more, and furthermore preferably 66% by mass or more. The lower limit of the percentage in the range tends to weaken the adhesive strength of the composition F and renders the composition F difficult to block and easy to handle.

The upper limit of the percentage is more preferably 78% by mass or less, further preferably 76% by mass or less, and furthermore preferably 74% by mass or less.

The upper limit of the percentage in the range renders flowability close to the flowability of the composition C mentioned above. Therefore, these two types of particulate compositions, when together extruded by using an extruder, are easily given force evenly. As a result, the composition F tends to be uniformly mixed with the composition C. This tends to improve the adhesive strength of a pressure-sensitive adhesive to be formed upon extrusion, tends to improve the in-plane uniformity of the adhesive strength, and tends to improve the appearance of a film by decreasing the amount of unmelted products.

In the composition F, one of the thermoplastic elastomers may be used singly, or two or more thereof may be used in combination. Also, one of the tackifiers may be used singly, or two or more thereof may be used in combination. The composition F may appropriately include components other than those described above. The components other than those described above may be other components listed in the section about the material for a pressure-sensitive adhesive according to the present invention mentioned above.

In the material for a pressure-sensitive adhesive according to the present invention, from the viewpoint of being difficult to block and excellent in handleability, it is preferable for the adhesive strength of the composition C and the composition F that these compositions have low tack performance.

The adhesive strength is preferably 15.0 N/10 mm or less, more preferably 14.0 N/10 mm or less, further preferably 13.0 N/10 mm or less, furthermore preferably 12.0 N/10 mm or less, particularly preferably 10.0 N/10 mm or less, further preferably 5.0 N/10 mm or less, and still further preferably 1.0 N/10 mm or less in the case that the adhesive strength is measured in accordance with "Method for measuring adhesive strength (Thermoplastic elastomer, each composition and each dry-blend composition)" described later.

From a similar viewpoint, the tackiness is preferably 10.0 N/5 mmΦ or less, more preferably 8.0 N/5 mmΦ or less, further preferably 6.0 N/5 mmΦ or less, furthermore preferably 5.0 N/5 mmΦ or less, still further preferably 3.0 N/5 mmΦ or less, and particularly preferably 1.0 N/5 mmΦ or less in the case that the adhesive strength is measured in accordance with "Method for measuring tackiness (Thermoplastic elastomer, each composition and each dry-blend composition)" described later.

The material for a pressure-sensitive adhesive according to the present invention may have the composition C and the composition F in a mixed form or an isolated form.

For example, the composition C and the composition F belong to the mixed form when together packed in a bag, and belong to the isolated form when individually packed in bags as one set.

The composition C and the composition F are suitable for distribution because the composition C and the composition F are difficult to block and easy to handle before production of a pressure-sensitive adhesive from the material for a pressure-sensitive adhesive owing to small adhesive strength of each individual.

(ratio of amount of composition C to be blended to amount of composition F to be blended)

It is preferable for the material for a pressure-sensitive adhesive according to the present invention that the composition C and the composition F be dryblended before an extrusion step described later to prepare a dry blend (dry-blend composition). This provides a much more homogeneous pressure-sensitive adhesive.

The ratio of blending mass of the composition C to the blending mass of the composition F (the blending mass of the composition C / the blending mass of the composition E) in the material for a pressure-sensitive adhesive according to the present invention (e.g., dry blend) is not limited, but is preferably 0.45 or more and 2.00 or less, more preferably 0.50 or more and 1.90 or less, further preferably 0.55 or more and 1.80 or less, and furthermore preferably 0.60 or more and 1.70 or less.

The ratio of mass (composition C/composition F) in the range tends to facilitate uniformizing the composition C and the composition F at the time of extrusion molding and therefore tends to provide a material for a pressure-sensitive adhesive much more easily exhibiting excellent adhesive strength.

From the viewpoint of suppressing sorting at the time of extrusion molding while facilitating forming a highly homogeneous pressure-sensitive adhesive, each of the composition C and the composition F in the material for a pressure-sensitive adhesive according to the present invention (e.g., dry blend) is in a particulate form.

From the viewpoint of suppressing sorting at the time of extrusion molding while facilitating forming a highly homogeneous pressure-sensitive adhesive in preparing a pressure-sensitive adhesive, it is preferable that the material for a pressure-sensitive adhesive according to the present invention (e.g., dry blend) satisfy the following <condition (5)>.

From the viewpoint of forming a highly homogeneous pressure-sensitive adhesive, it is preferable that the material for a pressure-sensitive adhesive according to the present invention satisfy the following <condition (6)>.

<Condition (5)>

The ratio of average particle mass $W_c$ of the composition C to average particle mass $W_f$ of the composition F ($W_c/W_f$) is preferably 0.4 or more and 2.5 or less, more preferably 0.4 or more and 2.3 or less, further preferably 0.5 or more and 2.0 or less, and furthermore preferably 0.6 or more and 1.5 or less.

<Condition (6)>

The ratio of average particle major axis $L_c$ of the composition C to average particle major axis $L_f$ of the composition F is preferably 0.6 or more and 1.4 or less, more preferably 0.7 or more and 1.3 or less, further preferably 0.8 or more and 1.2 or less, and furthermore preferably 0.9 or more and 1.1 or less.

The ratio of average particle minor axis $l_c$ of the composition C to average particle minor axis $l_f$ of the composition F is preferably 0.6 or more and 1.4 or less, more preferably 0.7 or more and 1.3 or less, further preferably 0.8 or more and 1.2 or less, and furthermore preferably 0.9 or more and 1.1 or less.

The average particle mass, average particle major axis, and average particle minor axis of each composition can be measured by using methods described later in Examples.

The percentage of the total mass of the thermoplastic elastomer(s) in the material for a pressure-sensitive adhesive according to the present invention (e.g., dry blend) is preferably 30% by mass or more, more preferably 35% by mass or more, further preferably 40% by mass or more, and furthermore preferably 45% by mass or more.

The percentage of the total mass of the thermoplastic elastomer(s) in the material for a pressure-sensitive adhesive according to the present invention in the range tends to provide a material for a pressure-sensitive adhesive much more easily exhibiting excellent adhesive strength, tackiness, and retention strength.

From the viewpoint of tending to provide a material for a pressure-sensitive adhesive easily exhibiting much higher adhesive strength, the percentage of the total mass of the thermoplastic elastomer(s) (including the thermoplastic elastomer(s) in the composition C and the composition F) in the material for a pressure-sensitive adhesive (e.g., dry blend) is preferably 80% by mass or less, more preferably 75% by mass or less, further preferably 70% by mass or less, and still further preferably 65% by mass or less.

From the viewpoint that the material for a pressure-sensitive adhesive according to the present invention tends to provide a material for a pressure-sensitive adhesive much more easily exhibiting excellent adhesive strength, tackiness, and retention strength, the percentage of the total mass of the tackifier(s) in the material for a pressure-sensitive adhesive(e.g., dry blend) is preferably 70% by mass or less, more preferably 65% by mass or less, further preferably 60% by mass or less, and still further preferably 55% by mass or less.

From the viewpoint of tending to provide a material for a pressure-sensitive adhesive (e.g., dry blend) much more easily exhibiting excellent adhesive strength, the percentage of the total mass of the tackifier(s) in the material for a pressure-sensitive adhesive (e.g., dry blend) is preferably 20% by mass or more, more preferably 25% by mass or more, further preferably 30% by mass or more, and furthermore preferably 35% by mass or more.

(Other components)

The material for a pressure-sensitive adhesive according to the present invention may include an optional component without inhibiting the effects of the present invention.

The optional component is not limited, and examples thereof include antioxidants, optional polymers, waxes, stabilizers such as light stabilizers, and other additives.

<Antioxidant>

Examples of the antioxidant include, but are not limited to, hindered phenol antioxidants such as 2,6-dit-butyl-4-methylphenol, N-octadecyl-3-(4'-hydroxy-3',5'-di-t-butylphenyl)propionate, 2,2'-methylenebis(4-methyl-6-t-butylphenol), 2,2'-methylenebis(4-ethyl-6-t-butylphenol), 2,4-bis[(octylthio)methyl]-0-cresol, 2-t-butyl-6-(3-t-butyl-2-hydroxy-5-methylbenzyl)-4-methylphenylacrylate, 2,4-di-t-amyl-6-[1-(3,5-di-t-amyl-2-hydroxyphenyl)ethyl]phenylacrylate and 2-[1-(2-hydroxy-3,5-di-tert-pentylphenyl)]acrylate; sulfur-containing antioxidants such as dilauryl thiodipropionate, laurylstearyl thiodipropionate pentaerythritol-tetrakis($\beta$-laurylthiopropionate); and phosphorous-containing antioxidants such as tris(nonylphenyl)phosphite and tris(2,4-di-t-butylphenyl)phosphite.

Specific examples of the commercial product of the antioxidant include, for example, SUMILIZER GM (trade name), SUMILIZER TPD (trade name) and SUMILIZER TPS (trade name) manufactured by Sumitomo Chemical Co., Ltd.; IRGANOX 1010 (trade name), IRGANOX HP2225FF (trade name), IRGAFOS 168 (trade name) and IRGANOX 1520 (trade name) manufactured by Ciba Specialty Chemicals Inc.; and JF77 (trade name) manufactured by Johoku Chemical Co., Ltd. One of these antioxidants may be used singly, or two or more thereof may be used in combination.

<Optional polymer>

Examples of the optional polymer include, but are not limited to, polyolefin copolymers, vinyl aromatic copolymers and other rubbers.

Examples of the polyolefin copolymer include, but are not limited to, atactic polypropylenes, ethylene-ethyl acrylate copolymers and $\alpha$-olefin polymers.

Examples of the vinyl aromatic copolymer include, but are not limited to, styrene-ethylene block copolymers, styrene-butadiene block copolymers, styrene-propylene block copolymers, styrene-isoprene block copolymers, styrene-butadiene-isoprene block copolymers, styrene-butadiene/isoprene block copolymers, hydrogenated styrene-butadiene block copolymers, hydrogenated styrene-isoprene block copolymers, hydrogenated styrene-butadiene-isoprene block copolymers and hydrogenated styrene-butadiene/isoprene block copolymers. The vinyl aromatic copolymer may be a vinyl aromatic thermoplastic resin or a vinyl aromatic elastomer.

Examples of the other rubber include, but are not limited to, natural rubbers; and synthetic rubbers such as isoprene-isobutylene rubbers, polyisoprene rubbers, polybutadiene rubbers, styrene-butadiene rubbers, styrene-isoprene rubbers, propylene-butylene rubbers, ethylene-propylene rubbers, chloroprene rubbers, acrylic rubbers, isoprene-isobutylene rubbers and polypentenamer rubbers.

Now, preferred optional polymers for various applications and performances will be described more specifically.

<Hydrogenated vinyl aromatic copolymer>

In the case that, for example, reduction of an adhesive residue when the material for a pressure-sensitive adhesive according to the present invention is peeled off, inhibition of change in adhesion strength over time or creep characteristics (smaller value is better), heat resistance, or light resistance is required, a hydrogenated vinyl aromatic copolymer may be suitably used.

Examples of the hydrogenated vinyl aromatic copolymer include, but are not limited to, hydrogenated styrene-butadiene block copolymers having an S-EB-S (S: polystyrene block, EB: ethylene/butylene copolymer block) structure or the like; hydrogenated styrene-isoprene block copolymers having an S-EP-S (S: polystyrene block, EP: ethylene/propylene copolymer block) structure or the like; and hydrogenated styrene-butadiene-isoprene block copolymers having an S-E-EP-S (S: polystyrene block, E: ethylene block, EP: ethylene/propylene copolymer block) structure or the like.

The content of styrene in the hydrogenated vinyl aromatic copolymer is preferably 10% by mass to 45% by mass based on 100% by mass of the hydrogenated vinyl aromatic copolymer. The percentage of hydrogenation of unsaturated group in the conjugated diene monomer unit in the hydrogenated vinyl aromatic copolymer is preferably 30% by mole or more, more preferably 50% by mole or more, further preferably 70% by mole or more, and still further preferably 85% by mole or more.

<Isoprene block copolymer>

In the case that, for example, high adhesiveness or inhibition of gelling is required for the material for a pressure-sensitive adhesive according to the present invention, an isoprene block copolymer, which has an isoprene monomer unit, may be suitably used.

Examples of the isoprene block copolymer include, but are not limited to, styrene-isoprene block copolymers having a $(S-I)_n$, $(S-I)_n$-S or $(S-I)_n$Y (S: polystyrene block, I: polyisoprene block) structure or the like; and styrene-butadiene-isoprene block copolymers having a $(SI-B)_n$, $(S-I-B)_n$-S, $(S-I-B)_n$Y (S: polystyrene block, I: polyisoprene block, B: polybutadiene block, Y: residue of polyfunctional coupling agent or residue of polymerization initiator; n is an integer of 1 or more, preferably an integer of 1 to 5), or, $(S-I/B)_n$, $(S-I/B)_n$-S, $(S-I/B)_n$Y (S: polystyrene block, I/B: isoprene/butadiene copolymer block, Y: residue of coupling agent or residue of polymerization initiator; n is an integer of 1 or more, preferably an integer of 1 to 5) structure or the like. It is more preferable that these have a radial structure.

<Ionomer>

In the case that, for example, high coatability at low temperatures, creep characteristics (smaller value is better), and high strength or high elongation is required for the material for a pressure-sensitive adhesive according to the present invention, a polymer in an ionomer state may be used.

The ionomer is not limited, but polymers or copolymers containing a carboxylate, sulfonate or phosphonate neutralized or partially neutralized by a metal ion are preferred.

The content of the ionomer is preferably 5% by mass or less based on the total amount of the material for a pressure-sensitive adhesive.

<Polyolefin copolymer>

In the case that improvement in storage stability at high temperatures and high elongation or reduction in the amount of a tackifier in the material for a pressure-sensitive adhesive is required for the material for a pressure-sensitive adhesive according to the present invention, a polyolefin copolymer may be used.

Examples of the polyolefin copolymer include, but are not limited to, but copolymers of an α-olefin and an olefin, and propylene homopolymers are preferred. The melting point of these polymer (conditions: 5°C/min in DSC measurement) is preferably 110°C or lower, more preferably 100°C or lower, and further preferably 60°C to 90°C. These polymers may be a thermoplastic resin or an elastomer. The molecular weight distribution of these polymers is preferably 1 to 4, and more preferably 1 to 3. From the viewpoint of processability, it is more preferred to use two or more of copolymers obtained by using an α-olefin, or propylene homopolymers in combination. Specifically, it is preferred to use a polymer having a weight average molecular weight of 30000 to 60000 and a polymer having a weight average molecular weight of 60000 to 90000 in combination, and it is more preferred to use a polymer having a weight average molecular weight of 35000 to 55000 and a polymer having a weight average molecular weight of 60000 to 80000 in combination.

<Conjugated diene rubber>

In the material for a pressure-sensitive adhesive according to the present invention, a conjugated diene rubber may be suitably used as the optional polymer.

Examples of the conjugated diene rubber include, but are not limited to, isoprene-isobutylene rubbers, polyisoprene rubbers, polybutadiene rubbers, styrene-butadiene rubbers, styrene-isoprene rubbers and propylene-butylene rubbers.

Among them, polyisoprene rubbers are preferred from the viewpoint of a high effect.

The content of the conjugated diene rubber is preferably 0% by mass or more and 25% by mass or less, more preferably 5% by mass or more and 20% by mass or less, and further preferably 5% by mass or more and 15% by mass or less based on the total amount of the material for a pressure-sensitive adhesive.

<Olefin elastomer>

In the case that, for example, elongation is required for the material for a pressure-sensitive adhesive, it is preferred to use an olefin elastomer as the optional polymer.

Examples of the olefin elastomer include, but are not limited to, but preferably an olefin elastomer having Tg of -10°C or lower, for example. From the viewpoint of creep performance (smaller value is better), olefin elastomers having a block are more preferred.

<Wax>

The material for a pressure-sensitive adhesive may contain a wax, as necessary.

Examples of the wax include, but are not limited to, paraffin waxes, microcrystalline waxes and low-molecular weight polyethylene waxes.

In the case that low melt viscosity is required for the material for a pressure-sensitive adhesive, it is preferred to use at least one wax selected from a paraffin wax, a microcrystalline wax and Fischer-Tropsch wax.

The content of the wax is preferably 2 to 10% by mass, and more preferably 5 to 10% by mass.

The melting point of the wax is preferably 50°C to 110°C, more preferably 65°C to 110°C, further preferably 70°C to 110°C, and still further preferably 75°C to 110°C. The softening point of a tackifier to be then used in combination is preferably 70°C or higher, and more preferably 80°C or higher. The G' (measurement conditions: 25°C, 10 rad/s) of a material for a pressure-sensitive adhesive to be then obtained is preferably 1 MPa or less. The crystallization temperature of the material for a pressure-sensitive adhesive is preferably 7°C or lower.

<Light stabilizer>

The material for a pressure-sensitive adhesive may contain a light stabilizer, as necessary.

Examples of the light stabilizer include, but are not limited to, benzotriazole ultraviolet absorbers such as 2-(2'-hydroxy-5'-methylphenyl)benzotriazole, 2-(2'-hydroxy-3',5'-t-butylphenyl)benzotriazole and 2-(2'-hydroxy-3',5'-di-t-butylphenyl)-5-chlorobenzotriazole; benzophenone ultraviolet absorbers such as 2-hydroxy-4-methoxybenzophenone; and hindered amine light stabilizers.

<Fine particle filler>

The material for a pressure-sensitive adhesive according to the present invention may be further supplemented with a fine particle filler as another additive.

The fine particle filler is not limited as long as the fine particle filler is one commonly used. The fine particle filler is not limited, and examples thereof include mica, calcium carbonate, kaolin, talc, titanium oxide, diatomaceous earth, urea resins, styrene beads, calcined clay and starch. The shape is preferably spherical, and the dimension (the diameter for a spherical shape) is not limited.

As the components other than (Other components) described above, a softener or the like can be used.

The softener refers to a substance having a function to lower the hardness of a material for a pressure-sensitive adhesive and lower the viscosity.

The softener is not limited, and examples thereof include oils; plasticizers; synthetic liquid oligomers; and mixtures thereof.

From the viewpoint of lowering of viscosity, enhancement of tackiness and lowering of hardness for the material for a pressure-sensitive adhesive, it is preferred to use oils.

Examples of the oil include, but are not limited to, known paraffin process oils, naphthene process oils and aromatic process oils; and mixed oils thereof.

One of the softeners may be used singly, or two or more thereof may be used in combination.

In the case of applications to be used in food packaging materials, from the viewpoint of preventing the softener from being transferred to food due to the bleedout of the softener, the content of the softener is preferably 8% by mass or less, more preferably 5% by mass or less, and further preferably 3% by mass or less based on the total amount of the material for a pressure-sensitive adhesive, and further preferably, the material for a pressure-sensitive adhesive substantially includes no softener. This phrase "substantially include no" means that even an inevitable amount of the softener to be mixed into production plants, materials, or the like is not excluded.

[Pressure-sensitive adhesive]

A pressure-sensitive adhesive according to the present invention includes the material for a pressure-sensitive adhesive according to the present invention.

In the present specification, the "pressure-sensitive adhesive" refers to an adhesive that exerts adhesion by merely applying pressure thereto at a normal temperature for a short time.

The form of the "pressure-sensitive adhesive" is not limited and may be a layered form (hereinafter, also referred to as "pressure-sensitive adhesive layer").

The adhesive strength can be measured by using "Method for measuring adhesive strength (Thermoplastic elastomer, each composition and each dry-blend composition)" or "(Adhesive strength of three-layer film)" described later in Examples.

It is preferable that the pressure-sensitive adhesive according to the present invention exhibit an adhesive strength of 1.5 N/10 mm or larger measured by the method for measuring adhesive strength (three-layer film).

The adhesive strength in the range can be suitably used in applications, typified by a resealable package, which require large adhesive strength.

From a similar viewpoint, the adhesive strength of the pressure-sensitive adhesive according to the present invention is more preferably 2.0 N/10 mm or more, further preferably 2.2 N/10 mm or more, furthermore preferably 2.4 N/10 mm or more, still further preferably 2.6 N/10 mm or more, further preferably 2.8 N/10 mm or more, furthermore preferably 3.0 N/10 mm or more, still further preferably 3.2 N/10 mm or more, further preferably 3.4 N/10 mm or more, furthermore preferably 3.6 N/10 mm or more, still further preferably 3.8 N/10 mm or more, further preferably 4.0 N/10 mm or more, and furthermore preferably 4.2 N/10 mm or more.

[Multilayered film]

A multilayered film according to the present invention includes the pressure-sensitive adhesive according to the present invention.

The multilayered film according to the present invention is obtained as a multilayered film configured to include a pressure-sensitive adhesive layer consisting of the pressure-sensitive adhesive according to the present invention, by coextruding the material for a pressure-sensitive adhesive according to the present invention and other materials.

The multilayered film according to the present invention includes two or more layers, preferably three or more layers. It is more preferable that the pressure-sensitive adhesive layer according to the present invention be included in a layer other than an outermost layer.

This tends to suppress blocking at the time of film take-up and further facilitate handling.

From the viewpoint of exhibiting high adhesive strength, the thickness of the pressure-sensitive adhesive layer in the multilayered film according to the present invention is preferably 5 $\mu$m or larger, more preferably 8 $\mu$m or larger, further preferably 10 $\mu$m or larger, furthermore preferably 12 $\mu$m or larger, and still further preferably 14 $\mu$m or larger. From the viewpoint of economic efficiency, the thickness is preferably 50 $\mu$m or smaller, more preferably 40 $\mu$m or smaller, further preferably 30 $\mu$m or smaller, and furthermore preferably 25 $\mu$m or smaller.

[Package]

A package according to the present invention includes the multilayered film according to the present invention.

Use of such a multilayered film according to the present invention as a lid material for a packaging material to obtain a package enables to provide a package from which the lid material is to be peeled at the interface between the pressure-sensitive adhesive layer and another material layer or the inside of the pressure-sensitive adhesive layer. Such a package can be a resealable package exhibiting large adhesive strength because the pressure-sensitive adhesive layer is exposed to the outermost surface after peeling of the lid material from the package.

A package according to the present invention includes the multilayered film according to the present invention. The package according to the present invention can be produced by heat-sealing the multilayered film according to the present invention mentioned above with a main body part of the package.

[Method for producing material for pressure-sensitive adhesive]

The material for a pressure-sensitive adhesive according to the present invention can be obtained by mixing the composition C and the composition F mentioned above.

The composition C and the composition F are obtained by mixing the thermoplastic elastomers and the tackifiers mentioned above at optional blending ratios.

The thermoplastic elastomers constituting the composition C and the composition F can be produced by the following method.

(Method for producing thermoplastic elastomer A or D constituting composition C or F)

<Polymerization step and coupling step>

A method for producing the thermoplastic elastomer A or D is not limited, and known methods can be used.

Hereinafter, a method for producing a thermoplastic elastomer including a polymer block primarily including a vinyl aromatic monomer unit and a polymer block primarily including a conjugated diene monomer unit will be taken as an example.

Examples of the method for producing the thermoplastic elastomer according to the present invention include a method including: a step of polymerizing including copolymerizing a vinyl aromatic hydrocarbon compound such as styrene and a conjugated diene compound such as butadiene in an inert hydrocarbon solvent with an organic lithium compound as a polymerization initiator to obtain a block copolymer; and a step of coupling including reacting the block copolymer obtained with a coupling agent.

In this case, the coupled block copolymer is any of the block copolymer (D-1), (D-2) and (D-3) mentioned above, and the uncoupled block copolymer is the block copolymer (C) having one polymer block (A) primarily including a vinyl aromatic monomer unit, for example.

Here, controlling the amount of the coupling agent to be added in this coupling reaction enables to adjust the contents of the block copolymer (C) and the block copolymer (D-1), (D-2) and (D-3) in the above predetermined ranges.

Alternatively, such thermoplastic elastomer A or D can be obtained by using a method in which the block copolymer (C) and the block copolymer (D-1), (D-2) and/or (D-3) are separately polymerized in advance and thereafter mixed.

The weight average molecular weight of each of the block copolymers can be adjusted by controlling the amount of an initiator such as an organic lithium compound. After the completion of a polymerization reaction, a coupling reaction is performed and the active species are deactivated by adding water, an alcohol, an acid or the like; and the polymerization solvent is separated by performing, for example, steam stripping; and thereafter the block copolymers (C), (D-1), (D-2) and (D-3) can be obtained by drying the resultant.

Examples of the method for polymerizing the block copolymers include, but are not limited to, coordination polymerization, anionic polymerization and cationic polymerization.

Among them, anionic polymerization is preferred from the viewpoint of easiness in controlling the structure.

For the method for producing the block copolymer components through anionic polymerization can be used known methods without any limitation, and examples thereof include methods described in Japanese Patent Publication No. 36-19286, Japanese Patent Publication No. 43-17979, Japanese Patent Publication No. 46-32415, Japanese Patent Publication No. 49-36975, Japanese Patent Publication No. 48-2423, Japanese Patent Publication No. 48-4106, Japanese Patent Publication No. 56-28925, Japanese Patent Laid-Open No. 59-166518, and Japanese Patent Laid-Open No. 60-186577.

Examples of the inert hydrocarbon solvent to be used in the step of polymerizing the block copolymers include, but are not limited to, hydrocarbon solvents of an aliphatic hydrocarbon such as butane, pentane, hexane, isopentane, heptane, octane and isooctane; an alicyclic hydrocarbon such as cyclopentane, methylcyclopentane, cyclohexane, methylcyclohexane and ethylcyclohexane; and an aromatic hydrocarbon such as benzene, toluene, ethylbenzene and xylene.

One of them may be used singly, or two or more thereof may be used in a mixture.

The organic lithium compound to be used for a polymerization initiator in the step of polymerizing the block copolymers is not limited, and known compounds may be used. Examples thereof include ethyllithium, propyllithium, N-butyllithium, sec-butyllithium, tert-butyllithium, phenyllithium, propenyllithium and hexyllithium. In particular, n-butyllithium and sec-butyllithium are preferred.

One of the organic lithium compounds may be used singly, or a mixture of two or more thereof may be used.

By using the above-described method, the block copolymers contained in the thermoplastic elastomer can be each obtained as a block copolymer represented by any one of the following formulas:

$(A-B)_N$, $(A-B)_N X$, $(A-B)_N A$, $[(A-B)_N]_m$, $(A-B)_N AX$, $(B-A)_N X$, $(B-A)_N B$, $(B-A)_N BX[(A-B)_N]_m X$, $[(B-A)_N]_m X$, $[(A-B)_N A]_m X$, $[(B-A)_N B]_m X$

(in which, A denotes a polymer block (A); B denotes a polymer block (B); X denotes a residue of a coupling agent or a residue of a polymerization initiator; N is an integer of 1 or more, and preferably an integer of 1 to 5; and m is 2 to 8, preferably 2 to 6, and more preferably an integer of 2 to 4.).

Among them, it is preferred to produce a block copolymer (C): formula (A-B) and a multibranched block copolymer (D-1), (D-2), and (D-3): formula $(A-B)_m X$ through the above coupling reaction.

For the coupling agent to obtain a multibranched block copolymer may be used known coupling agents.

Examples of the bifunctional coupling agent include, but are not limited to, bifunctional halogenated silanes such as dichlorosilane, monomethyldichlorosilane and dimethyldichlorosilane; bifunctional alkoxysilanes such as diphenyldimethoxysilane, diphenyldiethoxysilane, dimethyldimethoxysilane and dimethyldiethoxysilane; bifunctional halogenated alkanes such as dichloroethane, dibromoethane, methylene chloride and dibromomethane; bifunctional halogenated tins such as dichlorotin, monomethyldichlorotin, dimethyldichlorotin, monoethyldichlorotin, diethyldichlorotin, monobutyldichlorotin and dibutyldichlorotin; dibromobenzene, benzoic acid, CO, and 2-chloropropene.

Examples of the trifunctional coupling agent include, but are not limited to, trifunctional halogenated alkanes such as trichloroethane and trichloropropane; trifunctional halogenated silanes such as methyltrichlorosilane and ethyltrichlorosilane; and trifunctional alkoxysinales such as methyltrimethoxysilane, phenyltrimethoxysilane and phenyltriethoxysilane.

Examples of the tetrafunctional coupling agent include, but are not limited to, tetrafunctional halogenated alkanes such as carbon tetrachloride, carbon tetrabromide and tetrachloroethane; tetrafunctional halogenated silanes such as tetrachlorosilane and tetrabromosilane; tetrafunctional alkoxysilanes such as tetramethoxysilane and tetraethoxysilane; and tetrafunctional tin compounds such as tetrachlorotin, tetrabromotin and tetrabutyltin.

Examples of the coupling agent with 5 or more functionalities include, but are not limited to, 1,1,1,2,2-pentachloroethane, perchloroethane, pentachlorobenzene, perchlorobenzene, octabromodiphenyl ether and decabromodiphenyl ether.

In addition, epoxidized soybean oils, di- to hexafunctional epoxy group-containing compounds, carboxylates and polyvinyl compounds such as divinyl benzene may be used.

One of the coupling agents may be used singly, or two or more thereof may be used in combination.

Among above compounds, tetramethoxysilane and tetraethoxysilane are particularly preferred.

The ratios of an area for the block copolymers (D-1), (D-2), and (D-3) in a GPC elution curve can be controlled by adjusting the amount of a coupling agent to be added, the temperature and the duration in a coupling reaction, as described above.

Specifically, examples of the method for adjustment in the case that the coupling agent is an alkoxysilane compound include a method in which the duration from the time at which the reaction temperature reaches to the maximum temperature to the time at which the coupling agent is added is adjusted to 1 to 30 minutes, the reaction duration for the coupling agent is adjusted to 1 to 60 minutes, the reaction temperature is adjusted to 55 to 100°C, and the amount of the coupling agent to be added is adjusted to 0.025 to 0.30 in mole ratio to the total amount by mole of a polymerization initiator.

Examples of the method for adjustment in the case that the coupling agent is a compound other than alkoxysilane compounds include a method in which the duration from the time at which the reaction temperature reaches to the maximum temperature to the time at which the coupling agent is added is adjusted to 1 to 30 minutes, the reaction duration for the coupling agent is adjusted to 1 to 35 minutes, the reaction temperature is adjusted to 50 to 95°C, and the amount of the coupling agent to be added is adjusted to 0.025 to 0.20 in mole ratio to the total amount by mole of a polymerization initiator.

In addition, a deactivator may be added in the course of polymerizing the block copolymer (C). In this case, a component (C)' with a relatively low molecular weight is generated. Specifically, after polymerizing the vinyl aromatic monomer unit, a deactivator may be added at an arbitrary timing during polymerizing the conjugated diene monomer unit in an amount to deactivates 50% by mass or less of the conjugated diene monomer unit, without completely deactivating, to generate a diblock copolymer (C)' represented by the general formula (A-B') (in which B' denotes a polymer block (B) obtained by the deactivation during the polymerization). The content of the diblock copolymer represented by the general formula (A-B') is preferably 20% by mass or less, more preferably 15% by mass or less, and further preferably 10% by mass or less based on the total amount of the block copolymer composition. The diblock copolymer (C)' represented by the general formula (A-B') contained tends to further enhance the adhesive strength and retention strength.

<Hydrogenation reaction>

In the case that a part or all of the unsaturated double bonds derived from the conjugated diene compound in the block copolymer are hydrogenated, the method for hydrogenation is not limited, and hydrogenation may be performed by using a known method with a hydrogenation catalyst.

The hydrogenation catalyst is not limited, and known catalysts may be used. Examples of the hydrogenation catalyst to be used include supported heterogeneous hydrogenation catalysts in which a metal such as Ni, Pt, Pd and Ru is supported on carbon, silica, alumina, diatomaceous earth or the like; what is called Ziegler-type hydrogenation catalysts with a transition metal salt such as an organic salt or acetylacetone salt of Ni, Co, Fe, Cr or the like, and a reductant such as an organic aluminum; homogenous hydrogenation catalysts such as what is called an organic metal complex such as an organic metal compound of Ti, Ru, Rh, Zr or the like.

Specifically may be used hydrogenation catalysts described in Japanese Patent Publication No. 42-8704, Japanese Patent Publication No. 43-6636, Japanese Patent Publication No. 63-4841, Japanese Patent Publication No. 1-37970, Japanese Patent Publication No. 1-53851 and Japanese Patent Publication No. 2-9041.

Among them, suitable examples of the hydrogenation catalyst include titanocene compounds, reductive organic metal compounds and mixtures thereof.

The titanocene compound is not limited, and examples thereof include compounds described in Japanese Patent Laid-Open No. 8-109219. Specific examples thereof include compounds having at least one or more ligands with a (substituted) cyclopentadienyl skeleton such as biscyclopentadienyltitanium dichloride and monopentamethylcyclopentadienyltitanium trichloride, an indenyl skeleton or a fluorenyl skeleton.

The reductive organic metal compound is not limited, and examples thereof include organic alkali metal compounds such as organic lithiums, organic magnesium compounds, organic aluminum compounds, organic boron compounds and organic zinc compounds.

The hydrogenation reaction temperature is preferably 0 to 200°C, and more preferably 30 to 150°C.

The pressure of hydrogen to be used in the hydrogenation reaction is preferably 0.1 to 15 MPa, more preferably 0.2 to 10 MPa, and further preferably 0.3 to 5 MPa.

The hydrogenation reaction duration is preferably 3 minutes to 10 hours, and more preferably 10 minutes to 5 hours.

The hydrogenation reaction may be performed in any of a batch process, a continuous process, and a combination thereof.

The block copolymer of interest can be obtained by removing the catalyst residue from the block copolymer solution resulting from the hydrogenation reaction and then separating the solution, as necessary. The method for separating the solvent is not limited, and examples thereof include a method in which a polar solvent which serves as a poor solvent to the hydrogenated block copolymer, such as acetone and an alcohol, is added to the reaction solution after the hydrogenation to precipitate the polymer for recovery; a method in which the reaction solution after the hydrogenation is charged into a hot water under stirring and the solvent is removed by using steam stripping for recovery; and a method in which the reaction solution after the hydrogenation is heated to distil away the solvent.

The amount (% by mass) of the polymer block (A) primarily including a vinyl aromatic monomer unit based on the total amount (100% by mass) of the vinyl aromatic monomer unit used for polymerizing the block copolymers, i.e., the block content, is preferably 90% by mass or more, more preferably 95% by mass or more, and further preferably 97% by mass or more.

The block content in the range tends to provide a block copolymer excellent in finishing characteristics, and the material for a pressure-sensitive adhesive according to the present invention containing the block copolymer tends to be excellent in adhesive strength and retention strength.

The amount of the polymer block primarily including a vinyl aromatic monomer unit can be calculated as follows: the block copolymer is dissolved in chloroform and an osmic acid/ tert-butyl hydroperoxide solution is added thereto to break the double bonds in the butadiene component; next, methanol is added thereto, the resultant is filtrated, and the residue is dissolved in chloroform; and the content of the block styrene is calculated from the peak strength (absorption wave length: 262 nm) of the solution obtained with an ultraviolet spectrophotometer.

A step of demineralizing metals derived from the polymerization initiator or the like may be employed, as necessary, in the method for producing the thermoplastic elastomer A or D to be used in the composition C or the composition F. In addition, a step of adding an antioxidant, a neutralizer, a surfactant or the like may be employed, as necessary, in the method for producing the thermoplastic elastomer A or D.

The antioxidant is not limited, and examples thereof include hindered phenol compounds, phosphorous compounds and sulfur compounds, as described later.

Examples of the neutralizer include, but are not limited to, various metal salts of stearic acid, hydrotalcite and benzoic acid.

Examples of the surfactant include, but are not limited to, anionic surfactants, nonionic surfactants and cationic surfactants. Examples of the anionic surfactant include, but are not limited to, fatty acid salts, alkylsulfates and alkylarylsulfonates. Examples of the nonionic surfactant include, but are not limited to, polyoxyethylene alkyl ethers and polyoxyethylene alkylaryl ethers. Examples of the cationic surfactant include, but are not limited to, alkylamine salts and quaternary ammonium salts.

The thermoplastic elastomer, which can be produced as described above, may contain what is called a modified block copolymer in which a polar group-containing functional group containing an atom selected from nitrogen, oxygen, silicon, phosphorus, sulfur and tin is bonding to the block copolymer, or a modified block copolymer the block copolymer component of which has been modified with a modifying agent such as maleic anhydride.

Such a modified block copolymer can be obtained by performing a known modification reaction for the block copolymers obtained by the above-described method, for example.

The method for imparting these functional groups is not limited, and examples thereof include a method in which a functional group is added to a polymer by using a compound having a functional group for a polymerization initiator, a monomer, a coupling agent or a terminator.

For the polymerization initiator having a functional group are preferred polymerization initiators containing an N group, and examples thereof include dioctylaminolithium, di-2-ethylhexylaminolithium, ethylbenzylaminolithium, (3-(dibutylamino)-propyl)lithium and piperidinolithium. Examples of the monomer having a functional group include compounds in which a hydroxy group, an acid anhydride group, an epoxy group, an amino group, an amide group, a silanol group or an alkoxysilane group is contained in the above-described monomer to be used for polymerization. Among them, monomers containing an N group are preferred, and examples thereof include N,N-dimethylvinylbenzylamine, N,N-diethylvinylbenzylamine, N,N-dipropylvinylbenzylamine, N,N-dibutylvinylbenzylamine, N,N-diphenylvinylbenzylamine, 2-dimethylaminoethylstyrene, 2-diethylaminoethylstyrene, 2-bis(trimethylsilyl)aminoethylstyrene, 1-(4-N,N-dimethylaminophenyl)-1-phenylethylene, N,N-dimethyl-2-(4-vinylbenzyloxy)ethylamine, 4-(2-pyrrolidinoethyl)styrene, 4-(2-piperidinoethyl)styrene, 4-(2-hexamethyleneiminoethyl)styrene, 4-(2-morpholinoethyl)styrene, 4-(2-thiazinoethyl)styrene, 4-(2-N-methylpiperazinoethyl)styrene, 1-((4-vinylphenoxy)methyl)pyrrolidine, and 1-(4-vinylbenzyloxymethyl)pyrrolidine.

Examples of the coupling agent and terminator having a functional group include compounds in which a hydroxy group, an acid anhydride group, an epoxy group, an amino group, an amide group, a silanol group or an alkoxysilane group is contained in the above-described coupling agent. Among them, coupling agents containing an N group or an O group are preferred, and examples thereof include tetraglycidyl m-xylenediamine, tetraglycidyl-1,3-bisaminomethylcyclohexane, tetraglycidyl-p-phenylenediamine, tetraglycidyl diaminodiphenylmethane, diglycidylaniline, γ-caprolactone, γ-glycidoxyethyltrimethoxysilane, γ-glycidoxypropyltrimethoxysilane, γ-glycidoxypropyltriphenoxysilane, γ-glycidoxypropylmethyldimethoxysilane, γ-glycidoxypropyldiethylethoxysilane, 1,3-dimethyl-2-imidazolidinone, 1,3-diethyl-2-imidazolidinone, N,N'-dimethylpropyleneurea, and N-methylpyrrolidone.

After producing the thermoplastic elastomer as described above, the block polymers are isolated, i.e., finished by using a method described later.

In the case that the step of polymerizing the block copolymers has been performed in an inert hydrocarbon solvent, the inert hydrocarbon solvent is removed to isolate the block copolymers. Specific examples of the method for removing the solvent include steam stripping. A hydrous crumb is obtained by using steam stripping, and the hydrous crumb is dried to obtain the block copolymers. In steam stripping, it is preferred to use a surfactant as a crumb-forming agent. The surfactant is not limited, and examples thereof include the above-described anionic surfactants, cationic surfactants and nonionic surfactants. These surfactants may be added typically in an amount of 0.1 to 3000 ppm relative to water in the stripping zone. Further, a water-soluble salt of a metal such as Li, Na, Mg, Ca, Al and Zn may be used as a dispersion aid for the crumb in addition to the surfactant.

The concentration of the crumb-like block copolymer dispersed in water resulting from the step of polymerizing the block copolymer and the steam stripping is typically 0.1 to 20% by mass (percentage relative to water in the stripping zone). This range provides a crumb having a satisfactory particle diameter without any trouble in operation. It is preferred to adjust the water content of the crumb of the block copolymer to 1 to 30% by mass though dehydration and then dry the crumb until the water content reaches to 1% by mass or less. In the step of dehydrating the crumb, dehydration may be performed with a roll, a Banbury dehydrator, or a compression dehydrator such as a screw-extruding press dehydrator, or dehydration and drying may be performed simultaneously with a conveyer-type or box-type hot air dryer.

(Method for producing composition C or F)

A method for producing the composition C or F is not limited, and known methods can be used.

An exemplary method includes mixing a thermoplastic elastomer and a tackifier at any blending ratio by using an apparatus with heating and kneading (such as stirring) functions, such as a single- or twin-screw extruder, a mixer, or a kneader, melt-extruding the mixture into water or putting the mixture onto a cooling belt and solidifying the mixture by cooling, and then cutting the resultant into an appropriate size of particles such as pellets or beads.

In the case of melt-extruding the mixture into water, an exemplary method includes cutting the mixture into particles such as pellets by using a cutting granulator in water. A temperature at the time of kneading differs depending on compositions, apparatuses to be used, and the like, but is typically 100 to 250°C, and preferably 120 to 180°C, and a kneading time is typically 10 to 120 minutes, and preferably 15 to 60 minutes.

In the method for producing the composition C or F, a dehydration or drying step of dehydrating or drying the composition thus cut in water, and a step of attaching an antiblocking agent to the dehydrated or dried product by post-addition may be performed.

Alternatively, an antiblocking agent may be added to the dehydrated product, which is then dried.

A step of attaching an antiblocking agent to the surface of the composition by adding the antiblocking agent into water in advance may be performed.

The dehydration or drying method is not limited, and a centrifugal dehydrator or the like can be used.

[Method forming pressure-sensitive adhesive]

A method for producing a pressure-sensitive adhesive according to the present invention contains: an extrusion step of together extruding composition C in a particulate form containing an integrated form of at least one type of thermoplastic elastomer A and at least one type of tackifier B and composition F in a particulate form containing an integrated form of at least one type of thermoplastic elastomer D and at least one type of tackifier E by using an extruder to obtain a pressure-sensitive adhesive. The pressure-sensitive adhesive is to be included in a multilayered film for resealing packaging.

The composition C satisfies the following condition (7) and optionally the condition (9), and the composition F satisfies the following condition (8) and optionally the condition (10).

Here, in a preferred aspect, the following <condition (7)> and <condition (8)> are satisfied together, and <condition (9)> and <condition (10)> are satisfied together.

<condition (7)>

A ratio of the total mass of the thermoplastic elastomer(s) to the total mass of the tackifier(s) in the composition C is more than 1.5 and 3.0 or less.

<condition (8)>

A ratio of the total mass of the tackifier(s) to the total mass of the thermoplastic elastomer(s) in the composition F is more than 1.5 and 3.0 or less.

<condition (9)>

A percentage of the total mass of the thermoplastic elastomer(s) based on the total mass of the composition C is more than 60% by mass and less than 80% by mass, and
a percentage of the total mass of the tackifier(s) based on the total mass of the composition C is more than 20% by mass and less than 40% by mass.

<condition (10)>

A percentage of the total mass of the thermoplastic elastomer(s) based on the total mass of the composition F is more than 20% by mass and less than 40% by mass, and
a percentage of the total mass of the tackifier(s) based on the total mass of the composition F is more than 60% by mass and less than 80% by mass.

In the extrusion step, an adhesive strength of the pressure-sensitive adhesive having ratio y is larger than that of the composition C having ratio $\alpha$ and larger than that of the composition F having ratio $\beta$, wherein y represents a mass ratio of the total amount of the thermoplastic elastomer(s) to the total amount of the thermoplastic elastomer(s) and the tackifier(s) (thermoplastic elastomer(s) / thermoplastic elastomer(s) + tackifier(s)) in the pressure-sensitive adhesive; $\alpha$ represents a mass ratio of the total amount of the thermoplastic elastomer(s) to the total amount of the thermoplastic elastomer(s) and the tackifier(s) (thermoplastic elastomer(s) / thermoplastic elastomer(s) + tackifier(s)) in the composition C; and $\beta$ represents a mass ratio of the total amount of the thermoplastic elastomer(s) to the total amount of the thermoplastic elastomer(s) and the tackifier(s) (thermoplastic elastomer(s) / thermoplastic elastomer(s) + tackifier(s)) in the composition F.

$\alpha$, $\beta$ and y satisfy the following expression (2):

$$\beta < y < \alpha \quad (2)$$

The method for producing the pressure-sensitive adhesive according to the present invention thus configured can provide a pressure-sensitive adhesion being difficult to block and easy to handle and having high adhesive strength.

In the method for producing the pressure-sensitive adhesive according to the present invention, the term "extrude" is not limited to extruding at the same time and refers to extruding so as to form an extrudate having homogeneous composition.

In the method for producing the pressure-sensitive adhesive according to the present invention, a composition having an adhesive strength adjusted so as to be weak is preferred for each of the compositions (the composition C and the composition F). Specifically, the adhesive strength of each of the compositions is preferably 15.0 N/10 mm or less, more preferably 14.0 N/10 mm or less, further preferably 13.0 N/10 mm or less, furthermore preferably 12.0 N/10 mm or less, still further preferably 10.0 N/10 mm or less, particularly preferably 5.0 N/10 mm or less, and further preferably 1.0 N/10 mm or less in the case that the adhesive strength is measured in accordance with "Method for measuring adhesive strength (Thermoplastic elastomer, each composition and each dry-blend composition)" described later in Examples.

The tackiness is preferably 10.0 N/5 mmΦ or less, more preferably 8.0 N/5 mmΦ or less, further preferably 6.0 N/5 mmΦ or less, furthermore preferably 5.0 N/5 mmΦ or less, still further preferably 3.0 N/5 mmΦ or less, and particularly preferably 1.0 N/5 mmΦ or less in the case that the adhesive strength is measured in accordance with "Method for measuring tackiness (Thermoplastic elastomer, each composition and each dry-blend composition)" described later.

Each composition exhibiting such adhesive strength cannot be used in the applications of a pressure-sensitive adhesive required to have high adhesive strength by itself, but can exhibit higher adhesive strength than that of the composition used alone, by kneading the compositions in appropriate makeups and amounts.

In the case of forming a pressure-sensitive adhesive layer by using a composition exhibiting desired adhesive strength, for example, in a general method for producing a pressure-sensitive adhesive, pellets of this composition are easy to block and problematic with handling due to their large adhesive strength when the pellets are to be extrusion-molded in an extruder.

Accordingly, in the method for producing the pressure-sensitive adhesive according to the present invention, the composition exhibiting the desired adhesive strength is separated into at least two compositions having different makeups (e.g., a combination of the composition C and the composition F), and respective pellets of these compositions are prepared. These pellets are mixed at a predetermined ratio and extruded and can thereby established such that the pressure-sensitive adhesive exhibits large adhesive strength, in spite of the small tackiness of the pellets.

More specifically, in the method for producing the pressure-sensitive adhesive according to the present invention, the compositional ratios of the composition C and the composition F and their mixing ratio can be determined as described below.

Assuming that, for example, the compositional ratio between thermoplastic elastomer(s) X and tackifier(s) Y is y:1 - y in a pressure-sensitive adhesive consisting of only the thermoplastic elastomer(s) and the tackifier(s) and exhibiting desired adhesive strength, $\alpha$ represents a ratio of the total amount of the thermoplastic elastomer(s) X to the total amount of the thermoplastic elastomer(s) X and the tackifier(s) Y in the composition C, and (1 - $\alpha$) represents a ratio of the total amount of the tackifier(s) Y thereto. $\beta$ represents a ratio of the total amount of the thermoplastic elastomer(s) X to the total amount of the thermoplastic elastomer(s) X and the tackifier(s) Y in the composition F, and (1 - $\beta$) represents a ratio of the total amount of the tackifier(s) Y thereto. In this case, when the composition C and the composition F are mixed at a mixing ratio of $\gamma$:1 - y, the compositional ratio between the thermoplastic elastomer(s) X and the tackifier(s) Y in the mixture can be expressed as $[(\alpha - \beta)\gamma + \beta]:[1 - \{(\alpha - \beta)\gamma + \beta)\}]$. The makeups of the composition C and the composition F and their mixing ratio can be determined by first determining $\alpha$ and $\beta$ so as to weaken adhesive strength and to render $\alpha$ and $\beta$ as close as possible, and then determining y such that the whole makeup is y:1 - y.

In this respect, a relation of $\beta < y < \alpha$ holds among $\alpha$, $\beta$ and y. Since the relationship between the "blending ratio between the thermoplastic elastomer and the tackifier" and the "adhesive strength" in the pressure-sensitive adhesive is a convex curvilinear relationship, there exists a range in which adhesive strength is decreased in regions where the total amount of the thermoplastic elastomer(s) X to be blended is large or small, from the desired compositional ratio y. Hence, a composition having the compositional ratio $\alpha$ different from the desired compositional ratio y and a composition having the compositional ratio $\beta$ are mixed as described above. This enables exhibition of high adhesive strength as a mixture while keeping the adhesive strength of each of the compositions low. The compositions can have close flowability by rendering $\alpha$ and $\beta$ as close as possible so as to weaken adhesive strength. Closer flowability of the compositions tends to facilitate more uniformly mixing the compositions because of their closer times to be melted in an extruder or viscosity during melting. As a result, the whole makeup is closer to y:1 - y so that the desired adhesive strength is easily exerted. This also tends to improve film appearance because unmelted products are more unlikely to remain.

This example utilizes the fact that the adhesive strength of a composition exhibiting high adhesive strength can be weakened by changing the ratio between a thermoplastic elastomer and a tackifier. A pressure-sensitive adhesive having high adhesive strength as a whole is designed by decreasing the adhesive strength of the composition C and the composition F and adjusting the mixing ratio between the composition C and the composition F. Each of the compositions may include a distinctive plastic elastomer and tackifier, as a matter of course.

"Component Z other than the thermoplastic elastomer and the tackifier" typified by a plasticizer can also be appropriately blended into the pressure-sensitive adhesive according to the present invention. In this case as well, each of the compositional ratios and the mixing ratio can be determined in the same manner as above.

In the case of forming a pressure-sensitive adhesive having a desired compositional ratio by mixing three or more compositions, each of the compositional ratios and the mixing ratio can also be determined in the same manner as above.

The compositions (the composition C, and the composition F) having the compositional ratio determined as described above are coextruded with their respective partners by using the same extruder and can thereby exhibit higher adhesive strength after being kneaded than that of each of the compositions, though the compositions each have small adhesive strength when handled and are thus easy to handle.

From the viewpoint of obtaining a much more homogeneous pressure-sensitive adhesive by using the method for producing the pressure-sensitive adhesive according to the present invention, it is preferable that each of the compositions be in a particulate form and the method for forming the pressure-sensitive adhesive according to the present invention include a dry blending step of dry-blending the compositions, specifically, the composition C and the composition F, before the extrusion step to prepare material G for a pressure-sensitive adhesive.

In the method for producing the pressure-sensitive adhesive according to the present invention, from the viewpoint of suppressing sorting at the time of extrusion molding while facilitating forming a highly homogeneous pressure-sensitive adhesive in preparing a pressure-sensitive adhesive, it is preferable to satisfy the following <condition (11)>.

From the viewpoint of forming a highly homogeneous pressure-sensitive adhesive, it is preferable to satisfy the following <condition (12)>.

<Condition (11)>

The ratio of average particle mass Wc of the composition C to average particle mass Wf of the composition F (Wc/Wf) is preferably 0.4 or more and 2.5 or less, more preferably 0.4 or more and 2.3 or less, further preferably 0.5 or more and 2.0 or less, and furthermore preferably 0.6 or more and 1.5 or less.

<Condition (12)>

The ratio of average particle major axis Lc of the composition C to average particle major axis Lf of the composition F is preferably 0.6 or more and 1.4 or less, more preferably 0.7 or more and 1.3 or less, further preferably 0.8 or more and 1.2 or less, and furthermore preferably 0.9 or more and 1.1 or less.

The ratio of average particle minor axis lc of the composition C to average particle minor axis lf of the composition F is preferably 0.6 or more and 1.4 or less, more preferably 0.7 or more and 1.3 or less, further preferably 0.8 or more and 1.2 or less, and furthermore preferably 0.9 or more and 1.1 or less.

The average particle mass, average particle major axis, and average particle minor axis of each composition can be measured by using methods described later in Examples.

From the viewpoint of being much more difficult to block and excellent in handleability, the adhesive strength of at least one of the compositions is preferably 4.0 N/10 mm or smaller in the case that the adhesive strength is measured in accordance with "Method for measuring adhesive strength (Thermoplastic elastomer, each composition and each dry-blend composition)" described later.

From the viewpoint of obtaining a pressure-sensitive adhesive further having excellent adhesive strength, tackiness, and retention strength, the percentage of the total mass of the thermoplastic elastomer(s) in the pressure-sensitive adhesive according to the present invention is preferably 30% by mass or more and 80% by mass or less.

From the viewpoint of obtaining a pressure-sensitive adhesive further having excellent adhesive strength, tackiness, and retention strength, the percentage of the total mass of the tackifier(s) in the pressure-sensitive adhesive is preferably 20% by mass or more and 70% by mass or less.

The adoption of the material for a pressure-sensitive adhesive according to the present invention as a pressure-sensitive adhesive for resealing packaging has the advantage that diverse conditions can be set for extrusion molding to produce a multilayered film.

For example, a dry blend is easy to mix and easily forms a homogeneous adhesive layer with less uneven mixing, even if a generally low extrusion temperature on the order of 120 to 140°C is set. This is effective for preventing the deterioration of appearance ascribable to foreign matter derived from uneven mixing while enhancing resealing peel strength owing to uniform mixing of a thermoplastic elastomer and a tackifier at an intended ratio.

The material for a pressure-sensitive adhesive according to the present invention is designed by focusing on the ease of mixing at the time of extrusion molding, and is improved in the ease of mixing of particles as compared with conventional compositions. Therefore, the material for a pressure-sensitive adhesive is less likely to depend on the structure of an extruder (screw, etc.) or the setting of kneading conditions or extrusion conditions, and easily produces a multilayered film that exhibits peel strength as intended. On the other hand, in the case of setting a kneading temperature to on the order of 150°C to 230°C, production efficiency can be improved because the material for a pressure-sensitive adhesive can be sufficiently uniformly mixed in a short time as compared with conventional compositions.

Examples

Hereinafter, the present invention will be described in detail with reference to specific Examples and Comparative Examples, but the present invention is never limited to the following Examples.

Methods for measuring the characteristics or physical properties of polymers applied to Examples and Comparative Examples will be shown below.

[Measurement method and evaluation method]

((1): Characteristics of thermoplastic elastomer)

<(1-1): Content of vinyl aromatic monomer unit (styrene)>

A predetermined amount of a thermoplastic elastomer was dissolved in chloroform, and after measurement with an ultraviolet spectrophotometer (UV-2450, manufactured by Shimadzu Corporation), the content of the vinyl aromatic monomer unit (styrene) in the thermoplastic elastomer was calculated from the peak strength at the absorption wavelength (262 nm) due to a vinyl aromatic compound component (styrene) with use of a calibration curve.

<(1-2): Weight average molecular weight>

The weight average molecular weights of the block copolymers (C), (D-1), (D-2), and (D-3) constituting a thermoplastic elastomer were determined on the basis of the peak molecular weight in the chromatogram with use of a calibration curve (prepared by using the peak molecular weight of a standard polystyrene) determined from measurement for a commercially available standard polystyrene under [Measurement conditions] described later.

For a hydrogenated sample, the molecular weight of the polymer after hydrogenation was measured.

First, a single peak which had the smallest peak top molecular weight in the molecular weight range of 20,000 or higher, and had a ratio of an area of 0.01 or more, which was calculated to the total peak area for a thermoplastic elastomer which was the block copolymer composition through peak partitioning described later, was used as the peak for the block copolymer (C), and the peaks in the molecular weight range higher than the molecular weight of the block copolymer (C) were used as the peaks for (D-1), (D-2), and (D-3) in the ascending order of molecular weights.

The weight average molecular weights of the block copolymers (C), ((D-1), (D-2), and (D-3) were determined through vertical partitioning of the GPC curve to the base line at inflection points between peaks with a system software described later.

Here, the lowest point in the vertical direction (trough peak) between adjacent peaks was used for an inflection point between peaks for the block copolymers (C), (D-1), (D-2), and (D-3). In the case that the lowest point is present continuously, the intermediate point was used. By using a waveform separation function in the waveform separation software, vertical partitioning was performed at each of the above-described inflection points and thereafter the corresponding weight average molecular weight and the ratio of an area were calculated.

[Measurement conditions]

GPC: ACQUITY APC system (manufactured by Nihon Waters **K.K.)**
system (measurement/analysis) software: Empower 3
detector: RI
refractive index unit at full scale: 500 $\mu$RIU
output at full scale: 2000 mV
sampling rate: 10 points/sEC
column: ACQUITY APC XT125 (4.6 mm $\times$ 150 mm); $\times$1

ACQUITY APC XT200 (4.6 mm $\times$ 150 mm); $\times$1
ACQUITY APC XT900 (4.6 mm $\times$ 150 mm); $\times$1
ACQUITY APC XT450 (4.6 mm $\times$ 150 mm); $\times$1

solvent: THF

flow rate: 1.0 mL/min
concentration: 0.1 mg/mL
column temperature: 40°C
injection volume: 20 μL

<(1-3): Ratio of weight average molecular weight>

The ratios of weight average molecular weight (block copolymer (D-1)/block copolymer (C)), (block copolymer (D-2)/block copolymer (C)), and (block copolymer (D-3)/block copolymer (C)) were determined from the weight average molecular weights of the block copolymers (C), (D-1), (D-2), and (D-3) determined above.

<(1-4): Contents of block copolymers (C), (D-1), (D-2), and (D-3)>

The percentages of a peak area for the block copolymers (C), (D-1), (D-2), and (D-3) to the total peak area in an elution curve determined in the above (1-2) were used as the contents of the block copolymers (C), (D-1), (D-2), and (D-3).
A peak at a weight average molecular weight 1.5 times or more and less than 2.5 times as high as the weight average molecular weight of the block copolymer (C), a peak at a weight average molecular weight 2.5 times or more and less than 3.4 times as high as the weight average molecular weight of the block copolymer (C), and a peak at a weight average molecular weight 3.4 times or more and less than 4.5 times as high as the weight average molecular weight of the block copolymer (C) were used as the peak for the component (D-1), the peak for the component (D-2), and the peak for the component (D-3), respectively.
The ratio of an area and the weight average molecular weight of each of the block copolymers (D-1), (D-2), and (D-3), and the ratio of weight average molecular weight were determined through GPC measurement with use of the above apparatus and conditions followed by vertical partitioning to the base line at inflection points between peaks in the GPC curve with the above-described system software.
Here, the lowest point in the vertical direction (trough peak) between adjacent peaks was used for an inflection point between peaks for the block copolymers (D-1), (D-2), and (D-3). In the case that the lowest point is present continuously, the intermediate point was used. By using a waveform separation function in the above-described system software, vertical partitioning was performed at each of the above-described inflection points and thereafter the corresponding weight average molecular weight, the ratio of weight average molecular weight and the ratio of an area were calculated.

<(1-5): Average content of vinyl bonding in conjugated diene monomer unit>

The average content of vinyl bonding in the conjugated diene monomer unit was calculated for a thermoplastic elastomer which was a block copolymer composition before hydrogenation with an infrared spectrophotometer (FT/IR-230, manufactured by JASCO Corporation) in accordance with a Hampton method.

<(1-6): Percentage of hydrogenation>

The total percentage of hydrogenation of the unsaturated double bonds based on the conjugated diene compound in a block copolymer was measured with a nuclear magnetic resonance apparatus (NMR) under the following conditions.
First, a large amount of methanol was added to a reaction solution after a hydrogenation reaction to precipitate the block copolymer for recovery.
The block copolymer was then extracted with acetone, and the extracted solution was dried in vacuum, and the resultant was used as a sample for $^1$H-NMR measurement.
The conditions for $^1$H-NMR measurement are as follows.

(Measurement conditions)

measurement apparatus: JNM-LA400 (manufactured by JEOL Ltd.)
solvent: deuterated chloroform
measurement sample: sampled products before and after hydrogenation of polymer
sample concentration: 50 mg/mL
observation frequency: 400 MHz

chemical shift reference: TMS (tetramethylsilane)
pulse delay: 2.904 seconds
number of scans: 64
pulse width: 45°
measurement temperature: 26°C

<(1-8): Melt flow rate (MFR)>

MFR of a thermoplastic elastomer was measured at 190°C under a 2.16 kg weight in according with condition (d) of ISO: 1133.

This MFR is the mass (g/10 min) of the thermoplastic elastomer that was placed in a vertical cylinder in advance and flowed for 10 minutes via a die having a predetermined diameter under a 2.16 kg total weight by using a piston.

MFR values described in the present specification were measured under the same conditions as above, unless otherwise specified.

((2): Measurement of tack performance)

<(2-1): Method for measuring adhesive strength>

[Adhesive strength of thermoplastic elastomer, each composition and each dry-blend composition described later]

Each of thermoplastic elastomers 1 and 2, compositions 1 to 13 and dry-blend compositions 1 to 17 was dissolved in toluene.

A polyester film (thickness: 38 $\mu$m) was coated with the resultant toluene solution with use of an applicator, and thereafter the film was retained at a room temperature for 30 minutes and then in an oven at 70°C for 7 minutes to evaporate the toluene completely, and thus a coated film was prepared. The thickness of the coating was 25 $\mu$m.

The resultant coated film was cut into a width of 15 mm. In accordance with JIS Z0237 "test method 1 for measuring peel adhesive strength: 180°-peeling test with respect to test plates", the film was pressurized with a roller in a state where the coated surface was in contact with a stainless plate (SUS304), and the film was peeled off after 30 minutes from the pressurization and measured for adhesive strength.

The test was carried out at a peeling speed of 300 mm/min.

[Initial and resealing peel strength of three-layer film]

Each of three-layer films 1 to 17 was heat-sealed under conditions of 150°C, 0.2 MPA, 8 seconds, and a width of 4 mm in a state where a heat-sealing layer was in contact with a polyethylene plate (thickness: 1 mm). Then, the film was peeled off at 23°C, 180°, and a peeling speed of 300 mm/min and measured for adhesive strength to measure initial peel strength.

Then, the peeled site was resealed by pressure bonding with fingers, and this operation was repeated three times. Then, the film was peeled off again at 23°C, 180°, and a peeling speed of 300 mm/min and measured for adhesive strength to measure resealing peel strength.

<(2-2): Method for measuring tackiness>

[Tackiness of thermoplastic elastomer, each composition and each dry-blend composition]

Each of thermoplastic elastomers 1 and 2, compositions 1 to 13 and dry-blend compositions 1 to 17 was dissolved in toluene.

A polyester film (thickness: 38 $\mu$m) was coated with the resultant toluene solution with use of an applicator, and thereafter the film was retained at a room temperature for 30 minutes and then in an oven at 70°C for 7 minutes to evaporate the toluene completely, and thus a coated film was prepared. The thickness of the coated film was 25 $\mu$m.

The resultant coated film was cut into a width of 15 mm. The film was placed on the top surface of a 10 g weight (hollowed cylinder) of a probe tack tester (NTS-4800, manufactured by TESTER SANGYO CO., LTD.) so that the coated surface was on the lower side.

To the coated surface, a cylinder (made of an SUS) with a diameter of 5 mm$\phi$ was allowed to adhere from the lower side for 1 second so as to lift up. Thereafter, the peel strength when the cylinder was detached off was measured. The adhering and detaching speeds were each 10 mm/sec.

((3): Measurement of average particle major axis and average particle minor axis)

20 particles of each of thermoplastic elastomers 1 to 2 and compositions 1 to 13 were randomly selected, and the largest diameter and the smallest diameter of each particle were measured by using calipers.

The average of the largest diameters of the 20 particles was defined as an average particle major axis, and the average of the smallest diameters thereof was defined as an average particle minor axis.

((4): Measurement of average particle mass)

20 particles of each of thermoplastic elastomers 1 and 2 and compositions 1 to 13 were randomly selected, and the mass of each particle was measured by using a precision balance. The average of the masses of the 20 particles was defined as an average particle mass.

((5) Evaluation of color of thermoplastic elastomer and composition)

Thermoplastic elastomers 1 and 2 and compositions 1 to 13 were visually observed and scored as described below according to the intensity of yellowness, and the average of the scores given by 5 persons was defined as color.

    0: No perceivable yellowness
    1: Slightly perceivable yellow color
    2: Completely perceivable yellow color

((6) Evaluation of odor intensity of thermoplastic elastomer, composition and three-layer film)

Sensory evaluation of odor was carried out in an environment of 23°C for thermoplastic elastomers 1 and 2, compositions 1 to 13 and three-layer films 1 to 17.

Odor intensity was scored as described below, and the average of the scores given by 5 persons was defined as odor intensity.

    Score 0: No odor
    Score 1: Barely perceivable odor
    Score 2: Weak but perceivable odor
    Score 3: Readily perceivable odor
    Score 4: Strong odor
    Score 5: Very strong odor

((7): Evaluation of film appearance)

Each of three-layer films 1 to 17 was cut into a width of 40 cm and a length of 1 m, and appearance was visually observed.

A sample that was able to be confirmed at a glance to have few defects of spots or streaks was given ○, a sample that was able to be confirmed to have several such defects was given △, and a sample that was able to be confirmed to have such defects throughout the surface was given ✕.

A sample that was unevaluable because no coating was formed was described as "-".

[Preparation of hydrogenation catalyst]

A hydrogenation catalyst to be used for preparing a hydrogenated thermoplastic elastomer in Examples and Comparative Examples described later was prepared in accordance with the following method.

A reaction vessel provided with a stirrer was purged with nitrogen, and into the reaction vessel 1 L of dried and purified cyclohexane was charged.

Next, 100 mmol of bis($\eta$5-cyclopentadienyl)titanium dichloride was added thereto.

While thoroughly stirring this, an N-hexane solution containing 200 mmol of trimethylaluminum was added thereto to allow to react at a room temperature for about 3 days. Thereby, a hydrogenation catalyst was obtained.

[Preparation of thermoplastic elastomer]

<Thermoplastic elastomer 1>

A 10 L stainless steel autoclave provided with a stirrer and a jacket was washed, dried and purged with nitrogen, and into the autoclave 4480 g of cyclohexane and 128 g of styrene which had been purified in advance were charged, thereafter TMEDA (tetramethylethylenediamine) was added thereto so that the mole ratio to the total amount by mole of n-butyllithium was 0.28 (0.68 g in mass), and the content was warmed to 53°C by passing a warm water through the jacket.
Subsequently, a cyclohexane solution containing 1.37 g of n-butyllithium was added thereto to initiate polymerization of styrene. The solution temperature increased due to the polymerization of styrene, and 5 minutes after the reaction temperature reached to the maximum temperature of 58°C, 672 g of 1,3-butadiene was added thereto and the polymerization was allowed to continue.
3 minutes after the reaction temperature reached to the maximum temperature of 88°C, tetraethoxysilane as a coupling agent was added thereto so that the mole ratio to the total amount by mole of the n-butyllithium was 0.086 (0.31 g in mass) to allow for a coupling reaction for 20 minutes. The average reaction temperature during the reaction was 71°C.
The reaction was deactivated by adding 0.4 g of methanol 20 minutes after the addition of the coupling agent, to obtain a block copolymer composition.
To the block copolymer composition obtained, the hydrogenation catalyst prepared in a manner as described above was further added in an amount of 50 ppm in terms of Ti per 100 parts by mass of the block copolymer composition, and the resultant was allowed to undergo a hydrogenation reaction at a hydrogen pressure of 0.8 MPa and an average temperature of 87°C.
The percentage of hydrogenation of the block copolymer composition obtained was 43.2% by mass.
To the block copolymer composition solution obtained, octadecyl-3-(3,5-di-t-butyl-4-hydroxyphenyl)propionate and 2,4-bis(octylthiomethyl)-6-methylphenol were added in an amount of 0.30 parts by mass and 0.03 parts by mass, respectively, based on 100 parts by mass of the block copolymer composition, and the solution was thoroughly stirred.
The solvent was then removed by heating, and the resultant was pelletized to obtain a thermoplastic elastomer 1 including block copolymers (C), (D-1), (D-2) and (D-3).
With regard to the thermoplastic elastomer 1 obtained, the content of the vinyl aromatic monomer unit was 16.3% by mass, and the average content of vinyl bonding in the conjugated diene monomer unit was 32.5% by mass.
Other physical property values of the thermoplastic elastomer 1 obtained are shown in Table 1.

<Thermoplastic elastomer 2>

A 10 L stainless steel autoclave provided with a stirrer and a jacket was washed, dried and purged with nitrogen, and into the autoclave 4480 g of cyclohexane and 240 g of styrene which had been purified in advance were charged, thereafter TMEDA (tetramethylethylenediamine) was added thereto so that the mole ratio to the total amount by mole of n-butyllithium was 0.33 (1.04 g in mass), and the content was warmed to 53°C by passing a warm water through the jacket. Subsequently, a cyclohexane solution containing 1.79 g of n-butyllithium was added thereto to initiate polymerization of styrene. The solution temperature increased due to the polymerization of styrene, and 5 minutes after the reaction temperature reached to the maximum temperature of 58°C, 560 g of 1,3-butadiene was added thereto and the polymerization was allowed to continue. 3 minutes after the reaction temperature reached to the maximum temperature of 88°C, ethyl benzoate as a coupling agent was added thereto so that the mole ratio to the total amount by mole of the n-butyllithium was 0.150 (0.35 g in mass) to allow for a coupling reaction for 15 minutes. The average reaction temperature during the reaction was 71°C.
The reaction was deactivated by adding 0.4 g of methanol 15 minutes after the addition of the coupling agent, to obtain a block copolymer composition.
To the block copolymer composition obtained, the hydrogenation catalyst prepared in a manner as described above was further added in an amount of 50 ppm in terms of Ti per 100 parts by mass of the block copolymer, and the resultant was allowed to undergo a hydrogenation reaction at a hydrogen pressure of 0.8 MPa and an average temperature of 87°C. The percentage of hydrogenation of the block copolymer composition obtained was 50.3% by mass.
To the block copolymer solution obtained, octadecyl-3-(3,5-di-t-butyl-4-hydroxyphenyl)propionate was added in an amount of 0.25 parts by mass based on 100 parts by mass of the block copolymer, and the solution was thoroughly stirred. The solvent was then removed by heating, and the resultant was pelletized to obtain a thermoplastic elastomer 2 including block copolymers (C) and (D-1).
With regard to the thermoplastic elastomer 2 obtained, the content of the vinyl aromatic monomer unit was 29.7% by mass, and the average content of vinyl bonding in the conjugated diene monomer unit was 40.2% by mass.
Other physical property values of the thermoplastic elastomer 2 obtained are shown in Table 1.

[Table 1]

| Thermoplastic elastomer | 1 | 2 |
|---|---|---|
| Content of vinyl aromatic monomer unit (% by mass) | 16.3 | 29.7 |
| Average content of vinyl bonding in conjugated diene monomer unit (% by mass) | 32.5 | 40.2 |
| Molecular weight of block copolymer (C) (10000 ×) | 9.5 | 6.2 |
| Molecular weight of block copolymer (D-1) (10000 ×) | 20.5 | 12.0 |
| Molecular weight of block copolymer (D-2) (10000 ×) | 30.2 | - |
| Molecular weight of block copolymer (D-3) (10000 ×) | 36.6 | - |
| Content of block copolymer (C) (% by mass) | 64.3 | 65.3 |
| Content of block copolymer (D-1) (% by mass) | 6.6 | 34.7 |
| Content of block copolymer (D-2) (% by mass) | 14.5 | 0.0 |
| Content of block copolymer (D-3) (% by mass) | 14.6 | 0.0 |
| Ratio of weight average molecular weight (D-1)/(C):(D-2)/(C):(D-3)/(C) | 2.16:3.18:3.85 | 1.94:0:0 |
| Ratio of area (C):(D-1):(D-2):(D-3) | 0.643:0.066:0.145:0.146 | 0.635:0.347:0:0 |
| Total percentage of hydrogenation of unsaturated double bonds based on conjugated diene compound (% by mass) | 43 | 47 |
| Shape | Pellet | Pellet |
| Color | 0.0 | 0.0 |
| Odor | 0.7 | 0.6 |
| Average particle major axis (mm) | 4.08 | 4.08 |
| Average particle minor axis (mm) | 2.74 | 2.72 |
| Average particle mass (mg) | 22.6 | 22.1 |
| MFR(g/10min) | 0.6 | 2.3 |
| Adhesive strength (N/10mm) | 0.0 | 0.0 |
| Tack (N/5mmφ) | 0.0 | 0.0 |

A method for preparing a composition constituting each material for a pressure-sensitive adhesive will be shown below.

A tackifier used in the composition constituting each material for a pressure-sensitive adhesive (hereinafter, referred to as a composition) is shown in Table 2 below.

[Table 2]

| Tackifier | ARKON P100 | SUKOREZ SU420 | YS RESIN PX1150N | ARKON P140 |
|---|---|---|---|---|
| Type | Hydrogenated C9 | Hydrogenated DCPD-C9 | Terpene | Hydrogenated C9 |
| Hydrogenation | Fully hydrogenated | Fully hydrogenated | Non-hydrogenated | Fully hydrogenated |
| Softening point (°C) | 100 | 120 | 115 | 140 |

[Preparation of composition constituting material for pressure-sensitive adhesive]

[Production Examples 1-1 to 1-13]

(Composition 1)

A thermoplastic elastomer 1 (233 parts by mass) as a thermoplastic elastomer, ARKON P100 (100 parts by mass) manufactured by Arakawa Chemical Industries, Ltd. as a tackifier, and IRGANOX #1010 (0.5 parts by mass) manufactured by Ciba Specialty Chemicals Inc. as an antioxidant were kneaded at 160°C by using a twin-screw extruder to obtain a kneaded product.

The obtained kneaded product was extruded into water, molded into pellets with a cutter in water, and dried in a continuous dryer to obtain (composition 1).

The values of other physical properties of (composition 1) are shown in [Table 3] below.

(Composition 2)

(Composition 2) was obtained in the same manner as in (composition 1) except that SUKOREZ SU420 (100 parts by mass) manufactured by Kolon Industries, Inc. was used as the tackifier.

The values of other physical properties of (composition 2) are shown in [Table 3] below.

(Composition 3)

(Composition 3) was obtained in the same manner as in (composition 1) except that YS RESIN PX1150N (100 parts by mass) manufactured by YASUHARA CHEMICAL CO., LTD was used as the tackifier.

The values of other physical properties of (composition 3) are shown in [Table 3] below.

(Composition 4)

(Composition 4) was obtained in the same manner as in (composition 1) except that ARKON P140 (100 parts by mass) manufactured by Arakawa Chemical Industries, Ltd. was used as the tackifier.

The values of other physical properties of (composition 4) are shown in [Table 3] below.

(Composition 5)

(Composition 5) was obtained in the same manner as in (composition 1) except that a thermoplastic elastomer 2 (233 parts by mass) was used as the thermoplastic elastomer.

The values of other physical properties of (composition 5) are shown in [Table 3] below.

(Composition 6)

A thermoplastic elastomer 1 (100 parts by mass) as a thermoplastic elastomer, ARKON P100 (233 parts by mass) manufactured by Arakawa Chemical Industries, Ltd. as a tackifier, and IRGANOX #1010 (0.5 parts by mass) manufactured by Ciba Specialty Chemicals Inc. as an antioxidant were kneaded at 160°C by using a twin-screw extruder to obtain a kneaded product.

The obtained kneaded product was extruded into water, molded into pellets with a cutter in water, and dried in a continuous dryer to obtain (composition 6).

The values of other physical properties of (composition 6) are shown in [Table 3] below.

(Composition 7)

(Composition 7) was obtained in the same manner as in (composition 6) except that SUKOREZ SU420 (100 parts by mass) manufactured by Kolon Industries, Inc. was used as the tackifier.

The values of other physical properties of (composition 7) are shown in [Table 3] below.

(Composition 8)

(Composition 8) was obtained in the same manner as in (composition 6) except that YS RESIN PX1150N (100 parts by mass) manufactured by YASUHARA CHEMICAL CO., LTD. was used as the tackifier.

The values of other physical properties of (composition 8) are shown in [Table 4] below.

(Composition 9)

(Composition 9) was obtained in the same manner as in (composition 6) except that ARKON P140 (100 parts by mass) manufactured by Arakawa Chemical Industries, Ltd. was used as the tackifier.

The values of other physical properties of (composition 9) are shown in [Table 4] below.

(Composition 10)

(Composition 10) was obtained in the same manner as in (composition 7) except that a thermoplastic elastomer 2 (233 parts by mass) was used as the thermoplastic elastomer.

The values of other physical properties of (composition 10) are shown in [Table 4] below.

(Composition 11)

(Composition 11) was obtained in the same manner as in (composition 10) except that YS RESIN PX1150N (100 parts by mass) manufactured by YASUHARA CHEMICAL CO., LTD. was used as the tackifier.

The values of other physical properties of (composition 11) are shown in [Table 4] below.

(Composition 12)

A thermoplastic elastomer 1 (266 parts by mass) as a thermoplastic elastomer, ARKON P100 (67 parts by mass) manufactured by Arakawa Chemical Industries, Ltd. as a tackifier, and IRGANOX #1010 (0.5 parts by mass) manufactured by Ciba Specialty Chemicals Inc. as an antioxidant were kneaded at 160°C by using a twin-screw extruder to obtain a kneaded product.

The obtained kneaded product was extruded into water, molded into pellets with a cutter in water, and dried in a continuous dryer to obtain (composition 12).

The values of other physical properties of (composition 12) are shown in [Table 4] below.

(Composition 13)

A thermoplastic elastomer 1 (200 parts by mass) as a thermoplastic elastomer, ARKON P100 (133 parts by mass) manufactured by Arakawa Chemical Industries, Ltd. as a tackifier, and IRGANOX #1010 (0.5 parts by mass) manufactured by Ciba Specialty Chemicals Inc. as an antioxidant were kneaded at 160°C by using a twin-screw extruder to obtain a kneaded product.

The obtained kneaded product was extruded into water, molded into pellets with a cutter in water, and dried in a continuous dryer to obtain (composition 13).

The values of other physical properties of (composition 13) are shown in [Table 4] below.

The makeups and physical properties of the compositions containing the thermoplastic elastomer and the tackifier integrated, which were prepared as mentioned above, are shown in [Table 3] and [Table 4] below.

[Table 3]

| | Production Example | | | | | | |
|---|---|---|---|---|---|---|---|
| | 1-1 | 1-2 | 1-3 | 1-4 | 1-5 | 1-6 | 1-7 |
| Composition | 1 | 2 | 3 | 4 | 5 | 6 | 7 |
| Content of thermoplastic elastomer 1 (parts by mass) | 233 | 233 | 233 | 233 | 0 | 100 | 100 |
| Content of thermoplastic elastomer 2 (parts by mass) | 0 | 0 | 0 | 0 | 233 | 0 | 0 |
| Content of ARKON P100 (parts by mass) | 100 | 0 | 0 | 0 | 100 | 233 | 0 |
| Content of SUKOREZ SU420 (parts by mass) | 0 | 100 | 0 | 0 | 0 | 0 | 233 |
| Content of YS RESIN PX1150N (parts by mass) | 0 | 0 | 100 | 0 | 0 | 0 | 0 |
| Content of ARKON P140 (parts by mass) | 0 | 0 | 0 | 100 | 0 | 0 | 0 |
| Ratio of total mass of tackifier(s) to total mass of thermoplastic elastomer(s) (total mass of tackifier(s)/ total mass of thermoplastic elastomer(s)) | 0.43 | 0.43 | 0.43 | 0.43 | 0.43 | 2.33 | 2.33 |

(continued)

| | Production Example | | | | | | |
|---|---|---|---|---|---|---|---|
| | 1-1 | 1-2 | 1-3 | 1-4 | 1-5 | 1-6 | 1-7 |
| Ratio of total mass of thermoplastic elastomer(s) to total mass of tackifier(s) (total mass of thermoplastic elastomer(s) / total mass of tackifier(s)) | 2.33 | 2.33 | 2.33 | 2.33 | 2.33 | 0.43 | 0.43 |
| Total content of thermoplastic elastomer(s) (% by mass) | 70 | 70 | 70 | 70 | 70 | 30 | 30 |
| Total content of tackifier(s) (% by mass) | 30 | 30 | 30 | 30 | 30 | 70 | 70 |
| Shape | Pellet | Pellet | Pellet | Pellet | Pellet | Pellet | Pellet |
| Color | 0.0 | 0.1 | 1.5 | 0.0 | 0.0 | 0.1 | 0.0 |
| Odor | 0.4 | 0.4 | 2.9 | 0.7 | 0.5 | 0.4 | 0.4 |
| Average particle major axis (mm) | 3.49 | 3.51 | 3.47 | 3.48 | 3.52 | 4.43 | 4.43 |
| Average particle minor axis (mm) | 2.85 | 2.92 | 2.80 | 2.81 | 2.89 | 3.59 | 3.58 |
| Average particle mass (g) | 16.9 | 17.2 | 16.5 | 16.6 | 17.0 | 36.6 | 36.5 |
| MFR(g/10min) | 8.6 | 5.7 | 3.5 | 3.8 | 22.8 | 390.1 | 330.1 |
| Adhesive strength (N/10mm) | 4.4 | 4.5 | 4.3 | 3.4 | 4.0 | 0.0 | 0.0 |
| Tack (N/5mm$\varphi$) | 0.4 | 0.3 | 0.0 | 0.0 | 0.0 | 0.0 | 0.0 |

[Table 4]

| | Production Example | | | | | |
|---|---|---|---|---|---|---|
| | 1-8 | 1-9 | 1-10 | 1-11 | 1-12 | 1-13 |
| Composition | 8 | 9 | 10 | 11 | 12 | 13 |
| Content of thermoplastic elastomer 1 (parts by mass) | 100 | 100 | 0 | 0 | 266 | 200 |
| Content of thermoplastic elastomer 2 (parts by mass) | 0 | 0 | 100 | 100 | 0 | 0 |
| Content of ARKON P100 (parts by mass) | 0 | 0 | 0 | 0 | 67 | 133 |
| Content of SUKOREZ SU420 (parts by mass) | 0 | 0 | 233 | 0 | 0 | 0 |
| Content of YS RESIN PX1150N (parts by mass) | 233 | 0 | 0 | 233 | 0 | 0 |
| Content of ARKON P140 (parts by mass) | 0 | 233 | 0 | 0 | 0 | 0 |
| Ratio of total mass of tackifier(s) to total mass of thermoplastic elastomer(s) (total mass of tackifier(s)/ total mass of thermoplastic elastomer(s)) | 2.33 | 2.33 | 2.33 | 2.33 | 0.25 | 0.67 |
| Ratio of total mass of thermoplastic elastomer(s) to total mass of tackifier(s) (total mass of thermoplastic elastomer(s) / total mass of tackifier(s)) | 0.43 | 0.43 | 0.43 | 0.43 | 3.97 | 1.50 |
| Total content of thermoplastic elastomer(s) (% by mass) | 30 | 30 | 30 | 30 | 80 | 60 |
| Total content of tackifier(s) (% by mass) | 70 | 70 | 70 | 70 | 20 | 40 |
| Shape | Pellet | Pellet | Pellet | Pellet | Pellet | Pellet |
| Color | 1.7 | 0.1 | 0.0 | 1.6 | 0.1 | 0.0 |
| Odor | 3.0 | 0.6 | 0.5 | 3.1 | 0.4 | 0.4 |
| Average particle major axis (mm) | 4.51 | 4.46 | 4.41 | 4.32 | 3.47 | 3.52 |
| Average particle minor axis (mm) | 3.60 | 3.58 | 3.44 | 3.40 | 2.83 | 2.92 |
| Average particle mass (g) | 37.7 | 37.0 | 35.4 | 35.1 | 16.7 | 17.3 |

(continued)

| | Production Example | | | | | |
|---|---|---|---|---|---|---|
| | 1-8 | 1-9 | 1-10 | 1-11 | 1-12 | 1-13 |
| MFR(g/10min) | 230.0 | 300.4 | 410.8 | 330.5 | 4.2 | 70.1 |
| Adhesive strength (N/10mm) | 0.0 | 0.0 | 0.0 | 0.0 | 1.2 | 7.9 |
| Tack (N/5mmφ) | 0.0 | 0.0 | 0.0 | 0.0 | 0.1 | 0.8 |

[Preparation of material for pressure-sensitive adhesive (dry-blend composition)]

[Examples 2-1 to -10 and Comparative Examples 2-1 to -7]

(Examples 2-3 and 2-8 are reference examples)

A material for a pressure-sensitive adhesive was prepared by combining composition C and composition F as shown in [Table 5] and [Table 6] below.
The composition C and the composition F were selected from the corresponding compositions 1 to 13.

(Dry-blend composition 1)

A composition 1 (100 parts by mass) as composition C and a composition 6 (100 parts by mass) as composition F were dry-blended to prepare a dry-blend composition 1.
The values of other physical properties of the dry-blend composition 1 are shown in [Table 5] below.

(Dry-blend composition 2)

A composition 2 (100 parts by mass) as composition C and a composition 7 (100 parts by mass) as composition F were dry-blended to prepare a dry-blend composition 2.
The values of other physical properties of the dry-blend composition 2 are shown in [Table 5] below.

(Dry-blend composition 3)

A composition 3 (100 parts by mass) as composition C and a composition 8 (100 parts by mass) as composition F were dry-blended to prepare a dry-blend composition 3.
The values of other physical properties of the dry-blend composition 3 are shown in [Table 5] below.

(Dry-blend composition 4)

A composition 1 (100 parts by mass) as composition C and a composition 7 (100 parts by mass) as composition F were dry-blended to prepare a dry-blend composition 4.
The values of other physical properties of the dry-blend composition 4 are shown in [Table 5] below.

(Dry-blend composition 5)

A composition 4 (100 parts by mass) as composition C and a composition 9 (100 parts by mass) as composition F were dry-blended to prepare a dry-blend composition 5.
The values of other physical properties of the dry-blend composition 5 are shown in [Table 5] below.

(Dry-blend composition 6)

A composition 5 (100 parts by mass) as composition C and a composition 10 (100 parts by mass) as composition F were dry-blended to prepare a dry-blend composition 6.
The values of other physical properties of the dry-blend composition 6 are shown in [Table 5] below.

(Dry-blend composition 7)

A composition 1 (100 parts by mass) as composition C and a composition 10 (100 parts by mass) as composition F were dry-blended to prepare a dry-blend composition 7.

The values of other physical properties of the dry-blend composition 7 are shown in [Table 5] below.

(Dry-blend composition 8)

A composition 12 (80 parts by mass) as composition C and a composition 7 (120 parts by mass) as composition F were dry-blended to prepare a dry-blend composition 8.

The values of other physical properties of the dry-blend composition 8 are shown in [Table 5] below.

(Dry-blend composition 9)

A thermoplastic elastomer 2 (100 parts by mass) and a composition 8 (250 parts by mass) as composition F were dry-blended to prepare a dry-blend composition 9.

The values of other physical properties of the dry-blend composition 9 are shown in [Table 5] below.

In Table 5, the values of physical properties were calculated with the thermoplastic elastomer regarded as composition C for easy comparison with the other dry-blend compositions. For example, the average particle mass of the thermoplastic elastomer 2 was used as Wc for the calculation.

(Dry-blend composition 10)

A composition 5 (100 parts by mass) as composition C and a composition 8 (100 parts by mass) as composition F were dry-blended to prepare a dry-blend composition 10.

The values of other physical properties of the dry-blend composition 10 are shown in [Table 5] below.

(Dry-blend composition 11)

A thermoplastic elastomer 1 (100 parts by mass) and a composition 6 (250 parts by mass) as composition F were dry-blended to prepare a dry-blend composition 11.

The values of other physical properties of the dry-blend composition 11 are shown in [Table 6] below.

(Dry-blend composition 12)

A thermoplastic elastomer 1 (100 parts by mass) and a composition 7 (250 parts by mass) as composition F were dry-blended to prepare a dry-blend composition 12.

The values of other physical properties of the dry-blend composition 12 are shown in [Table 6] below.

(Dry-blend composition 13)

A thermoplastic elastomer 1 (100 parts by mass) and a composition 8 (250 parts by mass) as composition F were dry-blended to prepare a dry-blend composition 13.

The values of other physical properties of the dry-blend composition 13 are shown in [Table 6] below.

(Dry-blend composition 14)

A thermoplastic elastomer 1 (100 parts by mass) and a composition 9 (250 parts by mass) as composition F were dry-blended to prepare a dry-blend composition 14.

The values of other physical properties of the dry-blend composition 14 are shown in [Table 6] below.

(Dry-blend composition 15)

A thermoplastic elastomer 2 (100 parts by mass) and a composition 7 (250 parts by mass) as composition F were dry-blended to prepare a dry-blend composition 15.

The values of other physical properties of the dry-blend composition 15 are shown in [Table 6] below.

(Dry-blend composition 16)

A thermoplastic elastomer 2 (100 parts by mass) and a composition 11 (250 parts by mass) as composition F were dry-blended to prepare a dry-blend composition 16.

The values of other physical properties of the dry-blend composition 16 are shown in [Table 6] below.

(Dry-blend composition 17)

A composition 13 (133 parts by mass) as composition C and a composition 6 (67 parts by mass) as composition F were dry-blended to prepare a dry-blend composition 17.

The values of other physical properties of the dry-blend composition 17 are shown in [Table 6] below.

[Production of three-layer film]

[Examples 3-1 to -10 and Comparative Examples 3-1 to -7]

(Three-layer film 1)

A dry-blend composition 1 as a pressure-sensitive adhesive layer, polypropylene (manufactured by SunAllomer Ltd., trade name "PC684S", MFR (230°C, a 2.16 kg weight) = 7.5 g/10 min) as a base material layer, and low-density polyethylene (manufactured by Asahi Kasei Corp., trade name "SUNTEC L2340", MFR (190°C, a 2.16 kg weight) = 3.8 g/10 min)) as a heat-sealing layer were used, and these layers were integrated and coextruded by using the coextrusion method in a T-die system such that the pressure-sensitive adhesive layer was the middle layer among the three layers to prepare a three-layer film 1.

The set temperature of the extruder was 210°C for the polypropylene layer, 170°C for the low-density polyethylene layer, and 130°C for the pressure-sensitive adhesive layer.

The values of other physical properties of the three-layer film 1 are shown in [Table 7] below.

(Three-layer film 2)

A three-layer film 2 was obtained in the same manner as in the three-layer film 1 except that a dry-blend composition 2 was used as a material for the pressure-sensitive adhesive layer.

The values of other physical properties of the three-layer film 2 are shown in [Table 7] below.

(Three-layer film 3)

A three-layer film 3 was obtained in the same manner as in the three-layer film 1 except that a dry-blend composition 3 was used as a material for the pressure-sensitive adhesive layer.

The values of other physical properties of the three-layer film 3 are shown in [Table 7] below.

(Three-layer film 4)

A three-layer film 4 was obtained in the same manner as in the three-layer film 1 except that a dry-blend composition 4 was used as a material for the pressure-sensitive adhesive layer.

The values of other physical properties of the three-layer film 4 are shown in [Table 7] below.

(Three-layer film 5)

A three-layer film 5 was obtained in the same manner as in the three-layer film 1 except that a dry-blend composition 5 was used as a material for the pressure-sensitive adhesive layer.

The values of other physical properties of the three-layer film 5 are shown in [Table 7] below.

(Three-layer film 6)

A three-layer film 6 was obtained in the same manner as in the three-layer film 1 except that a dry-blend composition 6 was used as a material for the pressure-sensitive adhesive layer.

The values of other physical properties of the three-layer film 6 are shown in [Table 7] below.

(Three-layer film 7)

A three-layer film 7 was obtained in the same manner as in the three-layer film 1 except that a dry-blend composition 7 was used as a material for the pressure-sensitive adhesive layer.
The values of other physical properties of the three-layer film 7 are shown in [Table 7] below.

(Three-layer film 8)

A three-layer film 8 was obtained in the same manner as in the three-layer film 1 except that a dry-blend composition 8 was used as a material for the pressure-sensitive adhesive layer.
The values of other physical properties of the three-layer film 8 are shown in [Table 7] below.

(Three-layer film 9)

A three-layer film 9 was obtained in the same manner as in the three-layer film 1 except that a dry-blend composition 9 was used as a material for the pressure-sensitive adhesive layer.
The values of other physical properties of the three-layer film 9 are shown in [Table 7] below.

(Three-layer film 10)

A three-layer film 10 was obtained in the same manner as in the three-layer film 1 except that a dry-blend composition 10 was used as a material for the pressure-sensitive adhesive layer.
The values of other physical properties of the three-layer film 10 are shown in [Table 7] below.

(Three-layer film 11)

A three-layer film 11 was obtained in the same manner as in the three-layer film 1 except that a dry-blend composition 11 was used as a material for the pressure-sensitive adhesive layer.
The values of other physical properties of the three-layer film 11 are shown in [Table 8] below.

(Three-layer film 12)

A three-layer film 12 was obtained in the same manner as in the three-layer film 1 except that a dry-blend composition 12 was used as a material for the pressure-sensitive adhesive layer.
The values of other physical properties of the three-layer film 12 are shown in [Table 8] below.

(Three-layer film 13)

A three-layer film 13 was obtained in the same manner as in the three-layer film 1 except that a dry-blend composition 13 was used as a material for the pressure-sensitive adhesive layer.
The values of other physical properties of the three-layer film 13 are shown in [Table 8] below.

(Three-layer film 14)

A three-layer film 14 was obtained in the same manner as in the three-layer film 1 except that a dry-blend composition 14 was used as a material for the pressure-sensitive adhesive layer.
The values of other physical properties of the three-layer film 14 are shown in [Table 8] below.

(Three-layer film 15)

A three-layer film 15 was obtained in the same manner as in the three-layer film 1 except that a dry-blend composition 15 was used as a material for the pressure-sensitive adhesive layer.
The values of other physical properties of the three-layer film 15 are shown in [Table 8] below.

(Three-layer film 16)

A three-layer film 16 was obtained in the same manner as in the three-layer film 1 except that a dry-blend composition 16 was used as a material for the pressure-sensitive adhesive layer.

The values of other physical properties of the three-layer film 16 are shown in [Table 8] below.

(Three-layer film 17)

The same operation as in the three-layer film 1 was attempted except that a dry-blend composition 17 was used as a material for the pressure-sensitive adhesive layer. However, blocking occurred due to high adhesive strength of a composition 13 so that no film was able to be formed. Thus, a three-layer film 17 was not obtained.

[Examples 2-1 to 2-10] and [Comparative Examples 2-1 to 2-7]

(Dry-blend composition)

The makeups, physical properties values and characteristics value of dry-blend compositions prepared as mentioned above are shown in [Table 5] and [Table 6] below.

[Table 5]

| | | Example | | | | | | | | | |
|---|---|---|---|---|---|---|---|---|---|---|---|
| | | 2-1 | 2-2 | 2-3* | 2-4 | 2-5 | 2-6 | 2-7 | 2-8* | 2-9 | 2-10 |
| Dry-blend composition (material for pressure-sensitive adhesive) | | 1 | 2 | 3 | 4 | 5 | 6 | 7 | 8 | 9 | 10 |
| Composition C | Content of composition 1 (parts by mass) | 100 | 0 | 0 | 100 | 0 | 0 | 100 | 0 | 0 | 0 |
| | Content of composition 2 (parts by mass) | 0 | 100 | 0 | 0 | 0 | 0 | 0 | 0 | 0 | 0 |
| | Content of composition 3 (parts by mass) | 0 | 0 | 100 | 0 | 0 | 0 | 0 | 0 | 0 | 0 |
| | Content of composition 4 (parts by mass) | 0 | 0 | 0 | 0 | 100 | 0 | 0 | 0 | 0 | 0 |
| | Content of composition 5 (parts by mass) | 0 | 0 | 0 | 0 | 0 | 100 | 0 | 0 | 0 | 100 |
| | Content of composition 12 (parts by mass) | 0 | 0 | 0 | 0 | 0 | 0 | 0 | 80 | 0 | 0 |
| | Content of composition 13 (parts by mass) | 0 | 0 | 0 | 0 | 0 | 0 | 0 | 0 | 0 | 0 |

(continued)

| | | Example | | | | | | | | | |
|---|---|---|---|---|---|---|---|---|---|---|---|
| | | 2-1 | 2-2 | 2-3* | 2-4 | 2-5 | 2-6 | 2-7 | 2-8* | 2-9 | 2-10 |
| | Content of thermoplastic elastomer 1 (parts by mass) | 0 | 0 | 0 | 0 | 0 | 0 | 0 | 0 | 0 | 0 |
| | Content of thermoplastic elastomer 2 (parts by mass) | 0 | 0 | 0 | 0 | 0 | 0 | 0 | 0 | 100 | 0 |
| Composition F | Content of composition 6 (parts by mass) | 100 | 0 | 0 | 0 | 0 | 0 | 0 | 0 | 0 | 0 |
| | Content of composition 7 (parts by mass) | 0 | 100 | 0 | 100 | 0 | 0 | 0 | 120 | 0 | 0 |
| | Content of composition 8 (parts by mass) | 0 | 0 | 100 | 0 | 0 | 0 | 0 | 0 | 250 | 100 |
| | Content of composition 9 (parts by mass) | 0 | 0 | 0 | 0 | 100 | 0 | 0 | 0 | 0 | 0 |
| | Content of composition 10 (parts by mass) | 0 | 0 | 0 | 0 | 0 | 100 | 100 | 0 | 0 | 0 |
| | Content of composition 11 (parts by mass) | 0 | 0 | 0 | 0 | 0 | 0 | 0 | 0 | 0 | 0 |
| Ratio of average particle mass Wc of composition C to average particle mass Wf of composition F (Wc/Wf) | | 0.46 | 0.47 | 0.44 | 0.46 | 0.45 | 0.48 | 0.48 | 0.46 | 0.59 | 0.45 |
| Ratio of average particle major axis Lc of composition C to average particle major axis Lf of composition F (Lc/Lf) | | 0.79 | 0.79 | 0.77 | 0.79 | 0.78 | 0.80 | 0.79 | 0.78 | 0.90 | 0.78 |
| Ratio of average particle minor axis Ic of composition C to average particle minor axis If of composition F (Ic/If) | | 0.79 | 0.82 | 0.78 | 0.80 | 0.78 | 0.84 | 0.83 | 0.79 | 0.76 | 0.80 |

(continued)

| | Example | | | | | | | | | |
|---|---|---|---|---|---|---|---|---|---|---|
| | 2-1 | 2-2 | 2-3* | 2-4 | 2-5 | 2-6 | 2-7 | 2-8* | 2-9 | 2-10 |
| Ratio of amount of composition C to be blended to amount of composition F to be blended (blending mass ratio) (amount of composition C to be blended/amount of composition F to be blended) | 1.00 | 1.00 | 1.00 | 1.00 | 1.00 | 1.00 | 1.00 | 0.67 | 0.40 | 1.00 |
| Percentage of total mass of thermoplastic elastomer(s) in material for pressure-sensitive adhesive (mass of thermoplastic elastomer(s) / total mass $\times$ 100) (%) | 50 | 50 | 50 | 50 | 50 | 50 | 50 | 50 | 50 | 50 |
| Percentage of total mass of tackifier(s) in material for pressure-sensitive adhesive (mass of tackifier(s) / total mass $\times$ 100) (%) | 50 | 50 | 50 | 50 | 50 | 50 | 50 | 50 | 50 | 50 |
| Adhesive strength (N/10mm) | 8.2 | 8.4 | 8.0 | 8.7 | 6.8 | 6.5 | 7.1 | 8.1 | 6.7 | 6.7 |
| Tack (N/5mm$\varphi$) | 1.0 | 0.9 | 0.1 | 1.0 | 0.1 | 0.5 | 0.5 | 1.0 | 0.2 | 0.1 |
| * reference example | | | | | | | | | | |

[Table 6]

| | | Comparative Example | | | | | | |
|---|---|---|---|---|---|---|---|---|
| | | 2-1 | 2-2 | 2-3 | 2-4 | 2-5 | 2-6 | 2-7 |
| Dry-blend composition (material for pressure-sensitive adhesive) | | 11 | 12 | 13 | 14 | 15 | 16 | 17 |
| Composition C | Content of composition 1 (parts by mass) | 0 | 0 | 0 | 0 | 0 | 0 | 0 |
| | Content of composition 2 (parts by mass) | 0 | 0 | 0 | 0 | 0 | 0 | 0 |
| | Content of composition 3 (parts by mass) | 0 | 0 | 0 | 0 | 0 | 0 | 0 |
| | Content of composition 4 (parts by mass) | 0 | 0 | 0 | 0 | 0 | 0 | 0 |
| | Content of composition 5 (parts by mass) | 0 | 0 | 0 | 0 | 0 | 0 | 0 |
| | Content of composition 12 (parts by mass) | 0 | 0 | 0 | 0 | 0 | 0 | 0 |
| | Content of composition 13 (parts by mass) | 0 | 0 | 0 | 0 | 0 | 0 | 133 |
| | Content of thermoplastic elastomer 1 (parts by mass) | 100 | 100 | 100 | 100 | 0 | 0 | 0 |
| | Content of thermoplastic elastomer 2 (parts by mass) | 0 | 0 | 0 | 0 | 100 | 100 | 0 |

(continued)

| | | Comparative Example | | | | | | |
|---|---|---|---|---|---|---|---|---|
| | | 2-1 | 2-2 | 2-3 | 2-4 | 2-5 | 2-6 | 2-7 |
| Composition F | Content of composition 6 (parts by mass) | 250 | 0 | 0 | 0 | 0 | 0 | 67 |
| | Content of composition 7 (parts by mass) | 0 | 250 | 0 | 0 | 250 | 0 | 0 |
| | Content of composition 8 (parts by mass) | 0 | 0 | 250 | 0 | 0 | 0 | 0 |
| | Content of composition 9 (parts by mass) | 0 | 0 | 0 | 250 | 0 | 0 | 0 |
| | Content of composition 10 (parts by mass) | 0 | 0 | 0 | 0 | 0 | 0 | 0 |
| | Content of composition 11 (parts by mass) | 0 | 0 | 0 | 0 | 0 | 250 | 0 |
| Ratio of average particle mass Wc of composition C to average particle mass Wf of composition F (Wc/Wf) | | 0.62 | 0.62 | 0.60 | 0.61 | 0.60 | 0.63 | 0.47 |
| Ratio of average particle major axis Lc of composition C to average particle major axis Lf of composition F (Lc/Lf) | | 0.92 | 0.92 | 0.90 | 0.91 | 0.92 | 0.94 | 0.79 |
| Ratio of average particle minor axis Ic of composition C to average particle minor axis If of composition F (Ic/If) | | 0.76 | 0.77 | 0.76 | 0.77 | 0.76 | 0.80 | 0.81 |
| Ratio of amount of composition C to be blended to amount of composition F to be blended (blending mass ratio) (amount of composition C to be blended/amount of composition F to be blended) | | 0.40 | 0.40 | 0.40 | 0.40 | 0.40 | 0.40 | 1.99 |
| Percentage of total mass of thermoplastic elastomer(s) in material for pressure-sensitive adhesive (mass of thermoplastic elastomer(s) / total mass × 100) (%) | | 50 | 50 | 50 | 50 | 50 | 50 | 50 |
| Percentage of total mass of tackifier(s) in material for pressure-sensitive adhesive (mass of tackifier(s) / total mass × 100) (%) | | 50 | 50 | 50 | 50 | 50 | 50 | 50 |
| Adhesive strength (N/10mm) | | 8.2 | 8.3 | 8.0 | 6.8 | 6.4 | 6.6 | 8.1 |
| Tack (N/5mmφ) | | 1.0 | 0.8 | 0.1 | 0.1 | 0.1 | 0.1 | 1.0 |

[Examples 3-1 to 3-10] and [Comparative Examples 3-1 to 3-7] (Examples 3-3 and 3-8 are reference examples)

The configurations and characteristics value of three-layer films prepared as mentioned above are shown in [Table 7] and [Table 8] below.

[Table 7]

| | Example | | | | | | | | | |
|---|---|---|---|---|---|---|---|---|---|---|
| | 3-1 | 3-2 | 3-3* | 3-4 | 3-5 | 3-6 | 3-7 | 3-8* | 3-9 | 3-10 |
| Three-layer film | 1 | 2 | 3 | 4 | 5 | 6 | 7 | 8 | 9 | 10 |
| Dry-blend composition used in pressure-sensitive adhesive layer | 1 | 2 | 3 | 4 | 5 | 6 | 7 | 8 | 9 | 10 |
| Thickness of base material layer (μm) | 49 | 50 | 50 | 49 | 50 | 49 | 50 | 50 | 50 | 50 |

(continued)

| | Example | | | | | | | | | |
|---|---|---|---|---|---|---|---|---|---|---|
| | 3-1 | 3-2 | 3-3* | 3-4 | 3-5 | 3-6 | 3-7 | 3-8* | 3-9 | 3-10 |
| Thickness of pressure-sensitive adhesive layer (μm) | 35 | 35 | 35 | 35 | 35 | 36 | 36 | 35 | 35 | 35 |
| Thickness of heat-sealing layer (μm) | 8 | 8 | 8 | 8 | 8 | 8 | 8 | 8 | 8 | 8 |
| Total mass of thermoplastic elastomer(s) in pressure-sensitive adhesive (% by mass) | 50 | 50 | 50 | 50 | 50 | 50 | 50 | 50 | 50 | 50 |
| Total mass of tackifier(s) in pressure-sensitive adhesive (% by mass) | 50 | 50 | 50 | 50 | 50 | 50 | 50 | 50 | 50 | 50 |
| Ratio of MFR value of composition F to MFR value of composition C (MFR value of composition F / MFR value of composition C) | 45.4 | 57.9 | 65.7 | 38.4 | 79.1 | 18.0 | 47.8 | 78.6 | 100.0 | 10.1 |
| Odor | 0.4 | 0.4 | 2.9 | 0.3 | 0.4 | 0.4 | 0.4 | 0.5 | 2.6 | 2.6 |
| Initial peel strength (N/10mm) | 14.1 | 14.5 | 13.6 | 14.4 | 13.6 | 13.8 | 13.6 | 13.9 | 13.0 | 13.1 |
| Resealing peel strength (N/10mm) | 2.2 | 2.0 | 2.2 | 2.5 | 1.8 | 1.8 | 1.8 | 1.9 | 1.6 | 1.6 |
| Film appearance | ○ | ○ | ○ | ○ | ○ | ○ | ○ | △ | × | ○ |
| * reference example | | | | | | | | | | |

[Table 8]

| | Comparative Example | | | | | | |
|---|---|---|---|---|---|---|---|
| | 3-1 | 3-2 | 3-3 | 3-4 | 3-5 | 3-6 | 3-7 |
| Three-layer film | 11 | 12 | 13 | 14 | 15 | 16 | 17 |
| Dry-blend composition used in pressure-sensitive adhesive layer | 11 | 12 | 13 | 14 | 15 | 16 | 17 |
| Thickness of base material layer (μm) | 49 | 50 | 51 | 49 | 49 | 50 | - |
| Thickness of pressure-sensitive adhesive layer (μm) | 36 | 35 | 35 | 36 | 35 | 35 | - |
| Thickness of heat-sealing layer (μm) | 8 | 8 | 8 | 8 | 8 | 8 | - |
| Total mass of thermoplastic elastomer(s) in pressure-sensitive adhesive (% by mass) | 50 | 50 | 50 | 50 | 50 | 50 | - |
| Total mass of tackifier(s) in pressure-sensitive adhesive (% by mass) | 50 | 50 | 50 | 50 | 50 | 50 | - |
| Ratio of MFR value of composition F to MFR value of composition C (MFR value of composition F / MFR value of composition C) | 650.2 | 550.2 | 383.3 | 500.7 | 143.5 | 143.7 | 4.7 |
| Odor | 0.4 | 0.4 | 2.7 | 0.5 | 0.4 | 2.7 | - |
| Initial peel strength (N/10mm) | 13.6 | 13.8 | 13.5 | 13.6 | 13.8 | 13.0 | - |
| Resealing peel strength (N/10mm) | 1.8 | 1.9 | 2.0 | 1.8 | 1.7 | 1.5 | - |

(continued)

| | Comparative Example | | | | | | |
|---|---|---|---|---|---|---|---|
| | 3-1 | 3-2 | 3-3 | 3-4 | 3-5 | 3-6 | 3-7 |
| Film appearance | × | × | × | × | × | × | - |

From the comparison of the results of Examples 3-1 to 3-7 with the results of Comparative Examples 3-1 to 3-6, it was found that use of the compositions of Production Examples 1-1 to 1-5 (compositions 1 to 5) drastically improved the appearance of an extruded film as compared with use of compositions having a single substance of a thermoplastic elastomer or too high a proportion of a thermoplastic elastomer. The tendency to improve resealing peel strength was also found. 130°C, which is an extrusion condition for the pressure-sensitive adhesive layers used in Examples, is lower than general extrusion temperatures and is a strict condition that renders mixing difficult. In Comparative Examples 3-1 to 3-6 of conventional techniques, it was considered that particles were not sufficiently mixed because the ratio between the MFR values of two particles fell outside an appropriate range. On the other hand, particles contained in each dry-blend composition serving as the material for a pressure-sensitive adhesive of the present invention were able to be mixed more easily because the ratio between the MFR values of two particles fell within an appropriate range. As a result, a more homogeneous composition as a whole having an expected mixing ratio was obtained without deterioration in appearance ascribable to foreign matter derived from uneven mixing. As a result, resealing peel strength was also improved.

From these results, the miscibility of particles contained in each dry-blend composition serving as the material for a pressure-sensitive adhesive of the present invention is essentially improved. These particles can be sufficiently kneaded even if an extruder having a lower kneading power is used, for example. The kneading power of an extruder differs largely depending on an apparatus to be used, the type of a screw, etc. Therefore, improved miscibility permits use in many apparatuses. Hence, the material for a pressure-sensitive adhesive of the present invention having high miscibility has high industrial usefulness. An extrusion condition, such as 150°C to 230°C, which facilitates improving kneadability, as compared with the extrusion condition of 130°C is considered to permit sufficient mixing in a shorter time than that for conventional techniques, leads to improvement in throughput, and is highly useful.

From the comparison of the results of Production Examples 1-1, 1-2, 1-4, 1-5, 1-6, 1-7, 1-9, 1-10, 1-12 and 1-13 with the results of Production Examples 1-3, 1-8 and 1-11, it was found that use of the compositions of Production Examples 1-1, 1-2, 1-4, 1-5, 1-6, 1-7, 1-9, 1-10, 1-12 and 1-13 improved appearance and odor as compared with use of tackifiers other than hydrogenation products of a hydrocarbon resin and/or derivatives thereof.

From the comparison of the results of Examples 3-1, 3-2 and 3-4 with the results of Examples 3-3, 3-5, 3-9 and 3-10 and Comparative Examples 3-3, 3-4 and 3-6, it was found that use of the compositions of Production Examples 1-1, 1-2, 1-4, 1-5, 1-6, 1-7, 1-9 and 1-10 improved the odor of an extruded film and tended to also improve resealing peel strength, as compared with use of tackifiers having a softening point higher than 130°C or tackifiers other than hydrogenation products of a hydrocarbon resin and/or derivatives thereof.

In the composition 13 of Production Example 1-13, particles stuck easily to each other due to too strong adhesive strength and tackiness, and blocking occurred.

The dry-blend composition 17 of Comparative Example 2-7 using the composition 13 also caused blocking. Although film formation was attempted by deblocking, the particles reattached to each other within a hopper of an extruder and fell into a state that rendered feeding impossible, and thus failed to form a film. It was thus found that the proportion of a thermoplastic elastomer defined by the present invention is less likely to cause blocking and permits easy handling.

The composition for a pressure-sensitive adhesive of the present invention has industrial applicability as a material for adhesive layers in packaging units for cosmetics or sanitary products repetitively openable and resealable for use, and packaging materials for food or medicaments in too large amounts to consume at once, for example.

**Claims**

1. A material for a pressure-sensitive adhesive, the material being to be used in a pressure-sensitive adhesive included in a multilayered film for resealing packaging, and comprising

   composition C in a particulate form including at least one type of thermoplastic elastomer A, wherein the thermoplastic elastomer A is a block copolymer comprising a polymer block (A) primarily comprising a vinyl aromatic monomer unit which is at least one selected from the group consisting of styrene, $\alpha$-methylstyrene, p-methylstyrene, p-tert-butyl-styrene, p-methoxystyrene and vinylnaphthalene, and a polymer block (B) primarily comprising a conjugated diene monomer unit which is at least one selected from the group consisting of 1,3-butadiene, 2-methyl-1,3-butadiene, 2,3-dimethyl-1,3-butadiene, 1,3-pentadiene and 1,3-hexadiene, and

composition F in a particulate form including at least one type of thermoplastic elastomer D and at least one type of tackifier E which are integrated, wherein the thermoplastic elastomer D is a block copolymer comprising a polymer block (A) primarily comprising a vinyl aromatic monomer unit which is at least one selected from the group consisting of styrene, α-methylstyrene, p-methylstyrene, p-tert-butyl-styrene, p-methoxystyrene and vinylnaphthalene, and a polymer block (B) primarily comprising a conjugated diene monomer unit which is at least one selected from the group consisting of 1,3-butadiene, 2-methyl-1,3-butadiene, 2,3-dimethyl-1,3-butadiene, 1,3-pentadiene and 1,3-hexadiene, wherein

the composition F satisfies the following condition (2),

an adhesive strength, measured as described in "<(2-1) : Method for measuring adhesive strength" in the description, of the material for a pressure-sensitive adhesive having ratio x is

larger than that of the composition C having ratio α and

larger than that of the composition F having ratio β, wherein

x represents a mass ratio of the total amount of the thermoplastic elastomer(s) to the total amount of the thermoplastic elastomer(s) and the tackifier(s) (thermoplastic elastomer(s) / thermoplastic elastomer(s) + tackifier(s)) in the material for a pressure-sensitive adhesive;

α represents a mass ratio of the total amount of the thermoplastic elastomer(s) to the total amount of the thermoplastic elastomer(s) and the tackifier(s) (thermoplastic elastomer(s) / thermoplastic elastomer(s) + tackifier(s)) in the composition C; and

β represents a mass ratio of the total amount of the thermoplastic elastomer(s) to the total amount of the thermoplastic elastomer(s) and the tackifier(s) (thermoplastic elastomer(s) / thermoplastic elastomer(s) + tackifier(s)) in the composition F, and

the material for a pressure-sensitive adhesive satisfies the following expression (1) and condition (13) :

$$\beta < x < \alpha \quad (1)$$

<condition (2)>

a ratio of the total mass of the tackifier(s) to the total mass of the thermoplastic elastomer(s) in the composition F is more than 1.5 and 3.0 or less <condition (13)>

a ratio of the MFR value of the composition F to the MFR value of the composition C is 10 or more and 80 or less, the MFR value being measured as described in "<(1-8): Melt flow rate (MFR)>" in the description,

wherein the composition C further comprises a tackifier B, and

wherein the composition C satisfies the following condition (1):

<condition (1)>

a ratio of the total mass of the thermoplastic elastomer(s) to the total mass of the tackifier(s) in the composition C is more than 1.5 and 3.0 or less,

wherein the tackifier B is a hydrogenation product of an aromatic petroleum hydrocarbon resin and/or a derivative thereof.

2. The material for a pressure-sensitive adhesive according to claim 1, wherein
the tackifier E is a hydrogenation product of an aromatic petroleum hydrocarbon resin, and/or a derivative thereof.

3. The material for a pressure-sensitive adhesive according to claim 1, wherein
the tackifier E is a hydrogenation product of an aromatic modified alicyclic hydrocarbon resin, and/or a derivative thereof.

4. The material for a pressure-sensitive adhesive according to any one of claims 1 to 3, satisfying the following condition (5):
<condition (5)>
a ratio of average particle mass Wc of the composition C to average particle mass Wf of the composition F (Wc/Wf) is 0.4 or more and 2.5 or less.

5. The material for a pressure-sensitive adhesive according to any one of claims 1 to 4, satisfying the following condition (6):
<condition (6)>

a ratio of average particle major axis Lc of the composition C to average particle major axis Lf of the composition F (Lc/Lf) is 0.6 or more and 1.4 or less, and

a ratio of average particle minor axis lc of the composition C to average particle minor axis lf of the composition F (lc/lf) is 0.6 or more and 1.4 or less.

6. The material for a pressure-sensitive adhesive according to any one of claims 1 to 5, wherein a ratio of the amount of the composition C to be blended to the amount of the composition F to be blended (blending mass ratio; C/F) is 0.45 or more and 2.00 or less.

7. The material for a pressure-sensitive adhesive according to any one of claims 1 to 6,
wherein in the thermoplastic elastomer A, the percentage H of hydrogenation based on the total amount of the unsaturated double bonds derived from the conjugated diene compound in the polymer block (B) primarily comprising a conjugated diene monomer unit is 20% by mole or more and 80% by mole or less.

8. The material for a pressure-sensitive adhesive according to any one of claims 1 to 7,
wherein in the thermoplastic elastomer D, the percentage H of hydrogenation based on the total amount of the unsaturated double bonds derived from the conjugated diene compound in the polymer block (B) primarily comprising a conjugated diene monomer unit is 20% by mole or more and 80% by mole or less.

9. A pressure-sensitive adhesive comprising the material for a pressure-sensitive adhesive according to any one of claims 1 to 8.

10. A multilayer film comprising the pressure-sensitive adhesive according to claim 9.

11. Use of the multilayer film according to claim 10 for resealing packaging.

12. A package comprising the multilayer film according to claim 10.


**Patentansprüche**

1. Material für einen Haftklebstoff, wobei das Material in einem Haftklebstoff zu verwenden ist, der in einer mehrschichtigen Folie zum wiederverschließbaren Verpacken enthalten ist, und welches umfasst:

Zusammensetzung C in teilchenförmiger Form, die mindestens eine Art von thermoplastischem Elastomer A enthält, wobei das thermoplastische Elastomer A ein Blockcopolymer ist, welches einen Polymerblock (A), der hauptsächlich eine vinylaromatische Monomereinheit umfasst, die mindestens eine ist, ausgewählt aus der Gruppe bestehend aus Styrol, α-Methylstyrol, p-Methylstyrol, p-tert-Butylstyrol, p-Methoxystyrol und Vinylnaphthalin, und einen Polymerblock (B) umfasst, der hauptsächlich eine konjugierte Dienmonomereinheit umfasst, die mindestens eine ist, ausgewählt aus der Gruppe bestehend aus 1,3-Butadien, 2-Methyl-1,3-butadien, 2,3-Dimethyl-1,3-butadien, 1,3-Pentadien und 1,3-Hexadien, und
Zusammensetzung F in teilchenförmiger Form, die mindestens eine Art von thermoplastischem Elastomer D und mindestens eine Art von Klebrigmacher E, die integriert sind, enthält, wobei das thermoplastische Elastomer D ein Blockcopolymer ist, das einen Polymerblock (A), der hauptsächlich eine vinylaromatische Monomereinheit umfasst, die mindestens eine ist, ausgewählt aus der Gruppe bestehend aus Styrol, α-Methylstyrol, p-Methylstyrol, p-tert-Butylstyrol, p-Methoxystyrol und Vinylnaphthalin, und einen Polymerblock (B) umfasst, der hauptsächlich eine konjugierte Dienmonomereinheit umfasst, die mindestens eine ist, ausgewählt aus der Gruppe bestehend aus 1,3-Butadien, 2-Methyl-1,3-butadien, 2,3-Dimethyl-1,3-butadien, 1,3-Pentadien und 1,3-Hexadien,
wobei die Zusammensetzung F die untenstehende Bedingung (2) erfüllt,
eine Haftfestigkeit, gemessen wie in "<(2-1): Methode zur Messung der Haftfestigkeit>" in der Beschreibung beschrieben, des Materials für einen Haftklebstoff, der ein Verhältnis x aufweist,
größer ist als die der Zusammensetzung C, welche ein Verhältnis α aufweist, und
größer ist als die der Zusammensetzung F, welche ein Verhältnis β aufweist, wobei
x das Massenverhältnis der Gesamtmenge des/der thermoplastischen Elastomers/e zu der Gesamtmenge des/der thermoplastischen Elastomers/e und des/der Klebrigmacher(s) (thermoplastische(s) Elastomer(e) / (thermoplastische(s) Elastomer(e) + Klebrigmacher)) in dem Material für einen Haftklebstoff darstellt;
α das Massenverhältnis der Gesamtmenge des/der thermoplastischen Elastomers/e zu der Gesamtmenge des/der thermoplastischen Elastomers/e und des/der Klebrigmacher(s) (thermoplastische(s) Elastomer(e) / (thermoplastische(s) Elastomer(e) + Klebrigmacher)) in der Zusammensetzung C darstellt; und

β das Massenverhältnis der Gesamtmenge des/der thermoplastischen Elastomers/e zu der Gesamtmenge des/der thermoplastischen Elastomers/e und des/der Klebrigmacher(s) (thermoplastische(s) Elastomer(e) / (thermoplastische(s) Elastomer(e) + Klebrigmacher)) in der Zusammensetzung F darstellt, und
das Material für einen Haftklebstoff den folgenden Ausdruck (1) und die untenstehende Bedingung (13) erfüllt:

$$\beta < x < \alpha \qquad (1)$$

<Bedingung (2)>
das Verhältnis der Gesamtmasse des/der Klebrigmacher(s) zu der Gesamtmasse des/der thermoplastischen Elastomers/e in der Zusammensetzung F ist mehr als 1,5 und 3,0 oder weniger <Bedingung (13)>
das Verhältnis des MFR-Wertes der Zusammensetzung F zu dem MFR-Wert der Zusammensetzung C ist 10 oder mehr und 80 oder weniger, wobei der MFR-Wert wie in "<(1-8): Schmelzfließrate (MFR)>" in der Beschreibung beschrieben gemessen wird,
wobei die Zusammensetzung C weiterhin einen Klebrigmacher B enthält, und
wobei die Zusammensetzung C die folgende Bedingung (1) erfüllt:
<Bedingung (1)>
das Verhältnis der Gesamtmasse des/der thermoplastischen Elastomers/e zu der Gesamtmasse des/der Klebrigmacher(s) in der Zusammensetzung C beträgt mehr als 1,5 und 3,0 oder weniger,
wobei der Klebrigmacher B ein Hydrierungsprodukt eines aromatischen Erdölkohlenwasserstoffharzes und/oder ein Derivat davon ist.

2. Material für einen Haftklebstoff nach Anspruch 1, wobei
der Klebrigmacher E ein Hydrierungsprodukt eines aromatischen Erdölkohlenwasserstoffharzes und/oder ein Derivat davon ist.

3. Material für einen Haftklebstoff nach Anspruch 1, wobei der Klebrigmacher E ein Hydrierungsprodukt eines aromatischen modifizierten alicyclischen Kohlenwasserstoffharzes und/oder ein Derivat davon ist.

4. Material für einen Haftklebstoff nach einem der Ansprüche 1 bis 3, welches die folgende Bedingung (5) erfüllt:
<Bedingung (5)>
das Verhältnis der mittleren Teilchenmasse Wc der Zusammensetzung C zu der mittleren Teilchenmasse Wf der Zusammensetzung F (Wc/Wf) beträgt 0,4 oder mehr und 2,5 oder weniger.

5. Material für einen Haftklebstoff nach einem der Ansprüche 1 bis 4, welches die folgende Bedingung (6) erfüllt:
<Bedingung (6)>

das Verhältnis der mittleren Teilchenhauptachse Lc der Zusammensetzung C zu der mittleren Teilchenhauptachse Lf der Zusammensetzung F (Lc/Lf) beträgt 0,6 oder mehr und 1,4 oder weniger beträgt, und
das Verhältnis der mittleren Teilchennebenachse Ic der Zusammensetzung C zu der mittleren Teilchennebenachse If der Zusammensetzung F (Ic/If) beträgt 0,6 oder mehr und 1,4 oder weniger.

6. Material für einen Haftklebstoff nach einem der Ansprüche 1 bis 5, wobei das Verhältnis der zu mischenden Menge der Zusammensetzung C zu der zu mischenden Menge der Zusammensetzung F (Mischungsmassenverhältnis; C/F) 0,45 oder mehr und 2,00 oder weniger beträgt.

7. Material für einen Haftklebstoff nach einem der Ansprüche 1 bis 6,
wobei in dem thermoplastischen Elastomer A der Hydrierungsprozentsatz H, bezogen auf die Gesamtmenge der von der konjugierten Dienverbindung abgeleiteten ungesättigten Doppelbindungen in dem Polymerblock (B), der hauptsächlich eine konjugierte Dienmonomereinheit umfasst, 20 Mol-% oder mehr und 80 Mol-% oder weniger beträgt.

8. Material für einen Haftklebstoff nach einem der Ansprüche 1 bis 7,
wobei in dem thermoplastischen Elastomer D der Hydrierungsprozentsatz H, bezogen auf die Gesamtmenge der von der konjugierten Dienverbindung abgeleiteten ungesättigten Doppelbindungen in dem Polymerblock (B), der hauptsächlich eine konjugierte Dienmonomereinheit umfasst, 20 Mol-% oder mehr und 80 Mol-% oder weniger beträgt.

9. Haftklebstoff, umfassend das Material für einen Haftklebstoff nach einem der Ansprüche 1 bis 8.

**10.** Mehrschichtige Folie, umfassend den Haftklebstoff nach Anspruch 9.

**11.** Verwendung der mehrschichtigen Folie nach Anspruch 10 zum wiederverschließenden Verpacken.

**12.** Verpackung, umfassend die mehrschichtige Folie nach Anspruch 10.


**Revendications**

**1.** Matériau pour un adhésif sensible à la pression, le matériau étant destiné à être utilisé dans un adhésif sensible à la pression inclus dans un film multicouche pour resceller un emballage, et comprenant

une composition C sous forme de particules comportant au moins un type d'élastomère thermoplastique A, dans lequel l'élastomère thermoplastique A est un copolymère séquencé comprenant une séquence de polymère (A) comprenant principalement un motif monomère vinylaromatique qui est au moins l'un choisi dans le groupe constitué de styrène, $\alpha$-méthylstyrène, p-méthylstyrène, p-tert-butyl-styrène, p-méthoxystyrène et vinylnaphtalène, et une séquence de polymère (B) comprenant principalement un motif monomère diène conjugué qui est au moins l'un choisi dans le groupe constitué de 1,3-butadiène, 2-méthyl-1,3-butadiène, 2,3-diméthyl-1,3-butadiène, 1,3-pentadiène et 1,3-hexadiène, et
une composition F sous forme de particules comportant au moins un type d'élastomère thermoplastique D et au moins un type d'agent poisseux E qui sont intégrés, dans lequel l'élastomère thermoplastique D est un copolymère séquencé comprenant une séquence de polymère (A) comprenant principalement un motif monomère vinylaromatique qui est au moins l'un choisi dans le groupe constitué de styrène, $\alpha$-méthylstyrène, p-méthylstyrène, p-tert-butyl-styrène, p-méthoxystyrène et vinylnaphtalène, et une séquence de polymère (B) comprenant principalement un motif monomère de diène conjugué qui est au moins l'un choisi dans le groupe constitué de 1,3-butadiène, 2-méthyl-1,3-butadiène, 2,3-diméthyl-1,3-butadiène, 1,3-pentadiène et 1,3-hexadiène, dans lequel
la composition F satisfait à la condition (2) suivante,
une force d'adhésion, mesurée comme décrit dans « <(2-1) : Procédé de mesure de force d'adhésif » dans la description, du matériel pour un adhésif sensible à la pression ayant un rapport x est
plus grande que celle de la composition C ayant un rapport $\alpha$ et
plus grande que celle de la composition F ayant un rapport $\beta$, dans lequel
x représente un rapport de masse entre la quantité totale du ou des élastomères thermoplastiques et la quantité totale du ou des élastomères thermoplastiques et du ou des agents poisseux (élastomère(s) thermoplastique(s) / élastomère(s) thermoplastique(s) + agent(s) poisseux) dans le matériel pour un adhésif sensible à la pression ;
$\alpha$ représente un rapport de masse entre la quantité totale du ou des élastomères thermoplastiques et la quantité totale du ou des élastomères thermoplastiques et du ou des agents poisseux (élastomère(s) thermoplastique(s) / élastomère(s) thermoplastique(s) + agent(s) poisseux) dans la composition C ; et
$\beta$ représente un rapport de masse entre la quantité totale du ou des élastomères thermoplastiques et la quantité totale du ou des élastomères thermoplastiques et du ou des agents poisseux (élastomère(s) thermoplastique(s) / élastomère(s) thermoplastique(s) + agent(s) poisseux) dans la composition F, et
le matériau pour un adhésif sensible à la pression satisfait à l'expression (1) et à la condition (13) suivantes :

$$\beta < x < \alpha \ (1)$$

<condition (2)>
un rapport entre la masse totale du ou des agents poisseux et la masse totale du ou des élastomères thermoplastiques dans la composition F est supérieur à 1,5 et inférieur ou égal à 3,0
<condition (13)>
un rapport entre la valeur MFR de la composition F et la valeur MFR de la composition C est supérieur ou égal à 10 et inférieur ou égal à 80, la valeur MFR étant mesurée comme décrit dans « <(1-8) : Indice de fluidité à l'état fondu (MFR) > » dans la description,
dans lequel la composition C comprend en outre un agent poisseux B, et
dans lequel la composition C satisfait à la condition (1) suivante :
<condition (1)>
un rapport entre la masse totale du ou des élastomères thermoplastiques et la masse totale du ou des agents poisseux dans la composition C est supérieur à 1,5 et inférieur ou égal à 3,0,

dans lequel l'agent poisseux B est un produit d'hydrogénation d'une résine d'hydrocarbure pétrolier aromatique et/ou d'un dérivé de celle-ci.

2. Matériau pour un adhésif sensible à la pression selon la revendication 1, dans lequel l'agent poisseux E est un produit d'hydrogénation d'une résine d'hydrocarbure pétrolier aromatique et/ou d'un dérivé de celle-ci.

3. Matériau pour un adhésif sensible à la pression selon la revendication 1, dans lequel l'agent poisseux E est un produit d'hydrogénation d'une résine d'hydrocarbure alicyclique modifiée aromatique et/ou d'un dérivé de celle-ci.

4. Matériau pour un adhésif sensible à la pression selon l'une quelconque des revendications 1 à 3, satisfaisant à la condition (5) suivante :
<condition (5)>
un rapport entre la masse moyenne de particules Wc de la composition C et la masse moyenne de particules Wf de la composition F (Wc/Wf) est supérieur ou égal à 0,4 et inférieur ou égal à 2,5.

5. Matériau pour un adhésif sensible à la pression selon l'une quelconque des revendications 1 à 4, satisfaisant à la condition (6) suivante :
<condition (6)>

un rapport entre le grand axe moyen Lc des particules de la composition C et le grand axe moyen Lf des particules de la composition F (Lc/Lf) est supérieur ou égal à 0,6 et inférieur ou égal à 1,4, et
un rapport entre le petit axe moyen Ic des particules de la composition C et le petit axe moyen If des particules de la composition F (Ic/If) est supérieur ou égal à 0,6 et inférieur ou égal à 1,4.

6. Matériau pour un adhésif sensible à la pression selon l'une quelconque des revendications 1 à 5, dans lequel un rapport de la quantité de la composition C à mélanger à la quantité de la composition F à mélanger (rapport de masse de mélange ; C/F) est supérieur ou égal à 0,45 et inférieur ou égal à 2,00.

7. Matériau pour un adhésif sensible à la pression selon l'une quelconque des revendications 1 à 6, dans lequel dans l'élastomère thermoplastique A, le pourcentage H d'hydrogénation par rapport à la quantité totale des doubles liaisons insaturées dérivées du composé diène conjugué dans la séquence de polymère (B) comprenant principalement un motif monomère de diène conjugué est supérieur ou égal à 20 % en moles et inférieur ou égal à 80 % en moles.

8. Matériau pour un adhésif sensible à la pression selon l'une quelconque des revendications 1 à 7, dans lequel dans l'élastomère thermoplastique D, le pourcentage H d'hydrogénation par rapport à la quantité totale des doubles liaisons insaturées dérivées du composé diène conjugué dans la séquence de polymère (B) comprenant principalement un motif monomère de diène conjugué est supérieur ou égal à 20 % en moles et inférieur ou égal à 80 % en moles.

9. Adhésif sensible à la pression comprenant le matériau pour un adhésif sensible à la pression selon l'une quelconque des revendications 1 à 8.

10. Film multicouche comprenant l'adhésif sensible à la pression selon la revendication 9.

11. Utilisation du film multicouche selon la revendication 10 pour resceller un emballage.

12. Emballage comprenant le film multicouche selon la revendication 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015529715 A
- WO 2019031354 A
- JP H0711219 A
- JP 2007284464 A
- JP 3619286 B
- JP 4317979 B
- JP 46032415 A
- JP 49036975 A
- JP 48002423 A
- JP 48004106 A
- JP 56028925 A
- JP 59166518 A
- JP 60186577 A
- JP 428704 A
- JP 436636 A
- JP 63004841 A
- JP 1037970 A
- JP 1053851 A
- JP 2009041 A
- JP 8109219 A